(19) Europäisches Patentamt
European Patent Office
Office européen des brevets

(11) EP 0 657 989 B1

(12) # EUROPÄISCHE PATENTSCHRIFT

(45) Veröffentlichungstag und Bekanntmachung des Hinweises auf die Patenterteilung:
**07.04.1999 Patentblatt 1999/14**

(51) Int Cl.[6]: **H02P 6/14**, H02P 6/00, H02H 7/093

(21) Anmeldenummer: **94118283.4**

(22) Anmeldetag: **21.11.1994**

(54) **Verfahren zur Beeinflussung der Drehzahl eines kollektorlosen Gleichstrommotors, und kollektorloser Gleichstrommotor zu seiner Durchführung**

Method for controlling the speed of a collectorless DC motor and collectorless DC motor for performing the method

Méthode pour influencer la vitesse pour moteur à courant continu sans collecteur et moteur à courant continu sans collecteur pour sa mise en oeuvre

(84) Benannte Vertragsstaaten:
**AT CH DE FR GB IT LI**

(30) Priorität: **28.11.1993 DE 4340248**

(43) Veröffentlichungstag der Anmeldung:
**14.06.1995 Patentblatt 1995/24**

(60) Teilanmeldung: **98115220.0 / 0 887 914**
**98117631.6 / 0 895 345**

(73) Patentinhaber: **PAPST-MOTOREN GmbH & Co. KG**
**78106 St Georgen (DE)**

(72) Erfinder:
- **Jeske, Frank, Dipl.-Ing.**
  **D-78144 Tennenbronn (DE)**
- **Karwath, Arno, Dipl.-Ing.**
  **D-78628 Rottweil (DE)**
- **Rappenecker, Hermann, Dipl.-Ing.**
  **D-78147 Vöhrenbach (DE)**

(56) Entgegenhaltungen:
**EP-A- 0 084 156**
**DE-A- 3 342 986**
**DE-C- 3 710 509**
**GB-A- 2 247 999**
**EP-A- 0 425 479**
**DE-A- 4 132 881**
**GB-A- 2 092 780**
**US-A- 5 017 846**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 657 989 B1

Printed by Jouve, 75001 PARIS (FR)

## Beschreibung

Die Erfindung betrifft ein Verfahren zur Beeinflussung der Drehzahl eines kollektorlosen Gleichstrommotors, und einen kollektorlosen Gleichstrommotor zu seiner Durchführung.

Vielfach wird gewünscht, daß kollektorlosen Gleichstrommotoren ihre Drehzahl automatisch an bestimmte äußere Bedingungen anpassen. Ein Beispiel ist die Anpassung der Drehzahl an eine gemessene Temperatur, wenn der Motor einen Lüfter antreibt. Wird die Temperatur über einen Sensor gemessen, so kann der Fall auftreten, daß der Sensor schadhaft wird oder die Verbindung zu ihm unterbrochen wird, und dann ist es notwendig, daß der Motor automatisch eine höhere Drehzahl erhält, um z.B. Schäden durch mangelnde Kühlung zu vermeiden. Solche und ähnliche Forderungen müssen freilich mit sehr einfachen und preiswerten Mitteln erfüllt werden, d.h. teure, aufwendige Lösungen, die mit Sicherheit möglich wären, werden vom Markt nicht akzeptiert. Auch wird häufig die Forderung erhoben, daß solche Anordnungen im Inneren des Motors untergebracht werden müssen, was technisch schwierig zu realisieren ist.

Aus der EP 425 479 A2 ist es bekannt, bei einem kollektorlosen Gleichstrommotor für einen temperaturgeführten Lüfter mit abnehmender Temperatur die Endstufenschaltung eine längere Zeit abzuschalten und damit eine der Temperatur umgekehrt proportionale Einschaltverzögerung nach dem Kommutierungszeitpunkt zu bewirken.
Dieser Grundgedanke wird mit Vorteil auch bei der vorliegenden Erfindung angewendet. Zur Offenbarung wird hingewiesen auf Spalte 18, Zeilen 19 bis 33 dieser EP-A 2. (Dieser Gedanke ist zeitlich nach der EP 425 479 A2 sowohl vom DPA wie vom EPA erneut patentiert worden, vgl. z.B. die DE 37 83 931 T2, oder die DE 40 32 988 C2).

Aus der GB-A- 2 092 780 kennt man einen Drehzahlregler für einen elektronisch kommutierten Motor. Dieser Regler arbeitet mit einem Mikroprozessor 8748 der Firma Intel. Diesem Prozessor werden die Ausgangssignale von drei Hallsensoren zugeführt, ferner ein digitaler Wert für die gewünschte Drehzahl. Die tatsächliche Drehzahl wird gemessen, indem man mittels eines digitalen Zählers die Zeit für eine Umdrehung des Motors mißt.

Der Schaltzustand einer Dreiphasen-Vollbrükke wird dadurch gesteuert, daß der Prozessor abhängig von den Signalen der Hallsensoren aus einer gespeicherten Tabelle entnimmt und damit die sechs Transistoren der Vollbrücke öffnet oder schließt.

Aus den digitalen Werten für die tatsächliche Drehzahl und die gewünschte Drehzahl wird digital ein Differenzwert gebildet. Dieser Wert wird einer Kompensation unterzogen und dann in ein Analogsignal umgewandelt, mit dem die Stärke des Stromes gesteuert wird, der in den unteren Brückentransistoren der Vollbrücke fließt.

Eine solche Anordnung ist aufwendig, und durch die diversen Rechenoperationen hinkt sie immer der Realität hinterher, denn zuerst muß die Zeit für eine Umdrehung mit dem Zähler bestimmt werden. Dann muß man hiervon den Wert für die gewünschte Drehzahl abziehen, dann den erhaltenen digitalen Wert kompensieren, und ihn schließlich in einem D-A-Wandler in ein analoges Signal umwandeln. Die hierfür notwendigen Rechenschritte kosten Zeit und verringern die Ansprechgeschwindigkeit eines solchen Reglers.

Es ist deshalb eine Aufgabe der Erfindung, ein neues Verfahren zur Beeinflussung der Drehzahl eines kollektorlosen Gleichstrommotors, und einen solchen Motor zur Durchführung eines solchen Verfahrens, bereitzustellen.

Nach der Erfindung wird die gestellte Aufgabe gelöst durch ein Verfahren gemäß Anspruch 1.

Ein solches Verfahren eignet sich besonders gut zur Realisierung mit einfachen Mitteln, z.B. mit einem einfachen Mikroprozessor, weil die zeitliche Differenz zwischen dem Auftreten des Vergleichssignals und dem Zeitpunkt der zweiten Rotorstellung bei normalem Lauf des Motors um Null schwankt und folglich digital mit einem Zähler kleiner Kapazität schnell erfaßt und ausgewertet werden kann. Anders gesagt stellt diese zeitliche Differenz bereits die Differenz zwischen gewünschter Drehzahl und tatsächlicher Drehzahl dar, also die sogenannte Regelabweichung, und wenn diese zeitliche Differenz gleich Null wird, läuft der Motor mit der gewünschten Drehzahl. Ist diese zeitliche Differenz ungleich Null, so repräsentiert ihr Vorzeichen die Richtung der Drehzahlabweichung (zu schnell oder zu langsam), und ihr Absolutwert ist ein Maß für die Größe der Regelabweichung, so daß eine einfache Auswertung möglich ist.

Mit besonderem Vorteil geht man gemäß der Erfindung so vor, daß die zeitabhängige Größe entweder direkt nach Auftreten des Vergleichssignals oder dann auf den Anfangswert gesetzt wird, wenn eine vorgegebene Rotorstellung, oder eine aus einer Mehrzahl von vorgegebenen Rotorstellungen, zeitlich mit dem Vorhandensein des Vergleichssignals zusammenfällt. Beide Maßnahmen sind einfach und erlauben eine sichere Messung, wobei die Rücksetzung direkt nach Auftreten des Vergleichssignals insgesamt bessere Ergebnisse zu bringen scheint.

. Bei einer anderen Weiterbildung wird der Beginn der zeitabhängigen Veränderung der Größe durch das Erreichen einer vorgegebenen Rotorstellung oder einer aus einer Mehrzahl von vorgegebenen Rotorstellungen gestartet. Dieser Start aus einer vorgegebenen Rotorstellung heraus erleichtert die nachfolgende Auswertung in ganz ungewöhnlichem Maße und wirkt daher stark vereinfachend und beschleunigend auf das erfindungsgemäße Verfahren.

Eine weitere starke Beschleunigung des Verfahrensablaufs ergibt sich bei einem Verfahren, bei welchem während der Erfassung der zeitlichen Differenz zwischen dem Auftreten des Vergleichssignals und der auf die erste vorgegebene Rotorstellung folgenden zweiten vorgegebenen Rotorstellung mindestens ein Regelparameter, insbesondere der P-Faktor einer Proportionalregelung und/oder der I-Faktor einer Integralregelung, fortlaufend im Sinne einer Anpassung an die gemessene zeitliche Differenz und deren Vorzeichen verändert wird, so daß nach Ablauf dieser zeitlichen Differenz bereits ein geänderter Parameter vorliegt. Dadurch, daß Messung der zeitlichen Differenz und Anpassung der Regelparameter nicht nacheinander erfolgen, sondern zeitlich parallel, liegen am Ende der Messung bereits die angepaßten Parameter vor und können anschließend sofort weiterverarbeitet werden. Da bei einem kollektorlosen Gleichstrommotor zweckmäßig alle Vorgänge eines Zyklus innerhalb von 360° el. abgeschlossen sein sollten, stellt dies eine sehr wichtige und vorteilhafte Weiterbildung der Erfindung dar.

Im gleichen Sinne ist eine Weiterbildung des Verfahrens vorteilhaft, bei welcher in einem ersten Drehwinkelbereich des Rotors der mindestens eine Parameter dann verändert wird, wenn die Drehzahl des Motors zu hoch ist, und in einem vom ersten Drehwinkelbereich verschiedenen, zweiten Drehwinkelbereich der mindestens eine Parameter dann verändert wird, wenn die Drehzahl zu niedrig ist. Dies nutzt die Zeit optimal aus, die während einer Drehung des Rotors von 360° el. zur Verfügung steht und gestattet es, unterschiedlichen Drehwinkelbereichen unterschiedliche Berechnungsroutinen zuzuordnen, wobei eine weitere vorteilhafte Ausgestaltung Gegenstand des Anspruchs 10 ist. Auch kann mit Vorteil die Berechnungsroutine des ersten Drehwinkelbereichs gegenüber der Berechnungsroutine des zweiten Drehwinkelbereichs verriegelt werden in dem Sinne, daß eine der beiden Berechnungsvorroutinen Vorrang vor der anderen hat, und zwar gewöhnlich die Routine für Drehzahl zu niedrig.

Besonders für ein- und zweisträngige Motoren eignet sich ein Verfahren, bei welchem Rechenschritte, z.B. für die Berechnung einer Stellgröße für den Regelvorgang, oder die Berechnung eines Alarmsignals bei Drehzahlunterschreitung, innerhalb mindestens eines vorgegebenen Drehstellungsbereichs des Rotors ausgeführt werden, bei dem mindestens ein Strang des Motors stromlos ist und bevorzugt alle Stränge des Motors stromlos sind, wobei dieses Verfahren noch gemäß Anspruch 12 in sehr vorteilhafter Weise weitergebildet werden kann.

Eine weitere Lösung der gestellten Aufgabe betrifft ein Verfahren mit folgenden weiteren Schritten:

a) In einer der Bestromung eines vorgegebenen Stranges vorhergehenden Zeitspanne wird der zeitliche Abstand zwischen zwei aufeinanderfolgenden Kommutierungszeitpunkten, oder ein diesem zeitlichen Abstand etwa entsprechender Wert - im folgenden Kommutierungs-Zeitwert genannt - erfaßt und gespeichert;

b) Bei der Bestromung eines vorgegebenen Stranges wird die Zeitdauer der Bestromung etwa ab der Kommutierung fortlaufend erfaßt;

c) bei Erreichen einer Zeitdauer der Bestromung, welche um eine vorgegebene Zeitspanne kleiner ist als der Kommutierungs-Zeitwert, wird die Bestromung dieses Stranges abgeschaltet.

Dieses Verfahren - es eignet sich besonders für einen Motor, dessen Rotor eine trapezförmige Magnetisierung mit engen Lücken zwischen den Polen aufweist - reduziert die Laufgeräusche des Motors und führt auch zu einer Reduzierung von Störungen durch Abschaltspitzen. Die genannte Zeitdauer kann dabei mit Vorteil durch das Ausgangssignal eines Drehzahlreglers variiert werden, was einen besonders ruhigen Motorlauf ergibt. und im Bereich der Endstufentransistoren für die einzelnen Stränge können mit Vorteil Verzögerungsmittel vorgesehen werden, welche den Abschaltvorgang der Bestromung verlangsamen.

Eine weitere Lösung der gestellten Aufgabe betrifft ein Verfahren mit folgenden Schritten:

a) Schritte, welche einem Zustand mit zu niedriger Drehzahl zugeordnet sind, werden mindestens teilweise in mindestens einem ersten vorgegebenen Drehstellungsbereich des Rotors ausgeführt;

b) Schritte, welche einem Zustand mit zu hoher Drehzahl zugeordnet sind, werden mindestens teilweise in mindestens einem zweiten vorgegebenen Drehstellungsbereich des Rotors ausgeführt, welcher zweite Drehstellungsbereich vom ersten Drehstellungsbereich verschieden ist.

Dies ermöglicht es, die verschiedenen Abläufe optimal den Abläufen anzupassen, die bei der Umdrehung eines Rotors durchzuführen sind. Eine bevorzugte Weiterbildung ist dabei Gegenstand des Anspruchs 18.

Der Gegenstand des Anspruchs 19 ermöglicht es, zwischen den Werten eines Integralfaktors zu diskriminieren, die bei niedrigen Drehzahlen auftreten, und solchen, die einem irregulären Zustand des Motors entsprechen und innerhalb sehr kurzer Zeit einen sehr hohen Wert des Integralfaktors bewirken, der dann entsprechende Abhilfemaßnahmen auslösen kann. Eine solche Abhilfemaßnahme ist Gegenstand der Ansprüche 20 und 21.

Anspruch 22 betrifft ein erfindungsgemäßes Verfahren, mittels dessen erkannt werden kann, ob ein Motor blockiert ist und dann eine automatische Abschaltung erfolgt. Die Ansprüche 23 und 24 betreffen eine vorteilhafte Weiterbildung dieses Verfahrens.

Anspruch 25 betrifft ein grundlegendes Verfahren nach der Erfindung, das gleichzeitig mit der Steuerung von Vorgängen auch die Messung des zeitlichen Ablaufs ermöglicht, indem man einer Programmschleife eine vorgegebene zeitliche Länge gibt. Dies wird dann in den Ansprüchen 26 bis 31 weiterentwickelt und ermöglicht eine Vielzahl hochinteressanter Lösungen mit sehr schnell arbeitenden Algorithmen einfacher Struktur.

Ein kollektorloser Gleichstrommotor, welcher die eingangs gestellte Aufgabe löst, ist Gegenstand des Anspruchs 34. Ein solcher Motor hat einen sehr einfachen Aufbau. Weiterbildungen dieses Motors sind Gegenstände der Ansprüche 35 bis 38.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

Fig. 1 ein Prinzipschaltbild einer bevorzugten Ausführungsform eines erfindungsgemäßen kollektorlosen Gleichstrommotors,
Fig. 2 ein Schaubild, welches den Verlauf der Drehzahl über der Temperatur zeigt, welcher Verlauf bei einem temperaturgeführten Lüfter angestrebt wird.
Fig. 3 eine Darstellung der Statorströme beim Motor nach Fig. 1 und bei maximaler Drehzahl, und mit der bevorzugten Stromabschaltung in einem Abstand D vor Erreichen der Kommutierungszeitpunkte ta bzw. tb,
Fig. 4 eine Variante zu einer Einzelheit der Fig. 1,
Fig. 5 eine Darstellung von Einzelheiten eines beim bevorzugten Ausführungsbeispiel verwendeten Mikroprozessors,
Fig. 6 eine Darstellung von Kurvenverläufen für den Fall, daß der Motor mit einer Drehzahl läuft, die kleiner ist als die gewünschte Drehzahl,
Fig. 7 eine Darstellung analog Fig. 6 und für den Fall, daß der Motor mit der gewünschten Drehzahl ("Soll-Drehzahl") läuft,
Fig. 8 eine Darstellung analog Fig. 6 und 7 für den Fall, daß der Motor zu schnell läuft,
Fig. 9 eine Darstellung analog den Fig. 6 bis 8 für den Fall, daß der Motor mit der zulässigen Minimaldrehzahl läuft,
Fig. 10 eine Darstellung analog Fig. 6 bis 9 für den Fall; daß der Temperatursensor defekt oder seine Anschlußleitung unterbrochen ist,
Fig. 11 eine synoptische Darstellung des Signals $U_{dif}$ für verschiedene Fälle, wobei jeweils n die aktuelle Drehzahl und n* die gewünschten Drehzahl ist,
Fig. 12 eine Darstellung, welche zeigt, wie abhängig von der Drehstellung des Rotors verschiedene Rechenvorgänge ("Routinen") vom Mikroprozessor abgearbeitet werden, und zwar für den Fall, daß die Drehzahl zu niedrig ist,
Fig. 13 eine Darstellung analog Fig. 12 für den Fall, daß die Drehzahl zu hoch ist,
Fig. 14 eine Darstellung des Schaltbilds eines bevorzugten Ausführungsbeispiels mit verschiedenen vorteilhaften Einzelheiten,
Fig. 15 ein Flußdiagramm von bei der Initialisierung des Mikroprozessors ablaufenden Vorgängen,
Fig. 16 eine Routine zur Implementierung von Fig. 13,
Fig. 17 eine Routine zur Implementierung von Fig. 12,
Fig. 18 eine Routine, welche sich jeweils an die Routinen der Fig. 16 und 17 anschließt,
Fig. 19 eine Routine zur Berechnung einer Stellgröße PI für die Drehzahlregelung, oder für die Steuerung der Motordrehzahl,
Fig. 20 eine Routine zur Berechnung eines Alarmsignals,
Fig. 21 Schaubilder zur Erläuterung der Flußdiagramme nach den Fig. 15 bis 19,
Fig. 22 ein Flußdiagramm analog Fig. 16, aber mit eingezeichneten NOP-Befehlen,
Fig. 23 ein Flußdiagramm analog Fig. 17, aber mit eingezeichneten NOP-Befehlen,
Fig. 24 ein Diagramm analog Fig. 12 zur Veranschaulichung der Vorgänge, die bei aufeinanderfolgenden Kommutierungsphasen ablaufen, und
Fig. 25 ein Schaltbild analog Fig. 1 für den Fall, daß der Motor nur mit seiner maximalen Drehzahl betrieben werden soll, also ohne Drehzahlregelung, wobei aber die Alarmfunktion, die Blockiersicherung, und das leistungslose Ein- und Ausschalten ebenso wie bei Fig. 1 arbeiten, d.h. der Programmablauf bleibt für diesen Fall gegenüber Fig. 1 unverändert.

Fig. 1 zeigt das Grundprinzip der Erfindung in einer stark abstrahierten Darstellung. Mit 20 ist ein Mikroprozessor bezeichnet, dem ein ROM 21 zugeordnet ist, in dem für den Betrieb eines Motors 25 notwendige Befehle gespeichert sind. Diese Befehle, bzw. die von ihnen gesteuerten Operationen, werden nachfolgend anhand von Flußdiagrammen erläutert werden.

Fig. 5 zeigt die Anschlüsse eines Mikroprozessors vom Typ 17103GS, wie er bei der vorliegenden Erfindung verwendet werden kann. Dieser Mikroprozessor 20 enthält ein ROM mit einer Speicherkapazität von 512 Worten zu je 16 Bits. Deshalb ist dieses ROM hier nicht separat dargestellt. Die Anschlüsse und die Bezugszeichen für diesen Mikroprozessor sind Fig. 5 direkt zu entnehmen und werden deshalb nicht zusätzlich beschrieben. Diese Bezugszeichen gemäß Fig. 5 werden auch in Fig. 1 verwendet, so daß zu ihrer Erläuterung auf Fig. 5 hingewiesen werden kann. Dies gilt auch für die Bezeichnung der einzelnen Ports. Die Bezugszeichen beziehen sich auf den Typ 17103GS, einen üblichen Mikroprozessor mit vier Bit Datenbreite.

Die Anordnung nach Fig. 1 dient dazu, einen Motor 25 temperaturabhängig so zu steuern bzw. zu regeln, daß dieser Motor bei niedrigen Temperaturen mit niedriger Drehzahl n läuft, bei hohen Temperaturen dagegen mit hoher Drehzahl. Eine bekannte Anwendung eines solchen Motors ist der Antrieb eines Gerätelüfters. Fig. 2 zeigt einen bevorzugten Verlauf der Drehzahl über der Temperatur; dieser Verlauf bedarf keiner zusätzlichen Erläuterung. Die Motordrehzahl n wird hierbei nach unten hin auf einen Wert $n_{min}$ begrenzt, und nach oben auf den Wert $n_{max}$, d.h. sie kann z.B. zwischen 1400 und 2800 U/min liegen, wenn es sich um einen Gerätelüfter handelt. Oberhalb von 50°C wird gewöhnlich die maximale Drehzahl verlangt, wobei es sich um die höchste mögliche Drehzahl des Motors 25 handelt, die gewöhnlich nicht geregelt wird, aber im Rahmen der Erfindung auch geregelt werden könnte. Naturgemäß kann die Anordnung nach Fig. 1 auch zur Regelung einer konstanten Drehzahl verwendet werden. Hierzu muß nur der NTC-Widerstand 26 durch einen konstanten Widerstand ersetzt werden.

Fällt die Drehzahl des Motors 25 weit unter den unteren Grenzwert, z.B. durch einen Lagerschaden des Motors, so wird gewünscht, daß die Anordnung ein Alarmsignal abgibt, damit keine Schäden durch Überhitzung entstehen können, wenn der Motor einen Lüfter antreibt und folglich dieser Lüfter zu wenig Luft fördert. Auch wird gewünscht, daß ein solcher Motor bei Schäden an seinem Temperatursensor 26, der hier als NTC-Widerstand ausgebildet ist, automatisch mit der Drehzahl $n_{max}$ läuft. Dies gilt z.B., wenn die Leitungsverbindung zum Temperatursensor 26 unterbrochen ist, was bei der dargestellten Anordnung an sich ein Signal für eine sehr niedrige Drehzahl bedeutet, der nach der Logik der verwendeten Regelanordnung die Drehzahl $n_{min}$ entsprechen müßte. Diesem Signal entspricht bei der vorliegenden Erfindung die Drehzahl $n_{max}$. Ferner wird oft gewünscht, daß der Motorstrom unterbrochen wird, wenn der Motor blockiert ist, was man auch als "Blokkiersicherung" bezeichnet.

Der Motor 25 hat bevorzugt einen permanentmagnetischen Rotor 27, welcher einen Rotorstellungssensor 28 steuert, z.B. einen Hall-IC.
Dieser ist in Fig. 1 zweimal dargestellt, um das Verständnis zu erleichtern. Sein Ausgangssignal KOMM wird dem entsprechenden Eingang (Port) 7 des Mikroprozessors 20 zugeführt. Dieses Signal KOMM steuert die Kommutierung der Ströme $i_1$ und $i_2$ in zwei Statorwicklungssträngen 31 bzw. 32 des Motors 25.
Wie die Fig. 6 und 7 beispielhaft zeigen, bewirkt z.B. ein niedriges Rotorstellungssignal (KOMM = L), daß nur der Strang 31 eingeschaltet werden kann (Strom $i_1$), und ein hohes Rotorstellungssignal (KOMM = H) bewirkt, daß nur der Strang 32 eingeschaltet werden kann (Strom $i_2$). Die Einschaltdauer dieser Ströme $i_1$ und $i_2$ hängt von der Temperatur am Temperatursensor 26 und von der Belastung des Motors 25 ab, wie das nachfolgend beschrieben wird.

Zur Steuerung der Ströme $i_1$ bzw. $i_2$ dienen, wie dargestellt, zwei npn-Leistungstransistoren 33, 34. Ihre Basen sind jeweils über einen Widerstand 35 bzw. 36 mit den Ausgängen (Ports) 9 bzw. 10 des Mikroprozessors 20 verbunden, welche im Betrieb die Treibersignale out1 bzw. out2 abgeben. Ferner ist jeweils zwischen Kollektor und Basis der Transistoren 33, 34 ein Kondensator 37 bzw. 38 geschaltet, der zusammen mit dem betreffenden Widerstand 35 bzw. 36 als Verzögerungsglied bei der Abschaltung des betreffenden Transistors 33 oder 34 dient.

Hierzu wird auf Fig. 3 verwiesen, welche die Ströme $i_1$ und $i_2$ bei Vollast zeigt, also bei maximaler Drehzahl.

In Fig. 3 sind die Kommutierungszeitpunkte mit $t_a$ und $t_b$ bezeichnet. Wird der Strom i1 erst kurz vor dem Kommutierungszeitpunkt $t_a$ abgeschaltet und kein Kondensator 37 verwendet, so ergibt sich eine Abschalt-Stromspitze 40, und der Motor erzeugt starke Geräusche.

Wird dagegen der Strom $i_1$ zu einem Zeitpunkt abgeschaltet, der um die - übertrieben dargestellte - Zeitspanne D vor dem Kommutierungszeitpunkt $t_a$ liegt, und die RC-Kombination 35, 37 wird verwendet, so ergibt sich der gestrichelt dargestellte Stromverlauf 42, und der Motor 25 läuft wesentlich leiser. Dasselbe gilt - wegen der Symmetrie der Schaltung - für den Strom $i_2$. Beide Maßnahmen werden erfindungsgemäß in bevorzugter Weise kombiniert, um einen leisen Lauf des Motors 25 zu erreichen.

Der Abstand D kann in gleicher Weise durch den Regler drehzahlabhängig verändert werden, wie das nachfolgend für den Wert PI (z.B. Fig. 21d) detailliert beschrieben wird. Hierzu kann man z.B. die Hälfte des berechneten Wertes PI zur Verzögerung vor dem Einschalten des Stromes verwenden, und die andere Hälfte zum verfrühten Ausschalten, als variablen Wert D. Dies optimiert den Motor und reduziert seine Laufgeräusche noch stärker, und eignet sich daher besonders für Motoren mit einer eher sinusförmigen Magnetisierung des Rotors 27.

Der Rotor 27 hat bevorzugt eine trapezförmige Magnetisierung mit engen Lücken zwischen den Magnetpolen, um eine entsprechende trapezförmige Gegen-EMK zu erhalten. (Die Gegen-EMK wird auch als die induzierte Spannung bezeichnet.) Diese Maßnahme verbessert den Wirkungsgrad und bewirkt ebenfalls eine Geräuschminderung. Die Ströme $i_1$, $i_2$ gemäß Fig. 3 sind bei einem Motor mit einer solchen Magnetisierung des Rotors 27 gemessen. (Eine solche trapezförmige Magnetisierung mit engen Pollücken wird gelegentlich auch im Jargon des Elektromaschinenbaus als "rechteckförmige Magnetisierung" bezeichnet.)

Zur Erläuterung einer bevorzugten Motorkonstruktion für die dargestellte Bauweise mit zwei Strängen 31, 32 kann z.B. auf die DE 23 46 380 C2 verwiesen werden, oder auf Motoren mit ebenem Luftspalt gemäß der DE 22 25 442 C3. Es handelt sich um zweipulsige Motoren gemäß der Definition in asr-digest für angewandte Antriebstechnik, 1977, Seiten 27 bis 31. Diese Motoren können im Rahmen der Erfindung auch einsträngig ausgebildet sein, wobei dann zur Ansteuerung des einzigen Stranges eine Brückenschaltung erforderlich ist, vgl. die erwähnte Literaturstelle asr.

In gleicher Weise läßt sich die Erfindung auch bei kollektorlosen Motoren anderer Bauarten verwenden, z.B. bei dreisträngigen, dreipulsigen Motoren, um nur ein Beispiel zu nennen. Die dargestellte Anordnung mit einem zweipulsigen, zweisträngigen Motor ist aber besonders einfach und vorteilhaft, da sie ein Minimum an Bauelementen erfordert. Dies gilt besonders für Lüfter oder analoge Anwendungen, z.B. Scanner in Laserdruckern.

An den Alarm-Ausgang 9 des Mikroprozessors 20 ist ein npn-Transistor 44 angeschlossen, an dessen Kollektor z.B. eine Klingel oder eine Warnlampe angeschlossen werden kann, um ein hörbares oder ein visuelles Alarmsignal abzugeben, wenn die Drehzahl n (Fig. 3) zu niedrig wird. Häufig wird dieses Signal auch von einem Anwender intern weiterverarbeitet, z.B. in dem betreffenden Gerät.

Wie Fig. 2 zeigt, soll in einem Temperaturbereich zwischen Ta (z.B. 20° C) und Tb (z.B. 50° C) die Drehzahl mit steigender Temperatur ansteigen, d.h. ein bestimmter Temperaturwert T* soll in diesem Bereich eine bestimmte Drehzahl n* bewirken. Die Temperatur T* wirkt also hier wie ein Drehzahl-Sollwert für die Drehzahl n*, und es handelt sich folglich hier um eine Drehzahlregelung.

Hierfür muß eine Differenz gebildet werden zwischen dieser gewünschten Drehzahl n*, die man auch als Soll-Drehzahl bezeichnet, und der tatsächlichen Drehzahl, die man auch als Ist-Drehzahl bezeichnet. Diese Differenz bezeichnet man auch als Regelabweichung.

Bei einem digitalen Drehzahlregler wird die Regelabweichung meist digital berechnet, was teuer ist und relativ viel Zeit erfordert. Bei der vorliegenden Erfindung wird die Regelabweichung in bevorzugter Weise analog berechnet, und dies erlaubt es, während ihrer Berechnung bereits Rechenschritte für den Regelvorgang ablaufen zu lassen und diesen dadurch erheblich zu beschleunigen. Außerdem gestattet es die Erfindung, einen Mikroprozessor mit geringer Datenbreite zu verwenden, da die digitalen Rechenvorgänge keine Zähler mit großer Rechenkapazität erfordern. Dies ist ein wichtiger Vorteil der vorliegenden Erfindung.

Die in Fig. 1 dargestellte Anordnung hat eine positive Leitung 45 und eine negative Leitung 46, zwischen denen z.B. eine Spannung von z.B. 24 V liegt, an die der Motor 25, wie dargestellt, direkt angeschlossen ist. Über einen Widerstand 48 und eine Zenerdiode 49 wird an einer Leitung 50 eine geregelte Spannung von z.B. + 5 V erzeugt. An diese ist über einen Vorwiderstand 52 und einen Knotenpunkt 53 der NTC-Widerstand 26 angeschlossen, der mit seinem anderen Anschluß an der Leitung 46, also an Masse, liegt. Wie man ohne weiteres erkennt, wird das Potential des Knotenpunkts 53 höher, wenn die Temperatur abnimmt, denn dann nimmt der Widerstandswert des Widerstands 26 zu. Auch der Mikroprozessor 20 und ein nachfolgend beschriebener Komparator 57 sind an diese geregelte Spannung angeschlossen, doch ist dies nicht dargestellt, um die Zeichnung nicht zu überladen.

Bricht die Zuleitung zum NTC-Widerstand 26 an der Stelle 54 oder an der Stelle 55, so hat dies dieselbe Wirkung wie eine starke Abnahme der Temperatur, d.h. das Potential am Knotenpunkt 53 springt dann auf den Wert des Potentials der Leitung 50, also auf einen hohen Wert.

Der Knotenpunkt 53 ist an den Minuseingang eines Komparators 57 angeschlossen, dessen Ausgang 58 an den Port 6 des Mikroprozessors 20 angeschlossen ist, der in Fig. 5 mit DIF bezeichnet ist. Dies deshalb, weil am Ausgang 58 des Komparators 57 im Betrieb eine Spannung $U_{dif}$ auftritt, die nachfolgend erläutert wird und mit deren Hilfe die Regelabweichung (gemäß obiger Definition) leicht erfaßt werden kann.

An die Leitung 50 ist zudem über einen Ladewiderstand 62 und einen Knotenpunkt 63 ein Kondensator C angeschlossen. Der Knotenpunkt 63 ist mit dem Pluseingang des Kpmparators 57 verbunden, ebenso mit dem Port 13 des Mikroprozessors 20. An diesen Port 13 ist intern im Mikroprozessor 20 ein npn-Transistor 65 angeschlossen, der mittels der Befehle des Mikroprozessors 20 gesteuert werden kann.

<u>Arbeitsweise von Fig. 1</u>

Wie bereits erläutert, entlädt der Transistor 65 den Kondensator C, wenn dieser Transistor durch einen entsprechenden Befehl leitend gesteuert wird. Bei einer solchen Entladung erhält der Port 13 des Mikroprozessors 20 - in Fig. 5 mit ENTLAD bezeichnet - ein niedriges Potential, also ENTLAD = L. Soll umgekehrt der Kondensator C geladen werden, so wird der Port 13 auf ein hohes Potential gelegt, also ENTLAD = H. Bei ENTLAD = L wird der Kondensator C, der als Speicherglied dient, auf einen Anfangswert gesetzt, nämlich einen fast vollständig entladenen Zustand. Dies geschieht bei einer vorgegebenen ersten Drehstellung des Rotors 27, und diese wird (beim Ausführungsbeispiel) gemessen über das Ausgangssignal KOMM des Rotorstellungssensors 27. Es braucht an dieser Stelle nicht erläutert zu werden, daß man Rotorstellungen auf vielerlei Arten messen kann, z.B. auch ohne Sensor direkt aus den Spannungen und/oder Strömen in den Strängen 31, 32. Das Signal KOMM eines Hall-IC ermöglicht aber eine technisch einfache Lösung, und seine Verwendung wird deshalb bevorzugt, da es sich im Bereich der Kommutierungsstellungen des Rotors abrupt ändert, und zwar von einem hohen Wert (H) zu einem niedrigen Wert (L), oder umgekehrt. Wie oft dies bei einer Rotorumdrehung geschieht, hängt von der Zahl der Rotorpole ab. Bei einem zweipoligen Rotor 27, wie er in Fig. 1 sehr schematisiert dargestellt ist, geschieht dies zweimal pro Rotorumdrehung, und diese Stellen starker Änderung sind 180° voneinander entfernt. Dies sind die Kommutierungsstellen des Motors. Bei einem vierpoligen Rotor wären es vier solche Stellen pro Umdrehung, bei einem sechspoligen Rotor sechs Stellen, etc. Eine niedrige Polzahl hat im Rahmen der Erfindujng den Vorteil, daß dem Mikroprozessor 20 mehr Rechenzeit zur Verfügung steht, bzw., daß ein langsamerer Mikroprozessor verwendet werden kann.

Es ist darauf hinzuweisen, daß beim Ausführungsbeispiel das Signal ENTLAD erst eine kurze Zeitspanne nach einer Kommutierung auf H gesetzt wird, vgl. Fig. 21. Auch dieser Zeitpunkt entspricht einer bestimmten Rotorstellung.

Beim Ausführungsbeispiel ist die Anordnung so gewählt, daß die Ladung des Kondensators C nur dann gestartet werden kann, nachdem das Signal KOMM von H auf L gegangen ist. Fig. 6 zeigt dies für den Fall, daß die Drehzahl des Motors niedriger ist als die gewünschte Drehzahl n∗ (Fig. 2), welche der augenblicklichen Temperatur T* am Sensor 26 entspricht und folglich den Sollwert n* für die Motordrehzahl darstellt.

Durch diese Änderung des Signals KOMM von H auf L wird zum Zeitpunkt $t_{10}$ der Fig. 6 das Signal ENTLAD am Port 13 auf H gesetzt, und der Kondensator C wird über den Widerstand 62 aufgeladen, in diesem Fall nach einer e-Funktion. (Naturgemäß wäre auch eine lineare Ladung möglich). Hierdurch steigt die Spannung $U_C$ am Kondensator C an, wie in Fig. 6c dargestellt, und zum Zeitpunkt $t_{11}$ erreicht das Potential des Punktes 63 die Höhe des Potentials am Punkt 53, welch letzteres der augenblicklichen Temperatur T* am Sensor 26 entspricht und folglich den Sollwert n* für die Motordrehzahl darstellt.

Sind die Potentiale der Punkte 53 und 63 gleich, so wird der Ausgang 58 des Komparators 57 von L auf H umgeschaltet, und man erhält also dort die Spannung $U_{dif}$, die in Fig. 6b dargestellt ist.

In bevorzugter Weise bewirkt das Signal $U_{dif}$ = H, daß direkt anschließend im Programmablauf ENTLAD = L gesetzt wird, vgl. Fig. 21, d.h. daß der Kondensator C anschließend sofort wieder entladen wird, wodurch $U_{dif}$ die Form eines Nadelimpulses erhält. Diese sofortige Entladung ergibt einen besonders ruhigen Motorlauf.

Man kann aber auch die Spannung $U_{dif}$ bis zur nächsten Kommutierungsstelle auf H halten. In diesem Fall wird dann, wenn $U_{dif}$ = H ist und sich KOMM von L auf H oder von H auf L ändert, ENTLAD = L gesetzt und der Kondensator C wird wieder über den Transistor 65 (im Mikroprozessor 20) entladen. Dies geschieht in diesem Fall zum Zeitpunkt $t_{12}$ der Fig. 6. Die nachfolgende Beschreibung bezieht sich auf die bevorzugte Variante mit sofortiger Entladung des Kondensators C nach Auftreten des Signals $U_{dif}$. Dieses wird bei dieser Variante - vgl. die folgenden Flußdiagramme - in Form eines Signals $U_{difalt}$ = H zwischengespeichert, damit die Information aus dem Signal $U_{dif}$ nach Entladen des Kondensators C nicht verlorengeht.

Die Messung der Regelabweichung erfolgt nun wie folgt:

Von der Kommutierungsstelle $t_{10}$, bei der die Aufladung des Kondensators C gestartet wurde, geht man zur nächsten Kommutierungsstelle $t_{12}$, und man mißt die zeitliche Differenz $T_d$ von dieser (nächsten) Kommutierungsstelle $t_{12}$ (oder einer Stelle in ihrer Nähe) bis zum Beginn von $U_{dif}$, also bis zum Zeitpunkt $t_{11}$. Da hier, wenn die Drehzahl zu niedrig ist, $t_{11}$ zeitlich vor $t_{12}$ liegt, wird diese Zeit $T_d$ als negativ gemessen. Ein negatives $T_d$ bedeutet, daß die Drehzahl zu niedrig ist, wobei der Betrag (Absolutwert) von $T_d$ aussagt, um wieviel die Drehzahl zu niedrig ist. Dementsprechend werden die Ströme $i_1$ (Fig. 6d) und $i_2$ (Fig. 6e) durch die Wicklungsstränge 31 bzw. 32 in diesem Fall größer gemacht, um die Drehzahl zu erhöhen.

Wie dies im Prinzip geschieht, zeigt Fig. 12. Fig. 12a zeigt das Signal KOMM, hier für etwa eine Rotorumdrehung von 360° bei einem zweipoligen Motor 27. Fig. 12b zeigt das eben beschriebene Signal $U_{dif}$ für den Fall, daß die Drehzahl zu langsam ist, d.h. die Regelabweichung beträgt $-T_d$.

Wie in Fig. 12 bei 70 angegeben, wird während der ersten Grade der vollen Umdrehung ein Wert PI berechnet, wobei PI für Proportional-Integral-Regelung steht. Dies geschieht aus einem Zahlenwert P für die Proportionalregelung, und einem zahlenwert I für die Integralregelung, z.B. nach der Formel PI = I + 2P, wobei die Faktoren I und P aus vorhergehenden Umdrehungen des Motors vorhanden sind und in entsprechenden Speichern gespeichert sind. (Beim Einschalten des Motors werden entsprechende Werte für I und P bei der Initialisierung vorgegeben.)

Dieser Wert PI bestimmt dann, wie dargestellt, um wieviele Grade nach dem Ende der Berechnungsphase der Strom $i_1$ (durch den Strang 31) eingeschaltet wird, wie in Fig. 12 bei 72 angegeben. Je größer also PI wird, umso kleiner wird dieser Strom. Der Beginn des Stromflusses ist mit $t_1$ bezeichnet. Diese zeitliche Steuerung wird dadurch erreicht, daß das Ausgangssignal out1 am Ausgang 9 des Mikroprozessors 20 zu H gemacht wird, wenn der Strom $i_1$ eingeschaltet werden soll.

Dieser Strom fließt dann z.B. während eines Drehwinkels von 110°, und er wird abgeschaltet vor Erreichen der Kommutierungsstellung, welche hier dem Winkel 180° entspricht, und zwar um einen Winkel D vor dieser Kommutierungsstellung, wobei der Wert D einige Grad beträgt. Dies dient dazu, beim Abschalten des Statorstroms Stromspitzen zu vermeiden.

Mit Beginn des Signals $U_{dif}$ beginnt die Zeitmessung für die Regelabweichung $-T_d$, und diese Messung dauert bis zur Kommutierungsstellung, also bis 180°.

Da der Motor zu langsam läuft, werden bereits während dieser Zeitspanne $T_d$ die Werte für P und I herabgesetzt, und zwar umso mehr, je länger $T_d$ ist. Dies ist in Fig. 12 bei 74 angegeben. (Wenn der Regler nur ein P-Regler wäre, würde selbstverständlich nur ein Wert für P verändert.) Wie dies geschieht, wird nachfolgend anhand von Fig. 17 im Detail beschrieben.

Bei der Drehstellung 180°, also am Ende der Messung von $T_d$, liegen also bereits modernisierte Werte für P und I vor, die kleiner sind als bisher, und im Drehwinkelbereich von z.B. 180° bis 190° wird nun aus diesem modernisierten Werten ein neuer Wert PI* berechnet, wie in Fig. 12 bei 76 angegeben. Diese Berechnung wird nachfolgend bei Fig. 19 im Detail beschrieben. Dieser Wert PI* bestimmt dann, wie bei 78 angegeben, den Einschaltzeitpunkt t2 für den Strom $i_2$ im Strang 32, und dieser Strom $i_2$ fließt also länger, z.B. während 120°, als der Strom $i_1$. Auch der Strom $i_2$ endet um den Wert D vor der nächsten Kommutierungsstellung, die bei 360° liegt. Da der Strom $i_2$ während eines längeren Drehwinkels fließt, entsteht ein längeres antreibendes Drehmoment auf den Rotor 27, und der Motor wird schneller, d. h. die Drehzahl n nähert sich dem Wert n* an.

Im Winkelbereich von z.B. 360° bis 370° (entsprechend 0° bis 10°) könnte erneut der Wert PI aus den gespeicherten Werten für P und I berechnet werden, die sich nicht geändert haben. Hier kann aber in vorteilhafter Weiterbildung der Erfindung auch eine Alarmüberwachung stattfinden, d.h. ein spezielles Rechenprogramm stellt fest, ob die Drehzahl n unterhalb eines unteren Grenzwertes liegt, und gibt einen Alarm, wenn dies der Fall ist. Dies ist in Fig. 12 bei 80 angegeben und wird nachfolgend bei Fig. 20 im Detail beschrieben.

Anschließend hieran wird der bei 76 berechnete Wert PI* weiterverwendet und bestimmt den Zeitpunkt $t_3$, an dem der Strom $i_1$ eingeschaltet wird. Dies ist in Fig. 12 bei 82 erläutert.

Die Vorgänge wiederholen sich dann, d.h. erneut wird ein Signal $U_{dif}$ erzeugt, das in diesem Fall später auftritt, da die Drehzahl etwas gestiegen ist, so daß der Absolutwert von $-T_d$ kürzer wird; die Werte für P und I werden verändert, d.h. weiter verkleinert, ein neuer Wert PI wird errechnet, etc., wie bereits ausführlich beschrieben.

Auf diese Weise sind verschiedenen Abschnitten einer Rotorumdrehung verschiedene Rechenschritte zugeordnet, d.h. die Stellung des Rotors 27 bestimmt darüber, was der Mikroprozessor 20 im Augenblick rechnet oder mißt. Anders gesagt, steuert die Rotorstellung den augenblicklichen Programmablauf.

Fig. 7 zeigt, was geschieht, wenn der Motor 25 mit der gewünschten Drehzahl läuft, d.h. die Motordrehzahl n ist hier gleich der gewünschten Drehzahl n*.

Auch hier wird die Ladung des Kondensators C gestartet, nachdem sich das Signal KOMM von H nach L ändert, z.B. in Fig. 7c zum Zeitpunkt $t_{14}$. Die Spannung $U_C$ steigt dann an und erreicht die Spannung $U_{53}$ am Knotenpunkt 53 ganz kurz nach dem Zeitpunkt $t_{15}$, an dem sich KOMM von L nach H ändert. Ab diesem Zeitpunkt $t_{15}$ wird nun die Zeit $T_d$ gemessen, und da die ansteigende Flanke von $U_{dif}$ praktisch mit $t_{15}$ zusammenfällt, ist $T_d = 0$, d.h. es liegt keine Regelabweichung vor.

In diesem Fall sind die Werte für P und I richtig und werden folglich nicht geändert, d.h. der Abstand PI, der z.B. in Fig. 12 bei 72 erläutert wird, bleibt auch bei den nachfolgenden Stromimpulsen unverändert.

Im Betrieb läuft der Motor weitgehend in diesem Zustand, d.h. die Werte für P und I ändern sich nur wenig, wenn der Motor 25 läuft und sich die Temperatur am Sensor 26 nicht ändert. Je nach Temperatur ergeben sich hier relativ kurze Motorstromimpulse $i_1$ und $i_2$, wie in Fig. 7d und Fig. 7e dargestellt.

Fig. 8 zeigt, was geschieht, wenn die Drehzahl n höher wird als die gewünschte Drehzahl n*. Dies kann z.B. der Fall sein, wenn plötzlich kalte Luft angesaugt wird (im Winter wird ein Fenster geöffnet) und dadurch der Widerstandswert des Sensors 26 rasch zunimmt.

Auch hier wird die Ladung des Kondensators C zu einem Zeitpunkt $t_{17}$ gestartet, an dem das Signal KOMM von H auf L geht, und die Messung von $T_d$ erfolgt etwa ab dem Zeitpunkt $t_{18}$, an dem KOMM direkt anschließend wieder von L nach H geht.

Das Signal $U_{dif}$ tritt hier erst zu einem Zeitpunkt $t_{19}$ auf, der zeitlich nach $t_{18}$ liegt, d.h. $T_d$ ist hier positiv. Das positive Vorzeichen bedeutet, daß der Motor zu schnell läuft, und der Absolutwert von $T_d$ gibt an, um wieviel der Motor zu schnell läuft. Dementsprechend müssen hier die Motorströme $i_1$ und $i_2$ kürzer gemacht werden. Wie dies geschieht, zeigt Fig. 13.

Ebenso wie Fig. 12 zeigt Fig. 13 die Abläufe bei einer vollen Rotordrehung von 360°, wie in Fig. 13a angegeben. Die Winkelstellung beginnt links bei 180°. In der Mitte erreicht sie 360° = 0°, und rechts erneut 180°, d.h. die Umdrehung ist dort abgeschlossen.

Bei Fig. 12 war die Drehzahl zu niedrig, und deshalb mußte $T_d$ in dem Zeitraum von 0° bis 180° gemessen werden, in dem KOMM = L ist.

Bei Fig. 13 ist die Drehzahl zu hoch, und deshalb muß $T_d$ in dem Zeitraum von 180° bis 360° gemessen werden, in dem KOMM = H ist.

Auch bei Fig. 13 wird zu Beginn, also im Winkelbereich direkt nach 180°, während einer Drehung von z.B. 10° der Wert PI aus den vorhandenen Werten für P und I errechnet, wie das bei Fig. 12 in der Beschreibung erläutert wurde. Dies ist in Fig. 13 bei 85 erläutert und erfolgt mit der Routine gemäß Fig. 19.

Dieser Wert PI bestimmt anschließend den Einsatzpunkt $t_1$ des Stromes $i_2$, wie in Fig. 13 bei 87 angegeben.

Gleichzeitig mit dieser Berechnung von $t_1$ wird hier auch ein Wert $T_d'$ gemessen, der etwas kürzer ist als $T_d$, denn die Messung beginnt erst mit Abschluß der Berechnungsphase 85, wie aus Fig. 13 klar hervorgeht. Dies kann ggf. in einem Programm kompensiert werden, da ja die Zeitdauer der Berechnungsphase 85 bekannt ist, doch funktioniert die Anordnung auch dann sehr zufriedenstellend, wenn der Wert $T_d'$ gemessen wird.

Da der Motor zu schnell läuft, sind die Werte für P und I zu klein, und deshalb werden sie während der Zeitdauer von $T_d$' heraufgesetzt, umso mehr, je länger $T_d$' andauert. Man erhält also bereits am Ende von $T_d$' neue, erhöhte Werte für P und I, welche geeignet sind, die Drehzahl entsprechend etwas zu reduzieren. Dies ist in Fig. 13 bei 89 erläutert und geschieht mit der in Fig. 16 dargestellten Routine.

Es ist hier der Ort, darauf hinzuweisen, daß bei Fig. 12 die Messung eines negativen $T_d$ (Schritt 74) von der Berechnung des Zeitpunkts $t_1$ (Schritt 72) zeitlich getrennt ist, während bei Fig. 13 die Schritte 87 und 89 zeitlich parallel ablaufen müssen. Man benötigt also hier verschiedene Regelalgorithmen. Da die Ladung des Kondensators C definitionsgemäß dann gestartet wird, wenn sich das Signal KOMM von H nach L ändert, also in Fig. 12 und 13 bei der Kommutierungsstellung 360° = 0°, läuft der Algorithmus für "Drehzahl zu niedrig" bevorzugt in dem Drehwinkelbereich ab, in dem KOMM = L ist, und der Algorithmus für "Drehzahl zu hoch" läuft bevorzugt in dem Drehwinkelbereich ab, in dem KOMM = H ist, wie in den Fig. 12 und 13 dargestellt.

Würde die Ladung des Kondensators C dann gestartet, wenn KOMM von L auf H geht, also an der Kommutierungsstellung bei 180°, so müßte der Algorithmus für "Drehzahl zu niedrig" dann ablaufen, wenn KOMM = H ist, und der Algorithmus für "Drehzahl zu hoch" müßte dann ablaufen, wenn KOMM = L ist. Dies ergibt sich ja auch aus der Symmetrie eines Elektromotors. Diese - nicht dargestellte - Variante kann in manchen Fällen Vorteile haben.

In gleicher Weise kann die Messung von $T_d$ auch an anderen Stellen der Rotorumdrehung erfolgen, d.h. wenn z.B. der Hallgenerator 28 sich an einer anderen Stelle des Rotors relativ zum Rotor 27 befindet, spielt das für die Messung der Zeit $T_d$ und ihres Vorzeichens keine Rolle. Es kommt nur darauf an, daß an definierten Stellen der Rotorumdrehung geeignete Signale für die Steuerung der Ladung des Kondensators C (also für Beginn der Ladung, und für Entladung), bzw. für eine Messung $T_d$ vorliegen. Die Ströme $i_1$ und $i_2$ dürfen naturgemäß nur in bestimmten Drehwinkelbereichen des Rotors fließen, nämlich in den Drehwinkelbereichen, in denen die bereits erwähnte Gegen-EMK hoch ist, und wenn der Hall-IC 28 so justiert ist, daß diese Ströme in den richtigen Drehwinkelbereich fließen, kann sein Ausgangssignal KOMM beide Funktionen erfüllen, nämlich

a) die Kommutierung steuern, und
b) die Messung der Regelabweichung ermöglichen.

Zurück zu Fig. 13. Im Bereich direkt nach 360° = 0°, also z.B. von 0° bis 10°, wird aus den zuvor modernisierten Werten von P und I ein neues PI* errechnet, das also hier größer ist als das vorhergehende PI, und dies ist in Fig. 13 bei 92 erläutert. Hierzu dient die Routine der Fig. 19.

Anschließend wird bei 94 der Strom-Einsatzpunkt $t_2$ anhand des neuen Wertes PI* errechnet. Während z.B. der Strom $i_2$ während eines Drehwinkels von 130° floß, fließt der Strom $i_1$ nur während eines Drehwinkels von 120°. (In der Praxis sind naturgemäß die Unterschiede wesentlich kleiner, aber die Verwendung größerer Unterschiede ermöglicht eine anschaulichere zeichnerische Darstellung.)

Sowohl der Strom $i_2$ wie der Strom $i_1$ wird aus den erläuterten Gründen um den Abstand D vor der Kommutierungsstellung (360° bzw. 180°) abgeschaltet, was im Programmschritt S131 (Fig. 15) berücksichtigt wird.

Im Anschluß an die Kommutierungsstellung 180° (rechts in Fig. 13) kann bei 96 berechnet werden, ob ein Alarm gegeben werden muß, oder der Wert PI kann erneut berechnet werden. Dieser bleibt unverändert, da kein neuer Meßwert $T_d$ vorliegt, wie in Fig. 13 bei 98 erläutert.

Wesentlich ist also, daß die Messung von $T_d$ parallel mit der Modernisierung der Werte für P und I abläuft, und ggf. auch parallel mit der Berechnung des Strom-Einsatzpunktes, und daß ggf. eine Messung anschließend für mehrere Stromimpulse verwendet wird, bis eine neue Messung erfolgt. Im Verlauf von ein oder zwei Rotorumdrehungen finden ja keine großen Drehzahländerungen statt.

Fig. 9 zeigt, was bei sehr niedrigen Temperaturen geschieht. In diesem Fall wird das Potential $U_{53}$ sehr hoch, und die Spannung $U_C$ erreicht dieses Potential erst nach einigen Motorumdrehungen, d.h. $T_d$ hat einen positiven Wert und ist sehr groß. Dies würde einer sehr niedrigen Motordrehzahl n entsprechen, die nicht zulässig ist. In diesem Fall schaltet der Regler auf eine Proportionalregelung um und hält eine untere Drehzahl von z.B. 1400 U/min ein. Die Stromimpulse $i_1$ und $i_2$ werden in diesem Fall äußerst kurz.

Fig. 10 zeigt, was geschieht, wenn der Temperatursensor 26 defekt ist, z.B. wegen einer Unterbrechung an den Stellen 54 und 55. In diesem Fall wird das Potential $U_{53}$ so hoch, daß die Spannung $U_C$ dieses Potential $U_{53}$ niemals erreicht. In diesem Fall schaltet die Anordnung auf maximale Drehzahl um, wie in Fig. 10d und 10e symbolisch dargestellt, d.h. die Statorstromimpulse $i_1$, $i_2$ erhalten ihre maximal mögliche Länge.

Fig. 11 zeigt nochmals synoptisch die verschiedenen möglichen Fälle:

Bei Fig. 11b ist der Motor um vieles zu langsam, und deshalb ist $T_d$ negativ und hat einen großen Absolutwert.

Bei Fig. 11c ist der Motor etwas zu langsam. $T_d$ ist negativ, aber sein Absolutwert ist kleiner, verglichen mit Fig. 11b.

Bei Fig. 11d läuft der Motor mit der richtigen Drehzahl n = n*. Die Spannung $U_{dif}$ liegt nun im Bereich des Signals KOMM = H. $T_d$ hat den Wert 0.

Fig. 11e zeigt die Situation, wenn der Motor etwas zu schnell läuft. $T_d$ ist- hier positiv und hat einen relativ kleinen Wert.

Bei Fig. 11f ist der Motor viel zu schnell, und $T_d$ ist positiv und hat einen großen Absolutwert.

Bei Fig. 11e ist der Sensor defekt. $T_d$ hat einen sehr hohen Wert oder den Wert unendlich, d.h. $U_{dif}$ behält ständig den Wert 0. Die Auswertung dieses Zustands durch den Mikroprozessor 20 bewirkt eine Umschaltung des Motors 25 auf maximale Drehzahl.

In der Praxis kann die Schaltung mit dem Komparator 57 (Fig. 1) mittels eines npn-Transistors 100 und eines pnp-Transistors 102 realisiert werden, wie in Fig. 4 dargestellt. Gleiche Teile wie in Fig. 1 sind in Fig. 4 mit denselben Bezugszeichen bezeichnet und werden deshalb nicht nochmals beschrieben.

Die Basis des Transistors 100 ist mit dem Knotenpunkt 63 verbunden, sein Emitter mit dem Knotenpunkt 53, und sein Kollektor mit der Basis des Transistors 102. Der Emitter des Transistors 102 ist über einen Widerstand 103 an eine positive Spannung angeschlossen, und sein Kollektor ist über einen Widerstand 104 mit Masse 46 verbunden. Am Widerstand 104 kann dann im Betrieb die Spannung $U_{dif}$ abgenommen werden.

Fig. 14 zeigt eine Schaltung mit weiteren Einzelheiten. Für den Komparator verwendet sie die Schaltung gemäß Fig. 4, ansonsten die Schaltung gemäß Fig. 1, weshalb für gleiche Teile dieselben Bezugszeichen verwendet werden wie in den Fig. 1 und 4, und diese Teile werden gewöhnlich nicht nochmals beschrieben.

In der Zuleitung von der positiven Leitung 45 (z.B. 24 oder 48 V Betriebsspannung) zu den elektronischen Bauteilen liegt hier eine Diode 108, welche bei falschem Anschluß, auch "Falschpolung" genannt, sperrt, und eine Zerstörung der Elektronik verhindert. Für die Stromversorgung des Hall-IC 27 sind eine Zenerdiode 109 und ein Vorschaltwiderstand 110 vorgesehen.

An die Anschlüsse 1 und 2 des Mikroprozessors 20 ist ein Taktgeber 112 von z.B. 6 MHz angeschlossen. Zwischen dem Port 7 und der Leitung 50 liegt ein Widerstand 114. Dies ist der sogenannte Pullupwiderstand des Hall-IC 27.

Der Resetanschluß (Port 3) des Mikroprozessors 20 ist mit einem Knotenpunkt 114 verbunden. Letzterer ist über einen Widerstand 115 mit der positiven Leitung 50 und über einen Kondensator 116 mit der negativen Leitung 46 verbunden.

Beim Einschalten des Motors ist der Kondensator 116 entladen, und folglich hat der Knotenpunkt 114 zunächst das Potential 0 V, also ein niedriges Signal L. Dieses Signal L bewirkt die Einschaltinitialisierung des Mikroprozessors 20, wie sie nachfolgend beim Schritt S130 beschrieben wird. Anschließend lädt sich der Kondensator 116 auf, und das Signal am Port 3 wird zu H, wodurch die Initialisierung abgeschlossen ist.

Die Potentiale an den Ports 14 und 15 bestimmen die minimale Drehzahl des Motors, also in Fig. 2 den Wert $n_{min}$. Dies wird erreicht durch die Widerstände 118, 119 und die dargestellten Verbindungen zur positiven Leitung 50 bzw. zur negativen Leitung 46.

Port 4 ist mit der negativen Leitung 46 verbunden. Das Potential am Port 12 (H oder L) bestimmt die Dauer der Alarmverzögerung AVZ (0 oder 10 Sekunden). Beim Ausführungsbeispiel sind die Ports 5 und 12 an die Leitung 50 (+) angeschlossen. Der E/A-Port ermöglicht eine digitale Steuerung des Motors 25: wird er auf L gelegt, so steht der Motor. Wird er auf H gelegt - wie in Fig. 14 - so läuft der Motor. Dies ermöglicht die Einschaltung des Motors mittels eine Niederspannungssignals.

In Reihe mit dem Motor 25 liegt auf der Plusseite ein PTC-Widerstand 121 als Sicherung (fuse) bei einem Blockieren des Motors, und auf der negativen Seite ein niederohmiger Widerstand 122, der für die Schaltvorgänge günstig ist. - Parallel zum Kondensator 37 liegt eine Zenerdiode 123, parallel zum Kondensator 38 eine Zenerdiode 124, um den Mikroprozessor 20 vor Überspannungen von den Motorwicklungen 31, 32 zu schützen.

Die Arbeitsweise wurde bereits anhand der Fig. 1 und 4 beschrieben, und die Initialisierung beim Einschalten mittels des Widerstands 115 und des Kondensators 116 wurde ebenfalls bereits erläutert. Zum Mikroprozessor 20 vergleiche auch die Fig. 5, welche die verwendete symbolische Bezeichnung der einzelnen Ports angibt.

Nachfolgend werden nun die Flußdiagramme für die dargestellten Vorgänge im einzelnen erläutert, wie sie in den Fig. 15 bis 20 dargestellt sind und wie sie im Augenblick den optimalen Wissensstand darstellen. (Programme unterliegen häufigen Änderungen und Optimierungen, wie dem Fachmann bekannt ist.)

Fig. 15 zeigt bei Schritt S130 die Vorgänge beim Einschalten des Motors, also den Power-ON Reset, der beim Einschalten durch den Widerstand 115 und den Kondensator 116 ausgelöst wird, wie bei Fig. 14 beschrieben. Hierbei werden die verschiedenen Ports des Mikroprozessors 20 abgefragt, also in Fig. 5 der Port ATS (ob H oder L), der die Alarmdrehzahl angibt, z.B. 1200 U/min, ferner der Port SEN, welcher angibt, ob ein Alarmsignal wieder gelöscht werden darf, wenn die Drehzahl wieder normal wird, oder ob das Alarmsignal gespeichert werden muß. Ferner werden die Ports NG0 und NG1 abgefragt, welche zusammen die minimale Drehzahl nmin festlegen, z.B. 1400 U/min, und der bereits erläuterte Wert E/A wird abgefragt, der angibt, ob der Motor laufen oder stehen soll. Die Werte NG0 und NG1 werden anschließend decodiert und ergeben einen Wert KZMIN für die minimale Drehzahl, z. B. 120 Einheiten. (Je größer dieser Wert, desto kleiner die Drehzahl).

Ferner werden folgende Register gesetzt:

SENSAB auf L.
PI auf einen niedrigen Wert, z.B. 0.
KZalt auf einen hohen Wert, z.B. 255.

I auf einen niedrigen Wert, z.B. auf 0.
PZ auf den Maximalwert, hier z.B. 15.
$U_{difalt}$ auf H.

SENSAB = L bedeutet, daß kein Sensorabriß (interrupted sensor connection) vorliegt, also daß in Fig. 1 keine Unterbrechung in den Leitungen zum Sensor 26 an der Stelle 54 oder 55 vorliegt. SENSAB = H bedeutet maximale Drehzahl und setzt die Regelung außer Kraft, d.h. hierbei wird PI = 0 gesetzt, vgl. Fig. 19, Schritt S165.

PI ist die Stellgröße des Reglers. Wie Fig. 21d zeigt, bestimmt sie, wann der Motorstrom eingeschaltet wird: Erst wenn der Kommutierungszähler KZ den Zählerstand PI, also die Stellgröße, erreicht hat, wird der Strom $i_1$ (oder $i_2$) eingeschaltet. Ist PI groß, so wird folglich der Strom spät eingeschaltet, also wenig Power. Ist PI klein, so wird der Strom früh eingeschaltet, also viel Power.

KZalt ist ein Zählwert für den Kommutierungszähler KZ. (Der Kommutierungszähler KZ ist ein Teil des Mikroprozessors 20 - Fig. 5 - und daher nicht gesondert dargestellt.) Wie sich aus Fig. 21d ergibt, beginnt der Kommutierungszähler KZ kurz nach einer Kommutierung zu zählen, wenn die Berechnungsphase 128 (Erläuterung in Fig. 12 bei 70 oder 80) abgeschlossen ist. Hat der Kommutierungszähler bis PI gezählt, so schaltet er den betreffenden Strang ein, und es fließt ein Motorstrom. Hat der Kommutierungszähler den Wert KZ'alt erreicht, der um den Wert D (z.B. 4 Einheiten) kleiner ist als KZalt, so schaltet er diesen Strom wieder aus.

Der Kommutierungszähler KZ zählt anschließend weiter bis zur nächsten Kommutierung und mißt dabei den Wert KZ, also die Zeitdauer von KZ = 0 (Ende der Berechnungsphase 128) bis zur nächsten Kommutierung ($t_{30}$ in Fig. 21a). Dieser Wert dient - wenn er zu hoch wird - als Anzeige für eine Blockierung des Rotors, wie nachfolgend erläutert wird. Dieser Wert KZ wird dann als wahrscheinlichster Wert für die Dauer der nächsten Kommutierungsphase im Register KZalt als Wert KZalt gespeichert. Es kann auch vorteilhaft sein, für den Wert KZalt den gleitenden Durchschnitt (moving average) einer Mehrzahl von kurz zuvor gemessenen Werten für KZ zu verwenden, da dann der Motorlauf noch ruhiger wird. Diese Variante ist nicht im Flußdiagramm dargestellt; für den Fachmann stellt ihre Realisierung kein Problem dar.

Beim Schritt S130 wird KZalt vorgegeben, da noch kein Wert aus einer Messung vorliegt.
I ist der Integralfaktor des Drehzahlreglers, der beim Start vorgegeben werden muß.
PZ ist der Zählerstand eines Prüfzählers, vgl. Fig. 18.
PZ = 15 stellt sicher, daß nach der ersten Messung sofort ein neuer Wert für PI berechnet wird, und daß eine Alarmberechnung erst später erfolgt.
Eine Anlaufverzögerung AVZ bewirkt, daß z.B. während 10 Sekunden nach dem Anlauf kein Signal ALARM ausgelöst werden kann, vgl. Fig. 20.

$U_{difalt}$ ist ein Registerwert, der auf H gesetzt wird, wenn während KOMM = L der Wert $U_{dif}$ = H auftritt. Dies sperrt bei KOMM = H die Veränderung der Werte für I und P, nicht aber bei KOMM = L. Dieser Wert wird deshalb beim Start auf H gesetzt, weil beim Start die Drehzahl zu niedrig ist, so daß P und I bei KOMM = L verändert werden müssen, nämlich verkleinert.

Anschließend geht der Mikroprozessor 20 zum Schritt S131, der bei jedem Kommutierungswechsel durchlaufen wird. Hier wird vom bereits erläuterten Wert KZalt (Fig. 21d), der sich bei jeder Kommutierung ergibt (als Abstand zwischen KZ = 0 und $t_{30}$, oder als bereits erläuterter gleitender Durchschnitt, der bei jeder Kommutierung neu berechnet wird), der Wert D abgezogen, z.B. 4 Einheiten, so daß sich der Wert KZ'alt ergibt. Dieser wird als Grenzwert in den Kommutierungszähler KZ gesetzt, damit bei Erreichen dieses Wertes der Strom abgeschaltet wird. Außerdem wird der Kommutierungszähler KZ im Schritt S131 auf Null rückgestellt, damit er wieder von vorne an zählt, also ab KZ = 0, wie in Fig. 21d dargestellt, und der Proportionalfaktor P des Reglers wird auf P = 0 gesetzt.

Beim Schritt S132 wird geprüft, ob das Freigabesignal E/A hoch ist. Nur in diesem Fall kann der Motor anlaufen. Sonst geht das Programm zum Schritt S131 zurück. Dies ermöglicht es, den Motor von einem Computer aus zu steuern.

Beim Schritt S201 wird dann geprüft, ob das Signal KOMM hoch oder niedrig ist. Ist KOMM = H, so prüft das Programm im Schritt S202, ob das Signal $U_{difalt}$ = H ist. Falls Ja, wird ein Vorzeichensignal REG im Schritt S203 auf -1 gesetzt, und das Programm geht dann weiter zur Routine der Fig. 16. REG = -1 bedeutet, daß die Drehzahl zu niedrig ist, und daß folglich in der Routine der Fig. 16 eine Veränderung der Parameter I und P gesperrt ist.

Ist $U_{difalt}$ = L, so wird im Schritt S204 REG = +1 gesetzt, und das Programm geht ebenfalls weiter zur Routine nach Fig. 16. REG = +1 bedeutet, daß die Drehzahl zu hoch ist, und daß folglich in der Routine nach Fig. 16 die Parameter für I und P vergrößert werden dürfen, entsprechend dem gemessenen Wert für $T_d$.

Ist im Schritt S201 das Signal KOMM = L, so geht das Programm zum Schritt S205. Dort wird geprüft, ob $U_{difalt}$ = H ist. Falls Ja, wird im Schritt S206 REG = +1 gesetzt (Drehzahl zu hoch), und das Programm geht weiter zur Routine der Fig. 17. In diesem Fall ist dort die Veränderung der Parameter für I und P gesperrt.

Ist im Schritt S205 die Antwort Nein, so geht das Programm zum Schritt S207, wo REG = -1 gesetzt wird, d.h. die Drehzahl ist zu niedrig, und das Programm geht weiter zur Routine der Fig. 17, wo dann die Parameter für I und P verkleinert werden dürfen, entsprechend dem gemessenen Wert für $T_d$.

Als Vorbemerkung zu den Fig. 16 und 17 ist zu sagen, daß die dort dargestellten Schleifen zusätzlich eine Zeitmessung bewirken, nämlich durch Veränderung des Kommutierungszählers KZ (in den Schritten S143 bzw. S154). Dies setzt voraus, daß jeder Schleifendurchlauf, egal auf welchem Weg, gleich lang dauert, und dies wird dadurch erreicht, daß bestimmte, an sich kürzere Schleifendurchläufe mit NOP-Befehlen aufgefüllt sind, welche also nur Zeit verbrauchen, aber nichts bewirken. Diese NOP-Befehle werden in einem Flußdiagramm nicht dargestellt, doch wird hierauf hingewiesen, da eine optimale Funktion voraussetzt, daß jeder Schleifendurchlauf möglichst gleich lang ist. Die Dauer eines Schleifendurchlaufs der Fig. 16 entspricht also der Dauer eines Schleifendurchlaufs der Fig. 17, so daß die Werte für KZ direkt vergleichbar sind. Die Fig. 22 und 23 zeigen diese NOP-Befehle.

Fig. 16 zeigt die Routine für KOMM = H. Diese Routine implementiert Fig. 13, sofern der Motor zu schnell ist, d.h. die Faktoren P und I werden hier nur verändert, nämlich vergrößert, wenn der Motor zu schnell ist.

Beim Schritt S133 wird geprüft, ob der Kommutierungszähler KZ (im Mikroprozessor 20) den Wert PI erreicht hat, vgl. Fig. 21d. Ist dies der Fall, so wird der Strom $i_2$ eingeschaltet. Im Schritt S134 wird geprüft, ob der Kommutierungszähler den Wert KZ'alt erreicht hat, und dann wird der Strom $i_2$ wieder abgeschaltet.

out2 = L bedeutet, daß der Strom $i_2$ ausgeschaltet ist.

out2 = H bedeutet, daß der Strom $i_2$ eingeschaltet ist.

Analoges gilt für out1.

Der Schritt S135 bedeutet also, daß beide Ströme $i_1$ und $i_2$ ausgeschaltet sind, und S136 bedeutet, daß $i_2$ eingeschaltet ist, also der Strang 32 bestromt wird.

Bei S137 wird geprüft, ob $U_{dif}$ = L ist, vgl. Fig. 11d, 11e und 11f: solange $U_{dif}$ = L ist, wird (bei KOMM = H) $T_d$ gemessen, und die Werte für P und I sollten folglich im Schritt S139 verändert werden. Diese Veränderung erfolgt aber nur, wenn auch $U_{difalt}$ = L ist, d.h. wenn bei KOMM = L nicht vorher festgestellt wurde, daß die Drehzahl zu niedrig ist, und dies wird im Schritt S138 geprüft. (Bei zu niedriger Drehzahl dürfen die Werte für P und I nur durch die Routine gemäß Fig. 17 verändert werden.)

Ferner wird in einem Schritt S210 als dritte Bedingung geprüft, ob REG = +1 ist, und nur wenn auch dies der Fall ist, geht das Programm weiter zum Schritt S139, also zur "Meßphase", in der die Werte I und P während der Dauer von $T_d$ verändert werden.

Ist das Ergebnis in Schritten S137, S138 und S210 "Ja", so wird im Schritt S139 der Faktor I um den Wert X erhöht, z.B. um den Wert 3, und der Faktor P wird um Y erhöht, z.B. um den Wert 1. I kann maximal auf 255 erhöht werden, P maximal auf 15, wobei diese Zahlen - wie immer - nur Beispiele sind, damit die Materie nicht zu trocken wird. $U_{difalt}$ bleibt in S139 weiterhin auf L. Das Register ENTLAD wird auf L gesetzt.

Wenn in S137 $U_{dif}$ auf H ist, also die Messung von $T_d$ abgeschlossen ist, vgl. Fig. 11, wird im Schritt S140 $U_{difalt}$ auf H und SENSAB auf L gesetzt, und das Programm geht direkt zum Schritt S143, wo der Kommutierungszähler KZ um den Wert 1 erhöht wird. Analoges gilt, wenn bei S138 $U_{difalt}$ = H ist und wenn bei S210 REG = -1 ist.

Auf S139 folgt der Schritt S141, wo geprüft wird, ob I = 255 ist, also seinen Maximalwert hat. Dies bedeutet den Fall der Fig. 11g, also Sensorabriß. Deshalb wird, falls dies zutrifft, in S142 das Register SENSAB auf H gesetzt, was nachfolgend die Umschaltung des Motors auf maximale Drehzahl bewirkt. Ist I<255, so geht das Programm direkt zu S143.

Nach S142 wird bei S143 der Kommutierungszähler KZ ebenfalls um den Wert 1 erhöht.

Danach wird in einem Schritt S212 überprüft, ob der erreichte Wert des Kommutierungszählers KZ (im Mikroprozessor 20) kleiner ist als ein Schwellwert S3, der z.B. den Wert 260 haben kann. Trifft dies zu, so geht das Programm zum Schritt S144. Überschreitet aber KZ den Schwellwert S3, d.h. der Motor dreht äußerst langsam oder steht (Rotor 27 ist blockiert), so geht das Programm zum Schritt S214, wo die Ströme in beiden Strängen 31 und 32 abgeschaltet werden. Es folgt bei S216 eine Wartezeit von z.B. 3 Sekunden, d.h. der Motor bleibt 3 Sekunden stromlos, und das Programm geht dann weiter zum Schritt S162 in Fig. 20, wo ggf. ein Alarm ausgelöst wird. Danach wird der Strom im Motor erneut eingeschaltet, d.h. es folgt automatisch ein neuer Anlaufversuch nach ca. 3 Sekunden Wartezeit, so daß der Motor nicht überhitzt werden kann, aber sofort wieder anläuft, wenn die Blockierung weggefallen ist.

Ist beim Schritt S212 die Antwort Ja, so wird anschließend im Schritt S144 geprüft, ob sich das Signal KOMM geändert hat. Ist es immer noch gleich, so geht das Programm in einer Schleife zurück zum Schritt S133. Hat sich das Signal KOMM geändert, so geht das Programm weiter zur Routine der Fig. 18.

Fig. 17 stellt die Fortsetzung von Fig. 15 für den Fall dar, daß KOMM = L ist. Diese Routine implementiert Fig. 12. Bei ihr werden die Meßvorgänge, d.h. die Veränderungen von I und P, nur dann vorgenommen, wenn der Motor zu langsam ist. Fig. 21 zeigt beispielhaft die Abläufe bei dieser Routine.

Beim Schritt S147 wird der Ausgang 13 des Mikroprozessors 20 auf H gesetzt, also ENTLAD = H. Fig. 21c zeigt, daß bei ENTLAD = H die Ladung des Kondensators C beginnt und folglich die Spannung $U_C$ (Fig. 21b) ansteigt.

Wie Fig. 21c zeigt, wird das Signal ENTLAD erst im zeitlichen Abstand von der Änderung des Signals KOMM (von H auf L) auf H gesetzt. Der zeitliche Abstand entspricht der Dauer der Berechnungsphase 128 (Fig. 21d), die nachfolgend anhand der Fig. 19 und 20 erläutert wird. Diese Änderung des Signals ENTLAD von L nach H kann nur erfolgen, wenn sich zuvor KOMM von H auf L geändert hat, d.h. diese Änderung ist nur Bestandteil der Routine gemäß Fig. 17.
Schritt S148 entspricht S133.
Schritt S149 entspricht S134.
Schritt S150 entspricht S135.
Schritt S151 entspricht S136, mit dem Unterschied, daß bei S151 der Strom $i_1$ eingeschaltet wird. Auf die entsprechende Beschreibung dieser Schritte bei Fig. 16 wird verwiesen.

Bei S152 erfolgt die Prüfung, ob $U_{dif}$ hoch ist. Dies entspricht den Fig. 11b, 11c und 11d, d.h. $T_d$ wird erst ab dem Augenblick gemessen, ab dem $U_{dif}$ hoch wird. Ist dies der Fall, so wird als nächstes im Schritt S222 geprüft, ob REG = -1 ist, vgl. Schritt S207, d.h. ob die Drehzahl zu niedrig ist. Falls ja, so wird bei S153 der Integralfaktor I um den Wert X (z.B. 3) reduziert, der Proportionalfaktor P wird um den Wert Y (z.B. 1) erhöht, und $U_{difalt}$ wird auf H gesetzt, damit nachfolgend bei KOMM = H der Schritt S139 nicht ausgeführt wird, und ENTLAD wird auf L gesetzt, d.h. der Kondensator C wird sofort wieder entladen, wenn $U_C$ den Wert $U_{58}$ erreicht hat, wie in Fig. 21b und 21c dargestellt. Dies hat den Vorteil, daß für die Entladung über den Transistor 65 (Fig. 1) genügend Zeit zur Verfügung steht, wobei das Signal $U_{difalt}$ anschließend ein Substitut für das Signal $U_{dif}$ ist.

Wenn $U_{dif}$ = L ist, geht das Programm zum Schritt S224, und dort wird geprüft, ob $U_{difalt}$ = H ist. Falls ja, geht das Programm zum Schritt S222, falls nein, zum Schritt S154, wo der Kommutierungszähler KZ um den Wert 1 erhöht wird. Anschließend wird im Schritt S226 geprüft, ob KZ kleiner als ein Schwellwert S3 (z.B. 260) ist, und falls ja, geht das Programm zum Schritt S155. Falls nein, geht es zu den Schritten S228 und S230, und dann zu S162. Schritt S228 entspricht S214 der Fig. 16, Schritt S230 entspricht S216 in Fig. 16. Auf die dortige Beschreibung wird deshalb verwiesen.

Bei S155 wird geprüft, ob sich das Signal KOMM geändert hat. Ist es unverändert, so geht das Programm zurück zum Schritt S147. Hat sich KOMM geändert, so geht das Programm weiter zur Routine der Fig. 18.

Fig. 18 zeigt, was anschließend an Fig. 16 oder Fig. 17 geschieht. Bei S160 wird der Prüfzähler PZ (vgl. S130) um den Wert 1 erhöht.
Dieser Zähler zählt immer bis 15 und geht dann zurück auf den Wert Null.

Bei S161 wird deshalb geprüft, ob PZ = 15 ist. Falls Ja, folgt die Routine 162 für ALARM (Fig. 20), falls Nein, die Routine 163 (Fig. 19) für die Berechnung des Wertes PI. Beide Routinen finden in der Berechnungsphase 128 (Fig. 21d) statt, also jeweils direkt nach einer Kommutierung, was eine - erwünschte - kleine Einschaltverzögerung der Ströme $i_1$ bzw. $i_2$ bewirkt. Diese Routinen werden also, bezogen auf Fig. 12 und 13, immer in den Drehstellungsbereichen von 0° bis ca. 10° und von 180° bis ca. 190° aktiv, wo der Motor 25 ohnedies stromlos sein sollte. Beide Routinen sind mit Vorteil zeitlich gleich lang, was durch die erläuterten NOP-Befehle erreicht werden kann.

In Fig. 19 wird bei S164 geprüft, ob das Register SENSAB = H ist, vgl. S142 in Fig. 16. In diesem Fall wird bei S165 der Wert PI auf Null gesetzt, was nachfolgend bei Fig. 16 oder 17 bewirkt, daß der Strom schon bei KZ = 0 eingeschaltet wird, also der Motor mit maximaler Leistung und folglich maximaler Drehzahl läuft. Ein Sensorabriß (Fig. 1: Unterbrechung an Stelle 54 oder 55) hat also die Folge, daß sich der Motor wie ein normaler, ungeregelter Motor verhält.

Falls $U_{dif}$ irgendwann wieder zu H wird, wird SENSAB wieder auf L gesetzt (S140 in Fig. 16), und die Drehzahl wird dann wieder geregelt.

Falls kein Sensorabriß vorliegt, wird bei S166 der zuvor ermittelte Faktor P mit dem Vorzeichensignal REG multipliziert, und anschließend wird gemäß der Formel

$$PI = I + 2P$$

der Wert PI ermittelt, Funktion siehe Fig. 21d.

Bei S167 wird geprüft, ob der Faktor I größer als ein Schwellwert S1 ist, z.B. größer als 240. Falls Ja, wird bei S168 der Faktor I auf den Wert R 1 zurückgesetzt, z.B. auf 208. Dies verhindert, daß bei niedrigen Drehzahlen Alarm gegeben wird, d.h. der Zähler für 1 kann in diesem Fall nicht den Wert 255 erreichen, da durch das Rücksetzen sein Zählerstand künstlich niedrig gehalten wird. (Bei Erreichen von I = 255 wird, wie erläutert, PI auf 0 gesetzt und der Motor läuft mit maximaler Drehzahl).

Ist der Faktor I kleiner als der Schwellwert S1, so wird er unverändert gelassen, Schritt S169.

Bei S170 wird in analoger Weise geprüft, ob der Wert PI negativ ist, und falls Ja, wird er bei S171 auf Null zurückgesetzt. Andernfalls bleibt er unverändert (S172).

Bei S173 erfolgt die Prüfung, ob die untere Grenzdrehzahl (Fig. 2: $n_{min}$) unterschritten ist, und ob der Faktor I größer als KZMIN (vgl. S130 in Fig. 15) ist.

Falls nicht, geht das Programm direkt zum Schritt S131 zurück.

Falls eine Überschreitung vorliegt, geht der Regler im Schritt S174 auf eine P-Regelung über, d.h. der Wert PI wird auf zweimal KZMIN minus KZ gesetzt. Auf diese Weise wird verhindert, daß die Drehzahl n unter den unteren Grenzwert $n_{min}$ (Fig. 2) sinkt.

Der mit der Routine 163 errechnete Wert PI wird anschließend in Fig. 16 und/oder Fig. 17 verwendet, ggf. während mehrerer aufeinanderfolgender Zyklen, wie bereits bei Fig. 12 und 13 erläutert, d.h. auch nach dem Schritt S174 geht das Programm zurück zum Schritt S131 (Fig. 15).

Fig. 20 zeigt die Alarm-Routine 162. In einem Schritt S240 wird der Wert für die Alarmverzögerung AVZ um den Wert 1 reduziert, und anschließend wird bei S242 geprüft, ob AVZ = 0 ist. Falls ja, geht das Programm zu Schritt S175. Dort wird geprüft, ob der Wert KZ größer ist als die Summe von KZMIN und einem Schwellwert S2, der z.B. den Wert 47 haben kann. Diese Summe kann z.B. einer Drehzahl von 1200 U/min entsprechen. Wird diese Summe überschritten, so wird der Ausgang 14 ("ALARM") des Mikroprozessors 20 auf H gesetzt (Schritt S176), und ein Alarm wird ausgelöst. Ist die Summe nicht überschritten, so geht das Programm zum Schritt S244, wo geprüft wird, ob der Ausgang 4 (SEN) des Mikroprozessors 20 hoch ist. Falls ja, wird ein gesetzter Alarm nicht gelöscht, sondern weiter gespeichert. Falls nein, wird das Signal ALARM rückgesetzt, also gelöscht (Schritt S177).

Falls in S242 AVZ größer als 0 ist (AVZ hat einen Minimalwert von 0), so geht das Programm von dort direkt zum Schritt S131 (Fig. 15) zurück, und dies gilt ebenso bei SEN = H, ebenso nach den Schritten S176 oder S177.

Wie in einer Vorbemerkung zu den Fig. 16 und 17 bereits ausführlich dargelegt, dienen die Programmschleifen gemäß Fig. 16 und 17 auch zur Zeitmessung, d.h. diese Schleifen sind so ausgelegt, daß jeder Durchlauf durch eine Schleife, egal auf welchem Weg, die gleiche Zeit erfordert, so daß mittels dieser Schleifen eine Zeitmessung möglich ist. Dabei sind die Durchlaufzeiten für die Schleifen nach Fig. 16 und Fig. 17 nach Möglichkeit identisch.
Erreicht wird dies durch die Einfügung von NOP-Befehlen dort, wo sonst ein Schleifendurchlauf zu kurz würde. (NOP = No operation; ein NOP-Befehl bewirkt nichts, außer einer zeitlichen Verzögerung des Programmablaufs. Naturgemäß kann man statt eines NOP-Befehls jede andere Art von Befehl verwenden, die auf den Lauf des Motors ohne Einfluß ist.) Die Verwendung von NOP-Befehlen ist dargestellt in den Fig. 22 und 23. Fig. 22 ist - bis auf die NOP-Befehle - identisch mit Fig. 16, und Fig. 23 ist - bis auf die NOP-Befehle - identisch mit Fig. 17. Die Teile aus den Fig. 16 und 17 werden deshalb nicht nochmals beschrieben.

In Fig. 22 ist zwischen dem JA-Ausgang des Schritts S133 und dem Knotenpunkt 249 ein NOP-Befehl S250 eingefügt, der die gleiche Zeitdauer hat wie der Schritt S134, so daß sich für die Ausgangssignale JA und NEIN des Schritts S133 dieselbe Zeitdauer des Durchlaufs bis zum Knotenpunkt 252 ergibt.

Zwischen dem NEIN-Ausgang des Schritts S138 und dem NEIN-Ausgang des Schritts S210 liegt ein NOP-Befehl S254, dessen Zeitdauer der Zeitdauer von S210 entspricht.

Zwischen dem NEIN-Ausgang des Schritts S210 und dem NEIN-Ausgang des Schritts S139 liegen mehrere NOP-Befehle S256, deren Zeitdauer der des Schritts S139 entspricht. (Durch das Durchlaufen mehrerer NOP-Befehle 256 ergibt sich eine entsprechend längere zeitliche Verzögerung.)

Zwischen dem NEIN-Ausgang des Schritts S141 und dem Eingang des Schritts S143 liegt ein NOP-Befehl S258, dessen Zeitdauer derjenigen des Schritts S142 entspricht.

Man erkennt also, daß die Schleife nach Fig. 22 für jeden Durchlauf dieselbe Zeit benötigt, unabhängig davon, welche Schritte im einzelnen Fall durchlaufen werden.

Fig. 23 ist - bis auf die NOP-Befehle - identisch mit Fig. 17. Deshalb werden die Teile aus Fig. 17 nicht erneut beschrieben. In Fig. 23 ist zwischen dem JA-Ausgang des Schritts S148 und dem Knotenpunkt 260 ein NOP-Befehl S262 eingefügt, der die gleiche Zeitdauer hat wie der Schritt S149, so daß sich für die Ausgangssignale JA und NEIN des Schritts S148 dieselbe Zeitdauer des Durchlaufs bis zum Knotenpunkt 264 ergibt.

Zwischen dem JA-Ausgang des Schritts S152 und dem Knotenpunkt 266 liegt ein NOP-Befehl 268, dessen Zeitdauer dem Schritt S224 entspricht.

Zwischen dem NEIN-Ausgang des Schritts S222, also dem Knotenpunkt 270, und dem Ausgang 272 des Schritts S153, liegen NOP-Befehle S274, deren kombinierte Zeitdauer der Zeitdauer des Schritts S153 entspricht.

Man erkennt also, daß die Schleife nach Fig. 23 für jeden Durchlauf, egal auf welchem Weg, stets dieselbe Zeit benötigt, unabhängig davon, welche Schritte im einzelnen Fall durchlaufen werden.

Wie bereits erläutert, ist die Durchlaufzeit für die Schleife nach Fig. 22 identisch mit der Durchlaufzeit für die Schleife nach Fig. 23. Dies kann ggf. dadurch erreicht werden, daß in Fig. 22 zwischen den JA-Ausgang des Schritts S144 und den Eingang des Schritts S133 ein oder mehrere NOP-Befehle eingeschaltet werden, oder alternativ in Fig. 23 zwischen den JA-Ausgang des Schritts S155 und den Eingang des Schritts S147.

Selbstverständlich sollte die Durchlaufzeit für die Schleifen nach Fig. 22 und 23 möglichst kurz sein. Dies hängt von der Taktfrequenz des Mikroprozessors 20 ab. Bei dem verwendeten Mikroprozessor 17103GS mit einer Taktfrequenz von 6 MHz ergaben sich folgende Zeiten:

> Zeit für den Durchlauf einer Schleife nach Fig. 22 oder nach Fig. 23 (50 Befehle): 133 µs
> Zeit für den Ablauf nach Fig. 19 (38 Befehle): 102 µs
> Zeit für den Ablauf nach Fig. 20 (35 Befehle): 93 µs

Fig. 24 zeigt in grafischer Darstellung den Durchlauf mehrerer Schleifen im Verlauf der Kommutierungsvorgänge. In Fig. 24a ist das Kommutierungssignal KOMM dargestellt (analog Fig. 21a), und zum Zeitpunkt $t_{270}$ wird angenommen, daß in Fig. 18, Schritt S160, der Zählerstand PZ = 13 erreicht wurde. Deshalb schließt sich in der Berechnungsphase 70 (vgl. Fig. 12) die Berechnung des Wertes PI gemäß Fig. 19 an.

Anschließend an die Berechnungsphase 70 folgen nun Schleifendurchläufe gemäß Fig. 23, und sofern z.B. für PI der Wert 1 errechnet wurde, wird der Strom $i_1$ nach Ablauf des ersten Schleifendurchlaufs zum Zeitpunkt $t_{272}$ eingeschaltet. Abgeschaltet wird er nach Ende des Schleifendurchlaufs (n - x) zum Zeitpunkt $t_{274}$, also vor der Änderung des Kommutierungssignals KOMM. Dies wurde bereits aufführlich beschrieben und wird deshalb hier nicht wiederholt. Die Größe x hat bei Fig. 24 den Wert 1, d.h. der Strom $i_1$ wird nach der vorletzten Schleife abgeschaltet.

Zum Zeitpunkt $t_{276}$ ändert sich das Kommutierungssignal auf H, und in Fig. 18 wird der Zählerstand PZ = 14 erreicht. In der Berechnungsphase 76 (vgl. Fig. 12) wird daher erneut der Wert PI gemäß Fig. 19 errechnet, und gemäß diesem Wert PI wird zum Zeitpunkt $t_{278}$ der Strom $i_2$ eingeschaltet, also zum Beispiel nach dem ersten Schleifendurchlauf gemäß Fig. 22, sofern sich für PI der Wert 1 ergeben hat. Abgeschaltet wird der Strom $i_2$ nach Ende des Schleifendurchlaufs (n - x) zum Zeitpunkt $t_{280}$, also zeitlich vor der Änderung des Signals KOMM. Dies wurde bereits ausführlich beschrieben und wird deshalb hier nicht wiederholt. (Schritte S134 und S135 in Fig. 16; Schritte S149 und S150 in Fig. 17). Die Größe x hat auch hier als Beispiel den Wert 1, d.h. der Strom $i_2$ wird nach Ende der vorletzten Schleife abgeschaltet.

Zum Zeitpunkt $t_{282}$ ändert sich das Signal KOMM (Fig. 24a) auf L, und in Fig. 18 wird gleichzeitig der Zählerstand PZ = 15 erreicht. Dies bedeutet, daß in der anschließenden Berechnungsphase 80 (vgl. Fig. 12) das Alarmsignal gemäß Fig. 20 berechnet wird. Anschließend werden dann erneut die Schleifen gemäß Fig. 23 durchlaufen. Der Wert PI wird in diesem Fall aus der Berechnungsphase 76 unverändert übernommen, wie bereits bei Fig. 12 beschrieben.

Der Kommutierungszähler KZ zählt also jeweils die Zahl der Schleifen gemäß Fig. 22 oder 23, die durchlaufen werden, und bestimmt daraus angenähert den zeitlichen Abstand zwischen aufeinanderfolgenden Kommutierungszeitpunkten, z.B. zwischen den Zeitpunkten $t_{270}$, $t_{276}$, $t_{282}$ etc. Da jede Schleife eine vorgegebene Zeitdauer hat, mißt also der Kommutierungszähler KZ eine Zeitdauer.

Die Berechnungsphasen 70, 70, 76, 80 etc. haben eine vorgegebene Zeitdauer, d.h. mit zunehmender Drehzahl des Motors nimmt ihr prozentualer Anteil an der Zeitdauer zwischen zwei Kommutierungssignalen (z.B. zwischen $t_{270}$ und $t_{276}$ in Fig. 24) zu, was vorteilhaft ist. Die Berechnungsphasen bewirken eine Stromlücke, die besonders bei zweipulsigen Motoren von Vorteil ist, speziell bei hohen Drehzahlen und folglich hohen Amplituden der Ströme $i_1$ und $i_2$. Wenn z.B. in Fig. 24c die Amplitude des Stomes $i_1$ so hoch ist, daß dieser zum Kommutierungszeitpunkt $t_{276}$ noch nicht auf 0 abgesunken ist, so stört das nicht, da dieser Strom $i_1$ erst am Ende der Berechnungsphase 76 den Wert 0 erreicht haben muß, denn frühestens zu diesem Zeitpunkt kann der Strom $i_2$ eingeschaltet werden. (Die Ströme $i_1$ und $i_2$ sollten nicht gleichzeitig fließen, da dies zu starken Funkstörungen und Motorgeräuschen führen kann und den Wirkungsgrad des Motors verschlechtert. Auch würden hierdurch hohe Bremsmomente entstehen.) Analoges gilt für den Strom $i_2$, der erst innerhalb der Berechnungsphase 80 den Wert 0 erreicht zu haben braucht.

Wie bereits an einem Zahlenbeispiel dargelegt, kann die Dauer der Berechnungsphasen 70, 76, 80 etc. etwas differieren, je nachdem, ob eine Berechnung des PI-Wertes (Fig. 19) oder eine Alarmberechnung (Fig. 20) durchgeführt wird. Die Differenzen in der Dauer der Berechnungsphasen liegen gewöhnlich in der Größenordnung einiger µs, so daß sie auf den Lauf des Motors keinen Einfluß haben. Man könnte aber auch die Berechnungsphasen mittels NOP-Befehlen gleich lang machen, sofern das gewünscht wird.

Die Durchlaufzeiten durch die Schleifen nach Fig. 22 und 23 sollten dagegen möglichst exakt gleich lang sein, da die Schleifendurchläufe im Kommutierungszähler KZ aufsummiert werden und sich folglich auch kleinere Differenzen bei der Summenbildung aufsummieren und zu einem unruhigen Lauf des Motors führen können. Beträgt z.B. die zeitliche Differenz zwischen einem Schleifendurchlauf der Fig. 22 und einem Schleifendurchlauf der Fig. 23 drei µs, und die Schleifen werden jeweils 50 mal durchlaufen, so ergibt sich eine zeitliche Differenz von 50 x 3 µs = 150 µs, was mehr als der Zeitdauer eines vollen Schleifendurchlaufs entsprechen würde. Solche Fehler müssen vermieden werden, wenn ein ruhiger Lauf des Motors erwünscht ist.

Fig. 25 zeigt die Schaltung analog Fig. 1 bei Auslegung des Motors auf maximale Drehzahl, also ohne Drehzahlregelung. Der Eingang 6 des Mikroprozessors 20 ist über einen Widerstand 286 mit der Minusleitung 46 verbunden. Dies entspricht einem ständigen Wert von $U_{dif} = 0$, also dem Bruch der Zuleitung zum Sensor 26 an der Stelle 54 oder 55 der Fig. 1. In diesem Fall läuft der Motor ungeregelt mit maximaler Drehzahl, d.h. gemäß Schritt S165 in Fig. 19 wird PI = 0 gesetzt, und es fließt ein Motorstrom direkt ab dem Ende der jeweiligen Berechnungsphase 70, 76, 80 etc. (Fig. 12 und 24).

Die anderen Funktionen des Motors bleiben aber auch bei Fig. 25 unverändert erhalten, d.h. der Motor kann leistungslos ein- und ausgeschaltet werden (Schritt S132 in Fig. 15), die Alarmfunktion arbeitet unverändert, wie anhand von Fig. 20 beschrieben, ebenso die Blockiersicherung (Schritte S214, S216 in Fig. 16; Schritte S228, S230 in Fig. 17). Mittels der in Fig. 5 dargestellten Eingänge NG0, NG1 können verschiedene Alarmdrehzahlen programmiert werden. Mittels des Eingangs SEN (Fig. 5) kann gemäß Fig. 20 die Alarmspeicherung programmiert werden, und mittels des Eingangs ATS die Alarmverzögerung. In diesem Fall übernimmt also der Mikroprozessor 20 die Kommutierung, die Blockiersicherung, und die Alarmüberwachung, während eine Drehzahlregelung entfällt. Die Drehzahl des Motors wird in diesem Fall vorgegeben durch die Betriebsspannung, und durch die Auslegung der Wicklung des Motors. Es hat sich gezeigt, daß diese Variante in vielen Fällen ausreicht und eine preiswerte Alternative darstellt, besonders im Hinblick auf die Alarmüberwachung und die Blockiersicherung, welche beide von dem Mikroprozessor übernommen werden, der auch die Kommutierung des Motors steuert.

Naturgemäß sind vielfache Abweichungen und Modifikationen möglich. Die analoge Vorrichtung zur Berechnung der Regelabweichung kann auch durch eine digital arbeitende Vorrichtung nach dem gleichen Prinzip ersetzt werden, wobei dann als Speicherglied beispielsweise ein Zähler verwendet werden kann, der bei Erreichen eines bestimmten temperaturabhängigen Grenzwerts ein Signal $U_{dif}$ abgibt. Das Prinzip bleibt genau dasselbe. Jedoch wird die analoge Messung derzeit bevorzugt, da sie außerordentlich einfach ist und keinen Analog-Digital-Wandler, z.B. für die Temperatur, erfordert.

Im vorstehend beschriebenen Ausführungsbeispiel für einen zweipoligen Rotor 27 wurden die Drehstellungswerte in mechanischen Graden angegeben, z.B. 180°. Bei einem Rotor mit mehr als einem Polpaar müssen diese Werte durch elektrische Grade ersetzt werden, also z.B. statt 180° dann 180° el. (electrical degrees), wie das dem Fachmann des Elektromaschinenbaus geläufig ist.

**Patentansprüche**

1. Verfahren zur Beeinflussung der Drehzahl eines elektronisch kommutierten Gleichstrommotors, mit folgenden Schritten:

   a) Beginnend ab einer ersten vorgegebenen Rotorstellung (Fig. 12: 0° oder 360° el.) wird eine zeitabhängig variable Größe zeitabhängig verändert;
   b) diese Größe wird mit einer Vergleichsgröße verglichen, um bei einem vorgegebenen Vergleichskriterium ein Vergleichssignal (Udif) zu erzeugen;
   c) ein Stellungszeitpunkt (Fig. 6: t12; Fig. 8: t18; Fig. 21: t30; Fig. 24: t276) wird ermittelt, an dem der Rotor, ausgehend von der ersten vorgegebenen Rotorstellung, einen vorgegebenen Drehwinkel (Fig. 12: KOMM=L) durchlaufen hat;
   d) die zeitliche Differenz (Td) zwischen dem Beginn des Vergleichssignals (Udif) und dem Stellungszeitpunkt,oder ein dieser zeitlichen Differenz angenäherter Wert (Td'), wird ermittelt;
   e) es wird ermittelt, ob der Beginn des Vergleichssignals (Udif) vor oder nach diesem Stellungszeitpunkt liegt, und eine entsprechende Drehzahlinformation (REG) wird erzeugt;
   f) ausgehend vom Wert dieser zeitlichen Differenz (Td) bzw. des ihr angenäherten Werts (Td'), und dem Wert der Drehzahlinformation (REG), werden nach mindestens einer vorgegebenen Regel Einschaltung und/ oder Abschaltung eines Stromes (i1, i2) im Stator des elektronisch kommutierten Motors zeitlich gesteuert;
   g) im Zeitraum zwischen der Erzeugung des Vergleichssignals (Udif) und dem darauffolgenden erneuten Beginn der Veränderung der zeitabhängig variablen Größe wird letztere auf einen Anfangswert gesetzt.

2. Verfahren nach Anspruch 1, bei welchem die erste Rotorstellung einer Kommutierungsstellung des Motors entspricht.

3. Verfahren nach Anspruch 1 oder 2, bei welchem die Vergleichsgröße von einer zu beeinflussenden Größe abhängig ist, insbesondere von einer Temperatur.

4. Verfahren nach einem oder mehreren der vorhergehenden Ansprüche, bei welchem der vorgegebene Drehwinkel mindestens nahezu dem Abstand zwischen zwei aufeinanderfolgenden Kommutierungsstellungen des Motors entspricht.

5. Verfahren nach einem oder mehreren der Ansprüche 1 bis 4, bei welchem als zeitabhängig variable Größe die Spannung (Uc) an einem Kondensator (C) verwendet wird, dessen Ladungszustand zeitabhängig verändert wird.

6. Verfahren nach einem oder mehreren der Ansprüche 1 bis 5, bei welchem die zeitabhängige Größe entweder direkt nach Beginn des Vergleichssignals (Udif) oder dann auf einen Anfangswert gesetzt wird, wenn eine vorgegebene Rotorstellung (Fig. 12: 0° oder 180° el.) zeitlich mit dem Vorhandensein des Vergleichssignals (Udif) zusammenfällt.

7. Verfahren nach einem oder mehreren der vorhergehenden Ansprüche, bei welchem der Beginn der zeitabhängigen Veränderung der zeitabhängig variablen Größe (Uc) durch das Erreichen einer vorgegebenen Rotorstellung (Fig. 12: Etwa 10° el.) oder einer aus einer Mehrzahl von vorgegebenen Rotorstellungen gestartet wird.

8. Verfahren nach einem oder mehreren der vorhergehenden Ansprüche, bei welchem während der Erfassung der zeitlichen Differenz (Td, Td') ein Regelparameter, insbesondere der P-Faktor einer Proportionalregelung und/oder der I-Faktor einer Integralregelung, fortlaufend im Sinne einer Anpassung an die Drehzahlinformation (REG) und die gemessene zeitliche Differenz (Td, Td') verändert wird, so daß nach Ablauf dieser zeitlichen Differenz (Td, Td') ein geänderter Regelparameter vorliegt.

**9.** Verfahren nach Anspruch 8, bei welchem in einem ersten Drehwinkelbereich des Rotors (Fig. 13: Ab 180° el.) der mindestens eine Parameter (P, I) dann verändert wird, wenn die Drehzahl des Motors zu hoch ist, und in einem vom ersten Drehwinkelbereich verschiedenen zweiten Drehwinkelbereich (Fig. 12: Vor 180° el.) der mindestens eine Parameter dann verändert wird, wenn die Drehzahl zu niedrig ist.

**10.** Verfahren nach Anspruch 8 oder 9, bei welchem der mindestens eine Parameter bei zu niedriger Drehzahl (Fig. 12) am Ende eines Kommutierungszyklus (KOMM=L) und bei zu hoher Drehzahl (Fig. 13) zu Beginn eines Kommutierungszyklus (KOMM=H) verändert wird.

**11.** Verfahren nach einem oder mehreren der vorhergehenden Ansprüche, bei welchem, insbesondere bei einem ein- oder zweisträngigen kollektorlosen Motor, Rechenschritte, z.B. für die Berechnung einer Stellgröße (PI) für den Regelvorgang, oder für die Berechnung eines Alarmsignals bei Drehzahlunterschreitung, innerhalb mindestens eines vorgegebenen Drehstellungsbereichs (Fig. 12: Etwa 0 bis 10° el. und etwa 180 bis 190° el.) des Rotors ausgeführt werden, während dessen mindestens ein Strang des Motors und bevorzugt alle Stränge (31, 32) des Motors stromlos ist bzw. sind.

**12.** Verfahren nach Anspruch 11, bei welchem in dem vorgegebenen Drehstellungsbereich in zeitlichen Abständen unterschiedliche Rechenschritte ausgeführt werden,
z.B. einmal die Berechnung einer Stellgröße (Fig. 19), und ein anderes Mal die Prüfung, ob eine Drehzahlunterschreitung vorliegt, bei der ein Alarm ausgelöst werden muß (Fig. 20).

**13.** Verfahren nach einem oder mehreren der vorhergehenden Ansprüche, mit folgenden Schritten :

a) in einer der Bestromung eines vorgegebenen Stranges vorhergehenden Zeitspanne wird der zeitliche Abstand zwischen zwei aufeinanderfolgenden Kommutierungszeitpunkten (Fig. 3: ta, tb), oder ein diesem zeitlichen Abstand etwa entsprechender Wert (Fig. 21: KZalt) - im folgenden Kommutierungs-Zeitwert genannt - erfaßt und gespeichert;
b) bei der Bestromung eines vorgegebenen Stranges wird die Zeitdauer der Bestromung etwa ab dem Zeitpunkt der Kommutierung fortlaufend erfaßt (Zähler KZ) ;
c) bei Erreichen einer Zeitdauer (KZ'alt) der Bestromung, welche um eine vorgegebene Zeitspanne (D) kleiner ist als der Kommutierungs-Zeitwert (KZalt), wird die Bestromung dieses Stranges abgeschaltet.

**14.** Verfahren nach Anspruch 13, bei welchem die vorgegebene Zeitdauer (D) konstant ist.

**15.** Verfahren nach Anspruch 13, bei welchem die vorgegebene Zeitdauer (D) durch das Ausgangssignal eines Drehzahlreglers variiert wird.

**16.** Verfahren nach einem oder mehreren der Ansprüche 13 bis 15, bei welchem der Abschaltvorgang der Bestromung durch Verzögerungsmittel (Fig. 14: 35, 36, 37, 38, 123, 124) im Bereich von Endstufentransistoren (33, 34) verlangsamt wird.

**17.** Verfahren nach einem oder mehreren der vorhergehenden Ansprüche, mit folgenden Schritten:

a) Schritte (Fig. 12; Fig. 17), welche einem Zustand mit zu niedriger Drehzahl zugeordnet sind, werden mindestens teilweise in mindestens einem ersten vorgegebenen Drehstellungsbereich (Fig. 12: Von etwa 10 bis 180° el.) des Rotors ausgeführt;
b) Schritte (Fig. 13; Fig. 16), welche einem Zustand mit zu hoher Drehzahl zugeordnet sind, werden mindestens teilweise in mindestens einem zweiten vorgegebenen Drehstellungsbereich (Fig. 13: Von etwa 190 bis 360° el.) des Rotors ausgeführt, welcher zweite Drehstellungsbereich vom ersten Drehstellungsbereich verschieden ist.

**18.** Verfahren nach Anspruch 17, bei welchem Schritte (Fig. 19, Fig. 20), welche einem Zustand mit zu hoher Drehzahl und einem Zustand mit zu niedriger Drehzahl gemeinsam sind, während mindestens eines dritten vorgegebenen Drehstellungsbereichs (Fig. 12 und 13: 0 bis etwa 10° el., und 180 bis etwa 190° el.) ausgeführt werden, welcher vom ersten und zweiten Drehstellungsbereich verschieden ist.

**19.** Verfahren nach einem oder mehreren der Ansprüche 3 bis 18, bei welchem dann, wenn bei einem durch eine Temperatur hinsichtlich seiner Drehzahl geführten Motor (25) die Drehzahl (n) infolge niedriger Temperatur niedrig ist, die Größe des Integralfaktors (I) einer Integralregelung oder einer Proportional-Integral-Regelung bei Überschreiten eines Grenzwerts (Fig. 19: S1) auf einen niedrigeren Wert (Fig. 19: R1) zurückgesetzt wird.

**20.** Verfahren nach einem oder mehreren der vorhergehenden Ansprüche, bei welchem dann, wenn bei der Erfassung der Zeitspanne (Td) zwischen dem Stellungszeitpunkt (Fig. 8: t18) und einem nachfolgenden Beginn des Vergleichssignals (Udif) die erfaßte Zeitspanne (Td) etwa dem zeitlichen Abstand zwischen zwei Kommutierungszeitpunkten entspricht, die Drehzahl des Motors auf einen hohen Wert umgeschaltet wird (Fig. 19: Schritte S164, S165).

**21.** Verfahren nach Anspruch 20, bei welchem in diesem Fall der Motor auf Betrieb als ungeregelter Motor mit voller Leistung umgeschaltet wird.

**22.** Verfahren nach einem oder mehreren der vorhergehenden Ansprüche, mit folgenden Merkmalen:

a) bei der Bestromung eines vorgegebenen Stranges wird die Zeitdauer (KZ) der Kommutierungsphase etwa ab der Kommutierung zu Beginn dieser Kommutierungsphase bis etwa zur Kommutierung am Ende dieser Kommutierungsphase fortlaufend digital erfaßt;
b) diese Zeitdauer (KZ) wird mit einem vorgegebenen Schwellenwert (Fig. 16,17, 22, 23: S3) verglichen;
c) wenn diese Zeitdauer (KZ) den Schwellenwert (S3) überschreitet, so wird der Motor während eines vorgegebenen Zeitintervalls stromlos gemacht (Fig. 16: S214, S216; Fig. 17: S228, S230);
d) nach Ablauf des vorgegebenen Zeitintervalls wird ein neues Einschalten des Motors versucht.

**23.** Verfahren nach Anspruch 22, bei welchem nach Ablauf des vorgegebenen Zeitintervalls ein Alarmsignal (ALARM) gesetzt wird (Fig. 20: S176).

**24.** Verfahren nach Anspruch 22 oder 23, bei welchem die Zeitdauer (KZ) der Kommutierungsphasen für mehr als einen Strang (31, 32) fortlaufend erfaßt und jeweils mit dem Schwellenwert (S3) verglichen wird.

**25.** Verfahren nach einem oder mehreren der vorhergehenden Ansprüche, bei welchem während einer Kommutierungsphase mehrfach eine Programmschleife (Fig. 16, 17) vorgegebener zeitlicher Dauer durchlaufen und jeder Durchlauf in einem Schleifenzähler (KZ) gezählt wird.

**26.** Verfahren nach Anspruch 25, bei welchem die Schleifen (Fig. 16, 17, 22, 23) verschiedener Kommutierungsphasen verschiedene Programmstrukturen aufweisen.

**27.** Verfahren nach Anspruch 25 oder 26, bei welchem der Schleifenzähler (KZ) mindestens einen Vorgang im Verlauf einer Kommutierungsphase steuert, z.B. Einschalten eines Stromes (S133), Ausschalten eines Stromes (S134) und/oder Überwachung einer Mindestdrehzahl (S212).

**28.** Verfahren nach einem oder mehreren der Ansprüche 25 bis 27, bei welchem die Programmschleife einen Meßalgorithmus (S137, 138, 139) zur Erfassung einer einer Regelabweichung entsprechenden zeitlichen Differenz (Td, Td') aufweist.

**29.** Verfahren nach Anspruch 28, bei welchem der Meßalgorithmus Schritte (S139; S153) zur Anpassung eines Regelparameters (I, P) an die erfaßte, einer Regelabweichung entsprechende zeitliche Differenz (Td, Td') aufweist.

**30.** Verfahren nach Anspruch 28 oder 29, bei welchem der Meßalgorithmus (S139; S153) in Form einer Verzweigung in der zugeordneten Programmschleife (Fig. 16, 17, 22, 23) enthalten ist, welche Verzweigung nur während der Dauer der zeitlichen Differenz (Td, Td') durchlaufen wird.

**31.** Verfahren nach Anspruch 30, bei welchem die zeitliche Dauer für das Durchlaufen einer Programmschleife mindestens nahezu unabhängig davon ist, ob die Verzweigung durchlaufen wird oder nicht.

**32.** Verfahren nach einem oder mehreren der vorhergehenden Ansprüche, mit folgenden Merkmalen:

a) bei der Bestromung eines vorgegebenen Stranges wird die Zeitdauer (KZ) der Kommutierungsphase etwa ab der Kommutierung zu Beginn dieser Kommutierungsphase bis etwa zur Kommutierung am Ende dieser Kommutierungsphase fortlaufend erfaßt;
b) diese Zeitdauer (KZ) wird mit einem vorgegebenen Schwellenwert (Fig. 16, 17, 22, 23: S3) verglichen;
c) wenn diese Zeitdauer (KZ) den Schwellenwert (S3) überschreitet, wird, ggf. unter Berücksichtigung zusätzlicher Parameter, ein Alarmsignal (ALARM) gesetzt (Fig. 20: S176).

**33.** Verfahren nach Anspruch 32, bei welchem etwa während der Dauer einer Kommutierungsphase nacheinander mehrfach eine Programmschleife (Fig. 22, 23) vorgegebener zeitlicher Dauer durchlaufen und jeder Schleifendurchlauf in einem Zähler (KZ) erfaßt wird, um die Zeitdauer dieser Kommutierungsphase fortlaufend zu erfassen.

**34.** Kollektorloser Gleichstrommotor (25) mit einer Anordnung zum Beeinflussen seiner Drehzahl (n), mit folgenden Merkmalen:

a) ein Speicherglied, insbesondere ein Kondensator (C), ist vorgesehen, und das Signal (Uc) an diesem Speicherglied (C) wird jeweils ab Erreichen einer ersten vorgegebenen Drehstellung (Fig. 21: KZ = 0) des Rotors (27) zeitabhängig verändert (Fig. 21b);
b) ein Vergleichsglied (57) ist vorgesehen, an welchem dieses erste Signal (Uc) mit einem zweiten Signal verglichen wird, um bei einem vorgegebenen Vergleichskriterium ein Vergleichssignal (Udif) zu erzeugen;
c) ein Meßglied (20, KZ) ist vorgesehen, um die zeitliche Differenz (Td, Td') zwischen dem Beginn (Fig. 6: t11; Fig. 8: t19) dieses Vergleichssignals (Udif) und einer nach dem Durchlaufen eines vorgegebenen Drehwinkels erreichten zweiten Drehstellung (Fig. 6: t12; Fig. 8: t18) des Rotors, oder umgekehrt, zu erfassen;
d) ein Drehzahl-Erfassungsglied ist vorgesehen, um zu erfassen, ob das Erreichen der zweiten vorgegebenen Drehstellung vor oder nach der Erzeugung des Vergleichssignals (Udif) liegt;
e) ein Berechnungsglied (20) ist vorgesehen, welches nach mindestens einer vorgegebenen Regel anhand der Größe der zeitlichen Differenz (Td, Td') und dem vom Drehzahl-Erfassungsglied erfaßten Wert den Einschaltzeitpunkt (Fig. 21: KZ = PI) und/oder den Ausschaltzeitpunkt (Fig. 21: KZ = KZ'alt) eines zum Antrieb des Motors dienenden Statorstroms (i1, i2) beeinflußt;
f) eine Anordnung ist vorgesehen, um das Signal am Speicherglied (C) vor Beginn der zeitabhängigen Veränderung auf einen Anfangswert zu setzen.

**35.** Motor nach Anspruch 34, bei welchem das Speicherglied (C) entweder direkt nach Beginn des Vergleichssignals (Udif) oder dann auf den Anfangswert zurückgesetzt wird (Fig. 21b, links), wenn eine vorgegebene Rotorstellung zeitlich mit dem Vorhandensein des Vergleichssignals (Udif) zusammenfällt.

**36.** Motor nach Anspruch 34 oder 35, bei welchem die vorgegebene Rotorstellung - im folgenden Kommutierungsstellung genannt - eine solche ist, bei welcher ein für die Motorsteuerung dienendes drehstellungsabhängiges digitales Signal (KOMM) seinen Wert ändert.

**37.** Motor nach den Ansprüchen 34 und 36, bei welchem die erste vorgegebene Drehstellung des Rotors (27) eine erste Kommutierungsstellung und die nach Durchlaufen des vorgegebenen Drehwinkels erreichte zweite Drehstellung des Rotors die auf die erste Kommutierungsstellung folgende nächste Kommutierungsstellung ist.

**38.** Motor nach Anspruch 36 oder 37, bei welchem die erste vorgegebene Drehstellung des Rotors eine Kommutierungsstellung ist, bei welcher sich das für die Motorsteuerung dienende Signal (KOMM) in einer vorgegebenen Weise ändert, z.B. von hoch (H) nach niedrig (L).

**39.** Motor nach einem oder mehreren der Ansprüche 34 bis 38, mit folgenden Merkmalen:

a) eine Vorrichtung ist vorgesehen, welche die Zeitdauer (KZ) einer Kommutierungsphase etwa ab der Kommutierung zu Beginn dieser Kommutierungsphase bis etwa zur Kommutierung am Ende dieser Kommutierungsphase fortlaufend erfaßt;
b) eine Vorrichtung zum Vergleich dieser Zeitdauer (KZ) mit einem vorgegebenen Schwellenwert (Fig. 16, 17, 22, 23: S3) ist vorgesehen;
c) eine Vorrichtung ist vorgesehen, welche ein Alarmsignal erzeugt (Fig. 20: S176), wenn diese Zeitdauer (KZ) den Schwellenwert (S3) überschreitet.

**40.** Motor nach Anspruch 39, bei welchem etwa während der Dauer einer Kommutierungsphase nacheinander mehrfach eine Programmschleife (Fig. 22, 23) vorgegebener zeitlicher Dauer durchlaufen und jeder Durchlauf in einem Zähler (KZ) erfaßt wird, um die Zeitdauer einer Kommutierungsphase zu erfassen.

**Claims**

**1.** Method for influencing the speed of an electronically commutated direct-current motor, with the following steps:

a) beginning from a first predetermined rotor position (fig. 12: 0° or 360° el.) a magnitude variable depending on time is altered depending on time;
b) this magnitude is compared with a comparison magnitude in order to produce a comparison signal (Udif) with a predetermined comparison criterion;
c) a position time point (fig. 6: t12; fig. 8: t18; fig. 21: t30; fig. 24: t276) is determined at which the rotor, starting from the first predetermined rotor position, has run through a predetermined rotary angle (fig. 12: KOMM = L);
d) the time difference (Td) between the beginning of the comparison signal (Udif) and the position time point, or an approximate value (Td') for this time difference, is established;
e) it is established whether the beginning of the comparison signal (Udif) lies before or after this position time point, and a corresponding speed information (REG) is produced;
f) starting from the value of this time difference (Td) or its approximate value (Td'), and the value of the speed information (REG), the time at which a current (i1, i2) in the stator of the electronically commutated motor is switched on and/or switched off is controlled according to at least one predetermined rule;
g) in the period of time between the production of the comparison signal (Udif) and the following renewed beginning of the alteration of the magnitude variable depending on time, the latter is set to an initial value.

2. Method according to claim 1, in which the first rotor position corresponds to a commutation position of the motor.

3. Method according to claim 1 or 2, in which the comparison magnitude is dependent on a magnitude to be influenced, in particular on a temperature.

4. Method according to one or more of the preceding claims, in which the predetermined rotary angle at least almost corresponds to the gap between two successive commutation positions of the motor.

5. Method according to one or more of claims 1 to 4, in which the voltage (Uc) at a capacitor (C) whose state of charge is altered depending on time, is used as the magnitude variable depending on time.

6. Method according to one or more of claims 1 to 5, in which the magnitude depending on time is set to an initial value either directly after the beginning of the comparison signal (Udif) or when a predetermined rotor position (fig. 12: 0° or 180° el.) coincides in time with the presence of the comparison signal (Udif).

7. Method according to one or more of the preceding claims, in which the beginning of the time-dependent alteration of the magnitude (Uc) variable depending on time is started by reaching a predetermined rotor position (fig. 12: approximately 10° el.) or one of a plurality of predetermined rotor positions.

8. Method according to one or more of the preceding claims, in which during the detection of the time difference (Td, Td') a control parameter, in particular the P-factor of a proportional control and/or the I-factor of an integral control, is altered continuously for the purpose of adapting to the speed information (REG) and the measured time difference (Td, Td') so that a changed control parameter is present after this time difference (Td, Td') has elapsed.

9. Method according to claim 8, in which the at least one parameter (P, I) is altered in a first rotary angle range of the rotor (fig. 13: from 180° el.) when the speed of the motor is too high, and the at least one parameter is altered in a second rotary angle range (fig. 12: before 180° el.) differing from the first rotary angle range when the speed is too low.

10. Method according to claim 8 or 9, in which the at least one parameter is altered at the end of a commutation cycle (KOMM = L) when the speed is too low (fig. 12) and at the beginning of a commutation cycle (KOMM = H) when the speed is too high (fig. 13).

11. Method according to one or more of the preceding claims, in which, in particular with a commutatorless motor with one or two phase windings, calculating steps are carried out, e.g. for calculating a setting magnitude (PI) for the control operation or for calculating an alarm signal when the speed is too low, within at least one predetermined rotary position range (fig. 12: approximately 0 to 10° el. and approximately 180 to 190° el.) of the rotor, during which at least one phase winding of the motor and preferably all the phase windings (31, 32) of the motor is or are currentless.

12. Method according to claim 11, in which in the predetermined rotary position range different calculating steps are performed at intervals of time, e.g. now the calculation of a setting magnitude (fig. 19) and now the check for the presence of too low a speed at which an alarm must be triggered (fig. 20).

13. Method according to one or more of the preceding claims, with the following steps:

a) in a period of time preceding the energisation of a predetermined phase winding the interval of time between two successive commutation points (fig. 3: ta, tb), or a value roughly corresponding to this interval of time (fig. 21: KZalt) - called the commutation time value in the following - is detected and stored;
b) when a predetermined phase winding is energised, the energisation time roughly from the time of commutation is detected continuously (counter KZ);
c) on attaining an energisation time (KZ'alt) which is less than the commutation time value (KZalt) by a predetermined period of time (D), the energisation of this phase winding is switched off.

14. Method according to claim 13, in which the predetermined period of time (D) is constant.

15. Method according to claim 13, in which the predetermined period of time (D) is varied by the output signal of a speed controller.

**16.** Method according to one or more of claims 13 to 15, in which the operation of switching off the energisation is slowed down by delaying means (fig. 14: 35, 36, 37, 38, 123, 124) in the area of final stage transistors (33, 34).

**17.** Method according to one or more of the preceding claims, with the following steps:

a) steps (fig. 12; fig. 17) which are associated with a state with too low a speed, are performed at least partly in at least one first predetermined rotary position range (fig. 12: from approximately 10 to 180° el.) of the rotor;
b) steps (fig. 13; fig. 16) which are associated with a state with too high a speed, are performed at least partly in at least one second predetermined rotary position range (fig. 13: from approximately 190 to 360° el.) of the rotor, which second rotary position range is different to the first rotary position range.

**18.** Method according to claim 17, in which steps (fig. 19, fig. 20) which are common to a state with too high a speed and to a state with too low a speed, are performed during at least one third predetermined rotary position range (figs. 12 and 13: 0 to approximately 10° el., and 180 to approximately 190° el.), which is different to the first and second rotary position ranges.

**19.** Method according to one or more of claims 3 to 18, in which when with a motor (25) whose speed is controlled by a temperature, the speed (n) is low due to low temperature, the size of the integral factor (I) of an integral control or a proportional-integral control is reset to a lower value (fig. 19: R1) when a limit value (fig. 19: S1) is exceeded.

**20.** Method according to one or more of the preceding claims, in which when during detection of the period of time (Td) between the position time point (fig. 8: t18) and a following beginning of the comparison signal (Udif) the detected period of time (Td) roughly corresponds to the time difference between two commutation points, the speed of the motor is switched to a high value (fig. 19: steps S164, S165).

**21.** Method according to claim 20, in which in this case the motor is switched to operation as an uncontrolled motor with full power.

**22.** Method according to one or more of the preceding claims, with the following features:

a) when a predetermined phase winding is energised, the length of time (KZ) of the commutation phase roughly from the commutation at the beginning of this commutation phase to the commutation at the end of this commutation phase is continuously detected digitally;
b) this length of time (KZ) is compared with a predetermined threshold value (figs. 16, 17, 22, 23: S3);
c) when this length of time (KZ) exceeds the threshold value (S3), the motor is made currentless during a predetermined interval of time (fig. 16: S214, S216; fig. 17: S228, S230);
d) an attempt is made to switch on the motor anew after the predetermined interval of time has elapsed.

**23.** Method according to claim 22, in which an alarm signal (ALARM) is set (fig. 20: S176) after the predetermined interval of time has elapsed.

**24.** Method according to claim 22 or 23, in which the length of time (KZ) of the commutation phases for more than one phase winding (31, 32) is detected continuously and in each case compared with the threshold value (S3).

**25.** Method according to one or more of the preceding claims, in which during a commutation phase a programme loop (figs. 16, 17) of predetermined duration is run through a plurality of times and each passage is counted in a loop counter (KZ).

**26.** Method according to claim 25, in which the loops (figs. 16, 17, 22, 23) of different commutation phases exhibit different programme structures.

**27.** Method according to claim 25 or 26, in which the loop counter (KZ) controls at least one operation in the course of a commutation phase, e.g. switching on a current (S133), switching off a current (S134) and/or monitoring a minimum speed (S212).

**28.** Method according to one or more of claims 25 to 27, in which the programme loop exhibits a measuring algorithm (S137, 138, 139) for detecting a time difference (Td, Td') corresponding to a control deviation.

**29.** Method according to claim 28, in which the measuring algorithm exhibits steps (S139; S153) for adapting a control parameter (I, P) to the detected time difference (Td, Td') corresponding to a control deviation.

**30.** Method according to claim 28 or 29, in which the measuring algorithm (S139; S153) is contained in the form of a branch in the associated programme loop (figs. 16, 17, 22, 23), which branch is only run through during the period of the time difference (Td, Td').

**31.** Method according to claim 30, in which the period of time for running through a programme loop is at least almost independent of whether the branch is run through or not.

**32.** Method according to one or more of the preceding claims, with the following features:

a) when a predetermined phase winding is energised, the length of time (KZ) of the commutation phase roughly from the commutation at the beginning of this commutation phase to the commutation at the end of this commutation phase is detected continuously;
b) this length of time (KZ) is compared with a predetermined threshold value (figs. 16, 17, 22, 23: S3);
c) when this length of time (KZ) exceeds the threshold value (S3), an alarm signal (ALARM) is set (fig. 20: S176), when applicable allowing for additional parameters.

**33.** Method according to claim 32, in which roughly during the length of time of a commutation phase a programme loop (figs. 22, 23) of predetermined duration is run through a plurality of times in succession and each passage through the loop is detected in a counter (KZ) in order to detect the length of time of this commutation phase continuously.

**34.** Commutatorless direct-current motor (25) with an arrangement for influencing its speed (n), with the following features:

a) a storage element, in particular a capacitor (C), is provided, and the signal (Uc) at this storage element (C) is in each case altered depending on time on reaching a first predetermined rotary position (fig. 21: KZ = 0) of the rotor (27) (fig. 21b);
b) a comparison element (57) is provided at which this first signal (Uc) is compared with a second signal in order to produce a comparison signal (Udif) with a predetermined comparison criterion;
c) a measuring element (20, KZ) is provided in order to detect the time difference (Td, Td') between the beginning (fig. 6: t11; fig. 8: t19) of this comparison signal (Udif) and a second rotary position (fig. 6: t12; fig. 8: t18) of the rotor reached after running through a predetermined rotary angle, or vice versa;
d) a speed detecting element is provided in order to detect whether the second predetermined rotary position is reached before or after the production of the comparison signal (Udif);
e) a calculating element (20) is provided which influences the switch-on point (fig. 21: KZ = PI) and/or the switch-off point (fig. 21: KZ = KZ'alt) of a stator current (i1, i2) serving to drive the motor according to at least one predetermined rule depending on the magnitude of the time difference (Td, Td') and the value detected by the speed detecting element;
f) an arrangement is provided in order to set the signal at the storage element (C) before the beginning of the time dependent alteration to an initial value.

**35.** Motor according to claim 34, in which the storage element (C) is reset to the initial value (fig. 21b, left) either directly after the beginning of the comparison signal (Udif) or when a predetermined rotor position coincides in time with the presence of the comparison signal (Udif).

**36.** Motor according to claim 34 or 35, in which the predetermined rotor position - referred to as the commutation position in the following - is one at which a digital signal (KOMM) dependent on the rotary position and serving for control of the motor changes its value.

**37.** Motor according to claims 34 and 36, in which the first predetermined rotary position of the rotor (27) is a first commutation position and the second rotary position of the rotor reached after running through the predetermined rotary angle is the next commutation position following the first commutation position.

**38.** Motor according to claim 36 or 37, in which the first predetermined rotary position of the rotor is a commutation position in which the signal (KOMM) serving for control of the motor changes in a predetermined manner, e.g. from high (H) to low (L).

**39.** Motor according to one or more of claims 34 to 38, with the following features:

a) a device is provided which continuously detects the length of time (KZ) of a commutation phase roughly from the commutation at the beginning of this commutation phase to the commutation at the end of this commutation phase;
b) a device is provided for comparing this length of time (KZ) with a predetermined threshold value (figs. 16, 17, 22, 23: S3);
c) a device is provided which produces an alarm signal (fig. 20: S176) when this length of time (KZ) exceeds the threshold value (S3).

**40.** Motor according to claim 39 in which during the length of time of a commutation phase a programme loop (figs. 22, 23) of predetermined duration is run through a plurality of times in succession and each passage is detected in a counter (KZ) in order to detect the length of time of a commutation phase.

**Revendications**

1. Procédé pour agir sur la vitesse de rotation d'un moteur à courant continu à commutation électronique, comprenant les étapes suivantes :

   a) une grandeur variable en fonction du temps est modifiée en fonction du temps en commençant à une première position prédéfinie du rotor (figure 12 : 0° ou 360° el.);
   b) cette grandeur est comparée à une grandeur comparative, afin de produire un signal comparatif (Udif) pour un critère de comparaison prédéfini ;
   c) on détermine un instant de position (figure 6; t12; figure 8 : t18; figure 21 : t30; figure 24 : t276), auquel le rotor a parcouru un angle de rotation prédéfini (figure 12: KOMM=L) en partant de la première position prédéfinie du rotor;
   d) on détermine la différence de temps (Td) entre le début du signal comparatif (Udif) et l'instant de position, ou une valeur (Td') approchant cette différence de temps ;
   e) on détermine si le début du signal comparatif (Udif) se situe avant ou après cet instant de position et on produit une information correspondante de vitesse de rotation (REG) ;
   f) en partant de la valeur de cette différence de temps (Td), ou de sa valeur approchée (Td'), et de la valeur de l'information de vitesse (REG), on commande dans le temps, selon au moins une règle prédéfinie, la mise en et/ou hors circuit d'un courant (i1, i2) dans le stator du moteur à commutation électronique ;
   g) dans le laps de temps entre la production du signal comparatif (Udif) et le nouveau début consécutif de la modification de la grandeur variable en fonction du temps, cette dernière est posée à une valeur initiale.

2. Procédé selon la revendication 1, selon lequel la première position du rotor correspond à une position de commutation du moteur.

3. Procédé selon la revendication 1 ou 2, selon lequel la grandeur comparative est fonction d'une grandeur à influencer, notamment d'une température.

4. Procédé selon une ou plusieurs des revendications précédentes, selon lequel l'angle de rotation prédéfini correspond au moins approximativement à la distance entre deux positions successives de commutation du moteur.

5. Procédé selon une ou plusieurs des revendications 1 à 4, selon lequel on utilise comme grandeur variable en fonction du temps la tension (Uc) sur un condensateur (C) dont l'état de charge est modifié en fonction du temps.

6. Procédé selon une ou plusieurs des revendications 1 à 5, selon lequel la grandeur dépendante du temps est posée à une valeur initiale, soit directement après le début du signal comparatif (Udif), soit si une position prédéfinie du rotor (figure 12 : 0° ou 180° el.) coïncide dans le temps avec la présence du signal comparatif (Udif).

7. Procédé selon une ou plusieurs des revendications précédentes, selon lequel le début de la modification en fonction du temps de la grandeur (Uc) variable en fonction du temps est démarré par l'atteinte d'une position prédéfinie du rotor (figure 12 : environ 10° el.), ou d'une position parmi une pluralité de positions prédéfinies du rotor.

8. Procédé selon une ou plusieurs des revendications précédentes, selon lequel, pendant l'enregistrement de la différence de temps (Td, Td'), un paramètre de régulation, notamment le facteur P d'une régulation proportionnelle et/ou le facteur I d'une régulation par intégration, est modifié en continu au sens d'une adaptation à l'information de vitesse (REG) et à la différence de temps mesurée (Td, Td'), de sorte qu'à l'expiration de cette différence de temps (Td, Td'), on obtient un paramètre de régulation modifié.

9. Procédé selon la revendication 8, selon lequel, dans une première plage d'angle de rotation du moteur (figure 13 : à partir de 180° el.), le ou chaque paramètre (P, I) est modifié si la vitesse de rotation du moteur est trop élevée et, dans une deuxième plage d'angle de rotation différente de la première (figure 12 : avant 180° el.), le ou chaque paramètre est modifié si la vitesse est trop basse.

10. Procédé selon la revendication 8 ou 9, selon lequel le ou chaque paramètre est modifié à la fin d'un cycle de commutation (KOMM=L) en cas de vitesse de rotation trop basse (figure 12), et au début d'un cycle de commutation (KOMM=H) en cas de vitesse trop élevée (figure 13).

11. Procédé selon une ou plusieurs des revendications précédentes, selon lequel, notamment pour un moteur sans collecteur monophasé ou biphasé, des étapes de calcul, par exemple pour le calcul d'une variable réglante (PI) pour le processus de régulation, ou pour le calcul d'un signal d'alarme en cas de sous-dépassement de vitesse, sont exécutées à l'intérieur d'au moins une plage prédéfinie de positions de rotation (figure 12: environ 0 à 10° el. et environ 180 à 190° el.), pendant laquelle au moins une phase du moteur, et de préférence toutes les phases (31, 32) du moteur, est ou sont hors circuit.

**12.** Procédé selon la revendication 11, selon lequel différentes étapes de calcul sont exécutées à intervalles de temps dans la plage prédéfinie de positions de rotation, par exemple une fois le calcul d'une variable réglante (figure 19) et une autre fois le contrôle de la présence d'un sous-dépassement de vitesse pour lequel une alarme doit être déclenchée (figure 20).

**13.** Procédé selon une ou plusieurs des revendications précédentes, comprenant les étapes suivantes :

a) dans un laps de temps précédant la mise en circuit d'une phase prédéfinie, on mesure l'intervalle de temps entre deux instants de commutation successifs (figure 3: ta, tb), ou bien on enregistre et mémorise une valeur correspondant environ à cet intervalle de temps (figure 21 : KZalt) - appelée ci-après valeur de temps de commutation - ;
b) lors de la mise en circuit d'une phase prédéfinie, on enregistre en continu la durée de mise en circuit environ à partir de l'instant de commutation (compteur KZ);
c) à l'atteinte d'une durée (KZ'alt) de mise en circuit qui est inférieure d'un laps de temps prédéfini (D) à la valeur de temps de commutation (KZalt), on met cette phase hors circuit.

**14.** Procédé selon la revendication 13, selon lequel le laps de temps prédéfini (D) est constant.

**15.** Procédé selon la revendication 13, selon lequel le signal de sortie d'un régulateur de vitesse de rotation fait varier le laps de temps prédéfini (D).

**16.** Procédé selon une ou plusieurs des revendications 13 à 15, selon lequel le processus de mise hors circuit est ralenti par des moyens de temporisation (figure 14 : 35, 36, 37, 38, 123, 124) dans la région de transistors de sortie (33, 34).

**17.** Procédé selon une ou plusieurs des revendications précédentes, comprenant les étapes suivantes :

a) les étapes (figure 12 ; figure 17) qui sont associées à un état de vitesse trop basse sont exécutées au moins pour partie dans au moins une première plage prédéfinie de positions de rotation du rotor (figure 12: d'environ 10 à 180° el.);
b) les étapes (figure 13; figure 16) qui sont associées à un état de vitesse trop élevée sont exécutées au moins pour partie dans au moins une deuxième plage prédéfinie de positions de rotation du rotor (figure 13: d'environ 190 à 360° el.), cette deuxième plage étant différente de la première.

**18.** Procédé selon la revendication 17, selon lequel les étapes (figure 19 ; figure 20) qui sont communes à un état de vitesse trop élevée et un état de vitesse trop basse sont exécutées pendant au moins une troisième plage prédéfinie de positions de rotation (figures 12 et 13 : 0 à environ 10° el., et 180 à environ 190° el.), qui est différente de la première et de la deuxième plage de positions de rotation.

**19.** Procédé selon une ou plusieurs des revendications 3 à 18, selon lequel, pour un moteur (25) dont la vitesse de rotation est commandée par une température, si la vitesse de rotation (n) est basse du fait d'une température basse, la valeur du facteur d'intégration (I) d'une régulation par intégration ou d'une régulation proportionnelle et par intégration est ramenée à une valeur inférieure (figure 19: R1) en cas de dépassement d'une valeur limite (figure 19: S1).

**20.** Procédé selon une ou plusieurs des revendications précédentes, selon lequel, si, lors de l'enregistrement du laps de temps (Td) entre l'instant de position (figure 8 : t18) et un début consécutif du signal comparatif (Udif), le laps de temps (Td) enregistré correspond environ à l'intervalle de temps entre deux instants de commutation, on fait passer la vitesse de rotation du moteur à une valeur élevée (figure 19: étapes S164, S165).

**21.** Procédé selon la revendication 20, selon lequel on fait passer dans ce cas le moteur à un fonctionnement comme moteur non régulé à pleine puissance.

**22.** Procédé selon une ou plusieurs des revendications précédentes, présentant les caractéristiques suivantes :

a) lors de la mise en circuit d'une phase prédéfinie, la durée (KZ) de la phase de commutation est enregistrée numériquement en continu, environ depuis la commutation au début de cette phase de commutation jusqu'à environ la commutation à la fin de cette phase de commutation ;
b) cette durée (KZ) est comparée à une valeur de seuil prédéfinie (figures 16,17, 22, 23 : S3);
c) si cette durée (KZ) dépasse la valeur de seuil (S3), le moteur est mis hors circuit pendant un intervalle de temps prédéfini (figure 16: S214, S216 ; figure 17 : S228, S230);
d) à l'expiration de l'intervalle de temps prédéfini, on tente de remettre en circuit le moteur.

**23.** Procédé selon la revendication 22, selon lequel, à l'expiration de l'intervalle de temps prédéfini, on pose un signal (ALARM) (figure 20 : S176).

**24.** Procédé selon la revendication 22 ou 23, selon lequel on enregistre en continu la durée (KZ) des phases de commutation pour plus d'une phase (31, 32), et on la compare à la valeur de seuil respective (S3).

**25.** Procédé selon une ou plusieurs des revendications précédentes, selon lequel une boucle de programme (figures 16, 17) de durée prédéfinie est parcourue plusieurs fois environ pendant la durée d'une phase de commutation, et chaque passage est compté dans un compteur de boucles (KZ).

**26.** Procédé selon la revendication 25, selon lequel les boucles (figures 16,17, 22, 23) de phases de commutation différentes présentent des structures de programme différentes.

**27.** Procédé selon la revendication 25 ou 26, selon lequel le compteur de boucles (KZ) commande au moins un processus dans le déroulement d'une phase de commutation, par exemple la mise en circuit d'un courant (S133), la mise hors circuit d'un courant (S134) et/ou la surveillance d'une vitesse de rotation minimale (S212).

**28.** Procédé selon une ou plusieurs des revendications 25 à 27, selon lequel la boucle de programme présente un algorithme de mesure (S137, 138, 139) pour enregistrer une différence de temps (Td, Td') correspondant à un écart de régulation.

**29.** Procédé selon la revendication 28, selon lequel l'algorithme de mesure présente des étapes (S139 ; S153) pour adapter un paramètre de régulation (I, P) à la différence de temps (Td, Td') enregistrée correspondant à un écart de régulation.

**30.** Procédé selon la revendication 28 ou 29, selon lequel l'algorithme de mesure (S139; S153) est contenu sous la forme d'une bifurcation dans la boucle de programme associée (figures 16, 17, 22, 23), bifurcation qui n'est parcourue que pendant la durée de la différence de temps (Td, Td').

**31.** Procédé selon la revendication 30, selon lequel la durée pour parcourir une boucle de programme est au moins quasiment indépendante du fait que la bifurcation soit ou non parcourue.

**32.** Procédé selon une ou plusieurs des revendications précédentes, présentant les caractéristiques suivantes :

a) lors de la mise en circuit d'une phase prédéfinie, la durée (KZ) de la phase de commutation est enregistrée en continu, environ depuis la commutation au début de cette phase de commutation jusqu'à environ la commutation à la fin de cette phase de commutation ;
b) cette durée (KZ) est comparée à une valeur de seuil prédéfinie (figures 16, 17, 22, 23 : S3);
c) si cette durée (KZ) dépasse la valeur de seuil (S3), on pose, en tenant compte éventuellement de paramètres supplémentaires, un signal d'alarme (ALARM) (figure 20 : S176).

**33.** Procédé selon la revendication 32, selon lequel une boucle de programme (figures 22, 23) de durée prédéfinie est parcourue successivement plusieurs fois environ pendant la durée d'une phase de commutation, et chaque parcours de boucle est enregistré dans un compteur (KZ), afin d'enregistrer en continu la durée de cette phase de commutation.

**34.** Moteur (25) à courant continu sans collecteur, pourvu d'un dispositif pour agir sur sa vitesse de rotation (n), présentant les caractéristiques suivantes :

a) il est prévu un organe de mémorisation, notamment un condensateur (C), et le signal (Uc) appliqué à cet organe de mémorisation (C) est chaque fois modifié en fonction du temps (figure 21b) à l'atteinte d'une première position prédéfinie de rotation (figure 21 : KZ = 0) ;
b) il est prévu un organe de comparaison (57), où ce premier signal (Uc) est comparé à un deuxième signal, afin de produire un signal comparatif (Udif) pour un critère prédéfini de comparaison ;
c) il est prévu un organe de mesure (20, KZ), afin d'enregistrer la différence de temps (Td, Td') entre le début (figure 6 : t11 ; figure 8 : t19) de ce signal comparatif (Udif) et une deuxième position de rotation (figure 6 : t12; figure 8 : t18) du rotor, atteinte après avoir parcouru un angle de rotation prédéfini, ou vice-versa ;
d) il est prévu un organe d'enregistrement de vitesse de rotation, afin d'enregistrer si l'atteinte de la deuxième position de rotation prédéfinie se situe avant ou après la production du signal comparatif (Udif) ;
e) il est prévu un organe de calcul (20) qui, d'après au moins une règle prédéfinie, à l'aide de la valeur de la différence de temps (Td, Td') et de la valeur enregistrée par l'organe d'enregistrement de vitesse de rotation, agit sur l'instant de mise en circuit (figure 21 : KZ = PI) et/ou l'instant de mise hors circuit (figure 21 : KZ = KZ'alt) d'un courant de stator (i1, i2) servant à entraîner le moteur ;
f) il est prévu un dispositif pour poser le signal à l'organe de mémorisation (C) à une valeur initiale avant le début de la modification en fonction du temps.

**35.** Moteur selon la revendication 34, dans lequel l'organe de mémorisation (C) est remis à une valeur initiale (figure 21b, à gauche), soit directement après le début du signal comparatif (Udif), soit si une position prédéfinie du rotor coïncide dans le temps avec la présence du signal comparatif (Udif).

**36.** Moteur selon la revendication 34 ou 35, dans lequel la position prédéfinie du rotor - appelée ci-après position de commutation - est une position pour laquelle un signal numérique (KOMM), fonction de la position de rotation et servant à commander le moteur, modifie sa valeur.

**37.** Moteur selon les revendications 34 et 36, dans lequel la première position prédéfinie de rotation du rotor (27) est une première position de commutation, et la deuxième position de rotation du rotor, atteinte après avoir parcouru l'angle de rotation prédéfini, est la position de commutation suivante, consécutive à la première position de commutation.

**38.** Moteur selon la revendication 36 ou 37, dans lequel la première position prédéfinie de rotation du rotor est une position de commutation pour laquelle le signal (KOMM) servant à commander le moteur se modifie d'une manière prédéfinie, par exemple d'une valeur haute (H) à une valeur basse (L).

**39.** Moteur selon une ou plusieurs des revendications 34 à 38, présentant les caractéristiques suivantes :

a) il est prévu un dispositif qui enregistre en continu la durée (KZ) d'une phase de commutation environ depuis la commutation au début de cette phase de commutation jusqu'à environ la commutation à la fin de cette phase de commutation ;
b) il est prévu un dispositif pour comparer cette durée (KZ) à une valeur de seuil prédéfinie (figures 16,17, 22, 23 : S3) ;
c) il est prévu un dispositif qui, si cette durée (KZ) dépasse la valeur de seuil (S3), produit un signal d'alarme (figure 20 : S176).

**40.** Moteur selon la revendication 39, dans lequel une boucle de programme (figures 22, 23) de durée prédéfinie est parcourue successivement plusieurs fois environ pendant la durée d'une phase de commutation, et chaque passage est enregistré dans un compteur (KZ), afin d'enregistrer la durée d'une phase de commutation.

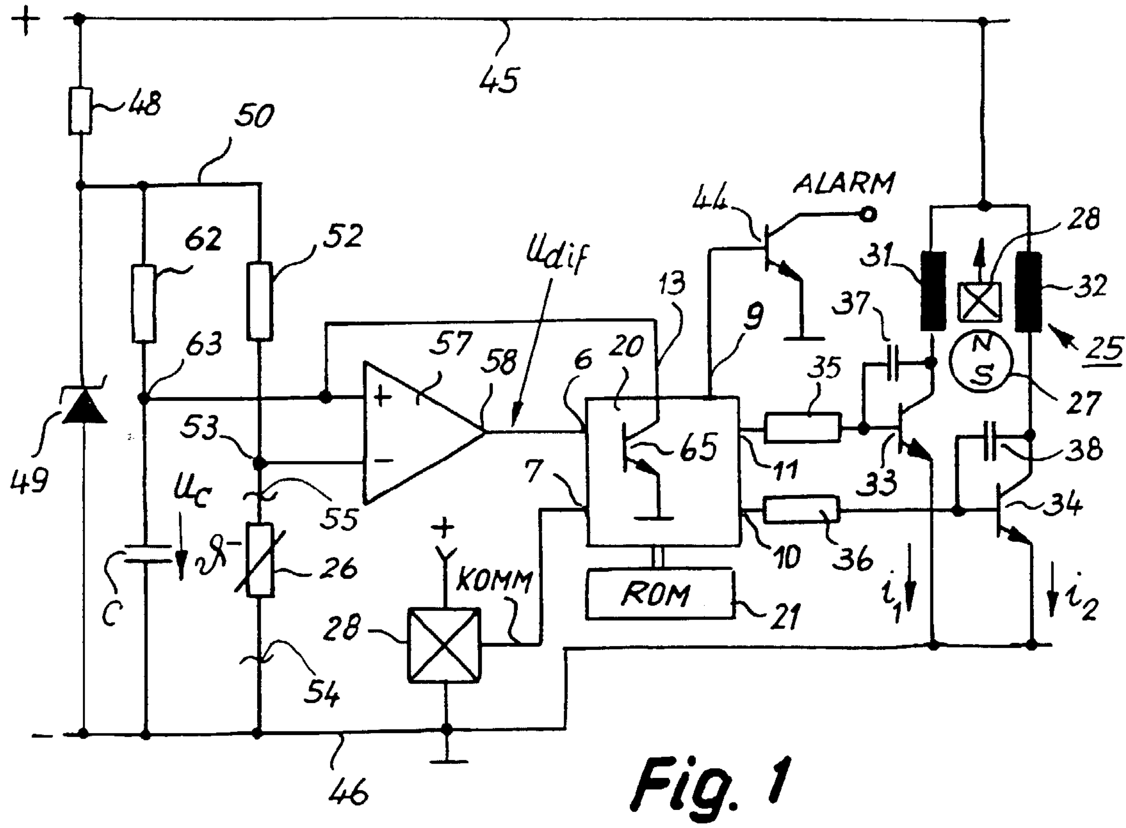
+
45
48
50
62
52
Udif
44
ALARM
28
31
32
13
9
37
25
63
57
58
6
20
35
N
S
27
49
53
65
11
33
38
Uc
7
34
55
26
+
KOMM
10
36
C
28
ROM
21
i1
i2
54
46

Fig. 1

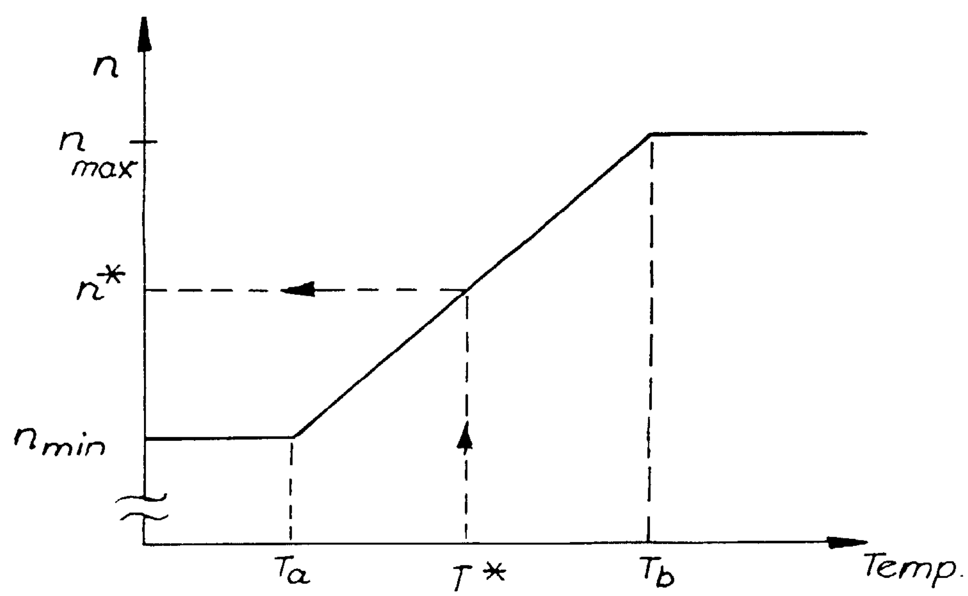
n
n max
n*
n min
Ta
T*
Tb
Temp.

Fig. 2

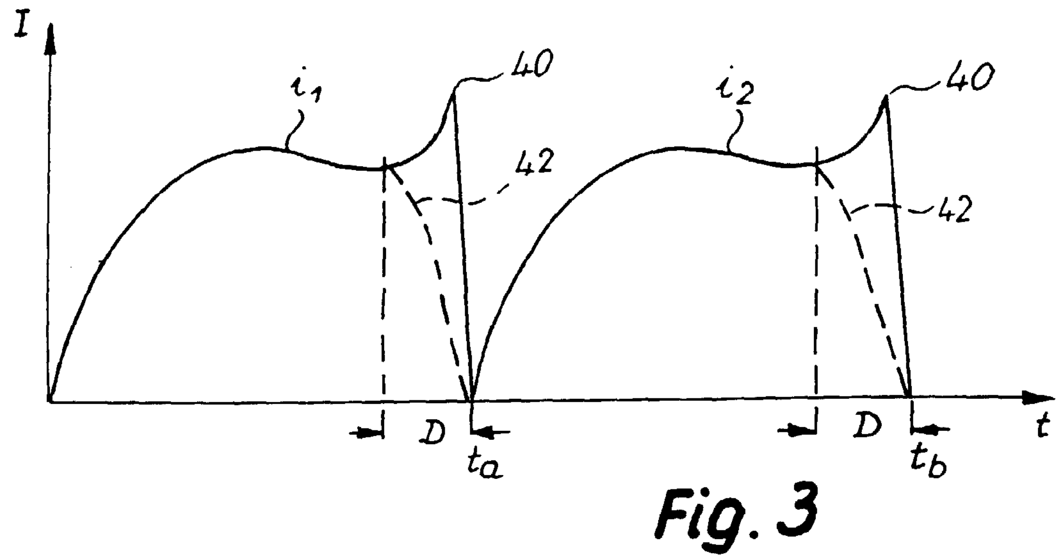
I
i1
40
42
i2
40
42
D
ta
D
tb
t

Fig. 3

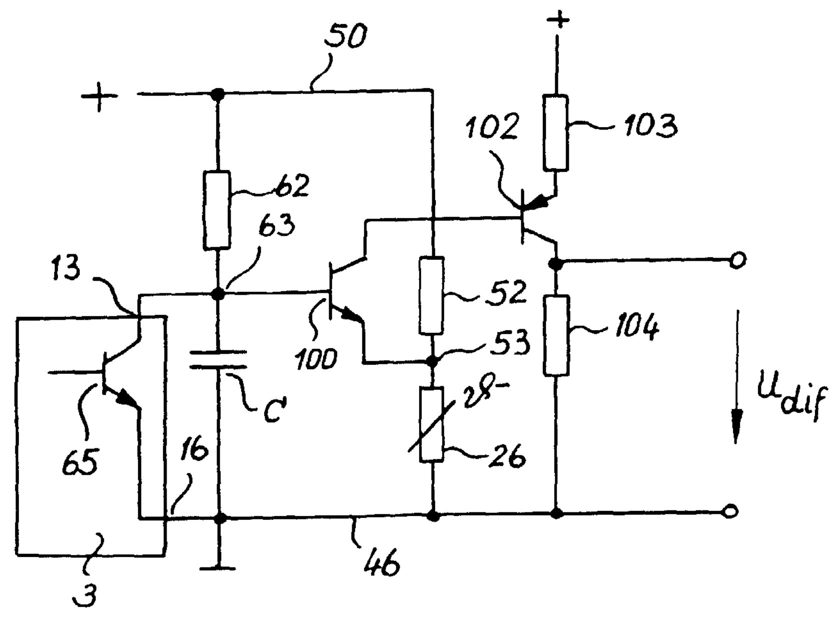
50
+
+
102
103
62
63
13
52
53
100
104
C
28
26
65
16
46
3
Udif

Fig. 4

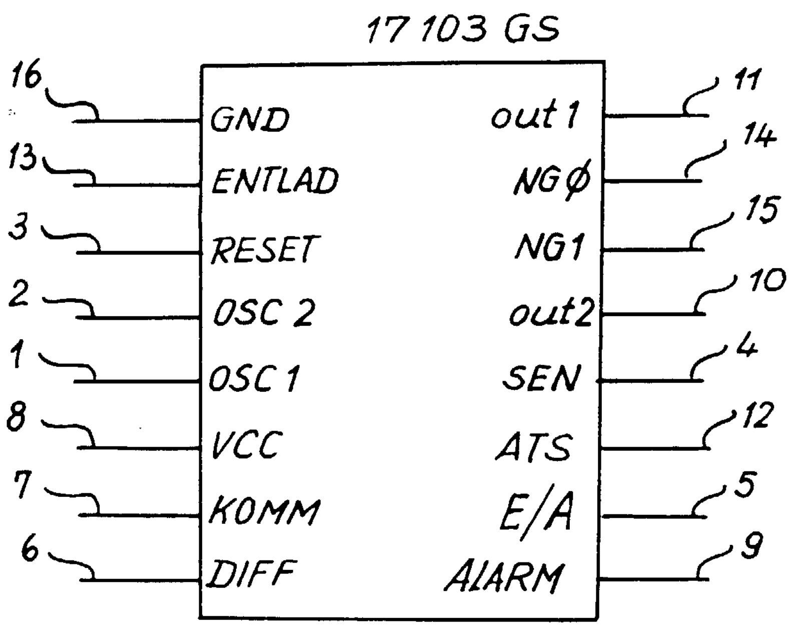
17 103 GS
16
GND
13
ENTLAD
3
RESET
2
OSC 2
1
OSC 1
8
VCC
7
KOMM
6
DIFF
11
out 1
14
NG Ø
15
NG1
10
out2
4
SEN
12
ATS
5
E/A
9
ALARM

Fig.5

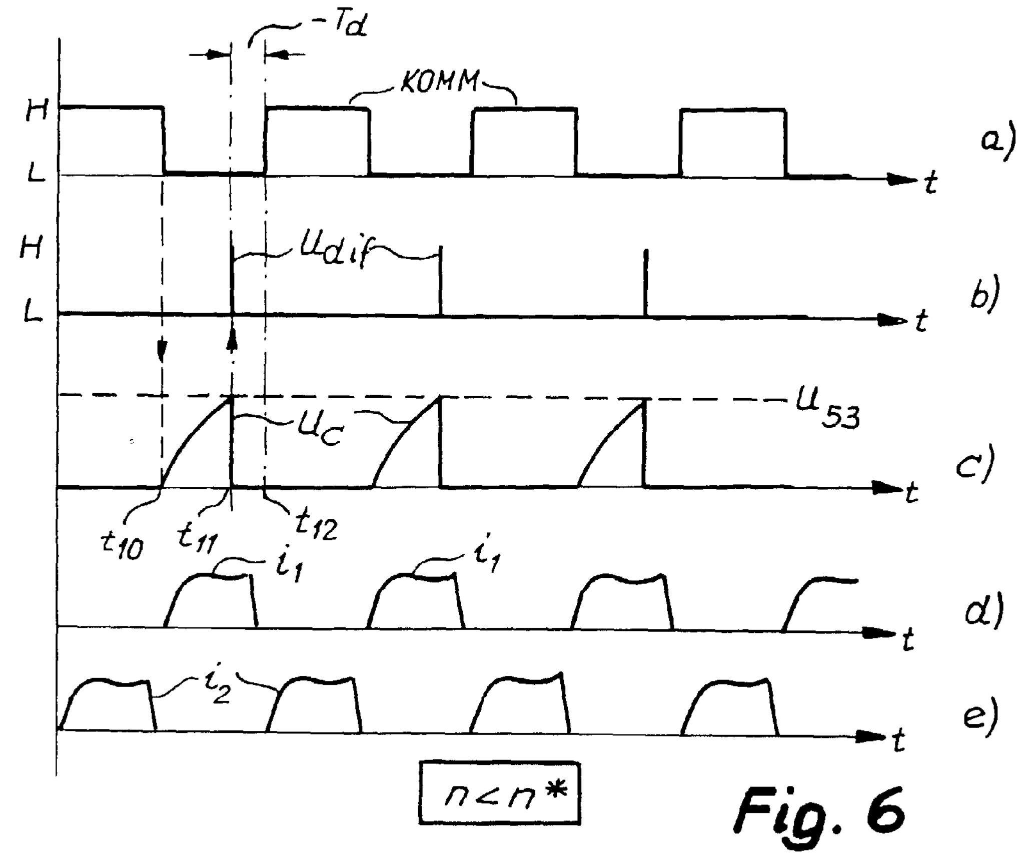

-Td
KOMM
H
L
a)
t
H
L
Udif
b)
t
U53
Uc
c)
t
t10
t11
t12
i1
d)
t
i2
e)
t
n<n*


Fig. 6

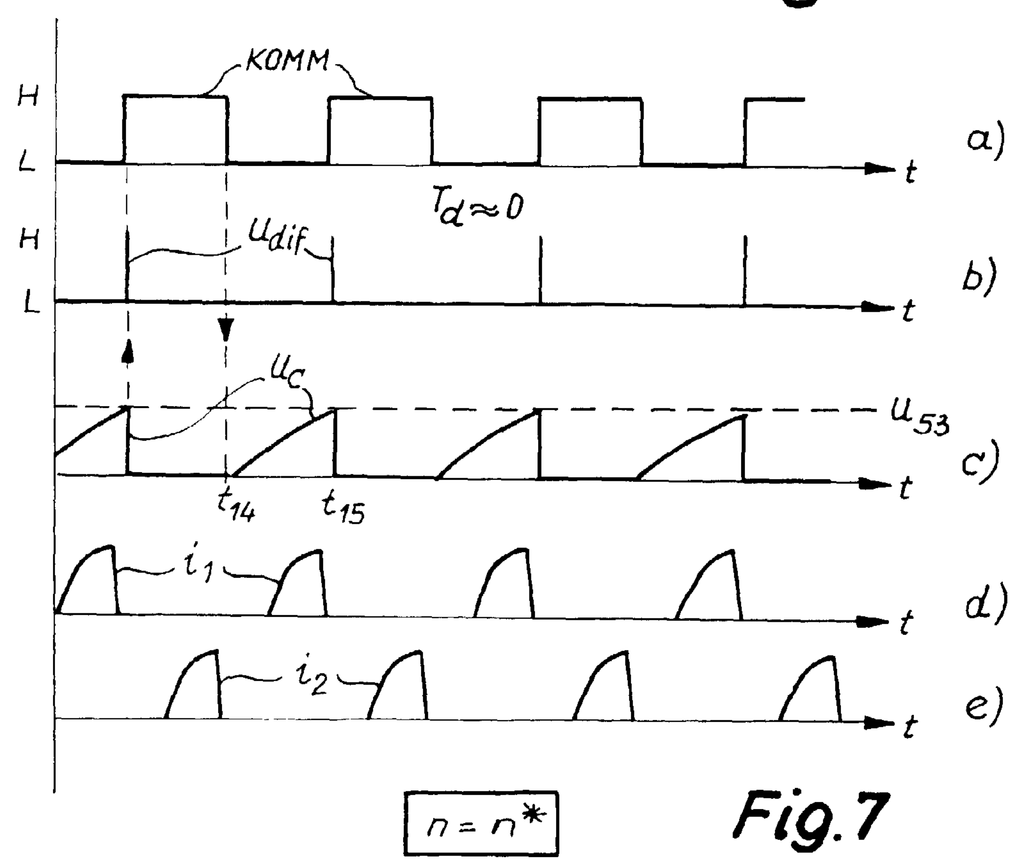

KOMM
H
L
a)
t
Td≈0
H
L
Udif
b)
t
Uc
U53
c)
t
t14
t15
i1
d)
t
i2
e)
t
n=n*


Fig.7

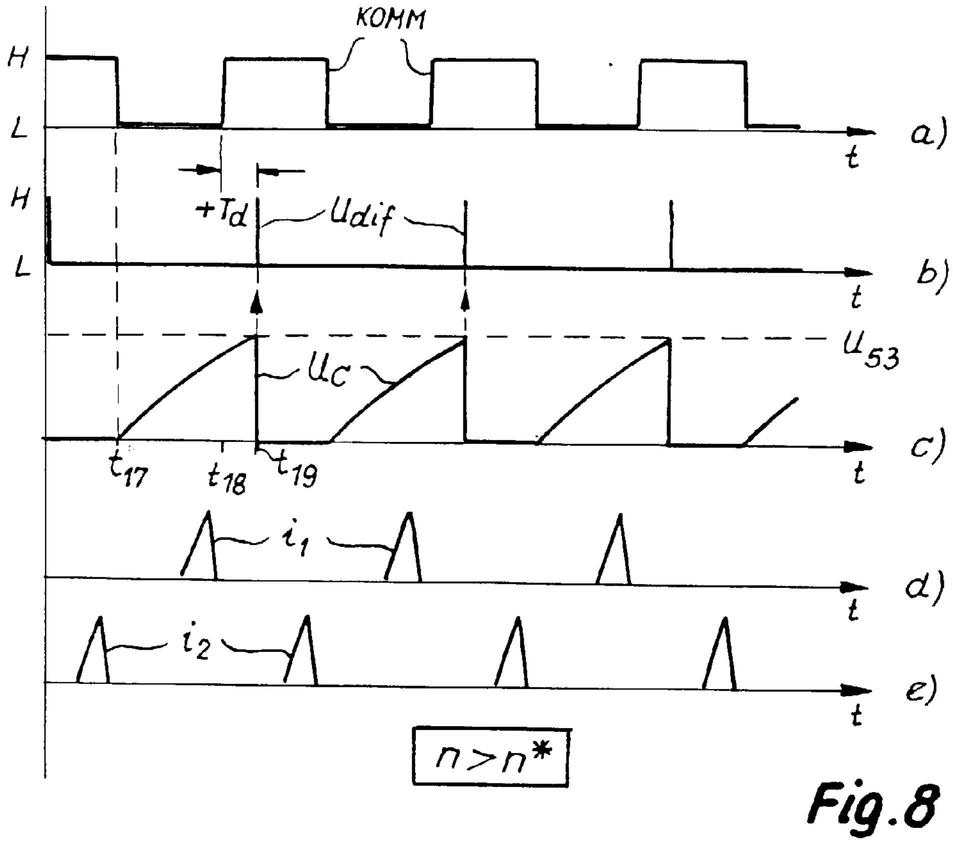
KOMM
H
L
a)
t
+Td
Udif
b)
U53
Uc
c)
t17
t18
t19
i1
d)
i2
e)
n>n*

Fig.8

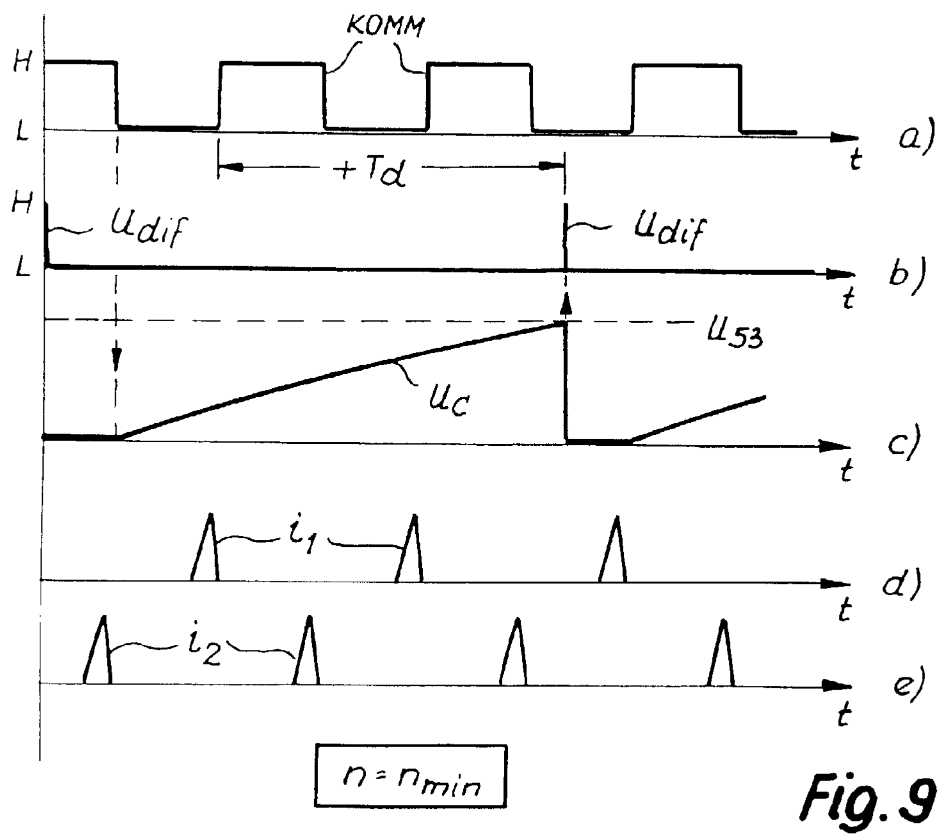
KOMM
H
L
a)
t
+Td
Udif
b)
U53
Uc
c)
i1
d)
i2
e)
n=nmin

Fig.9

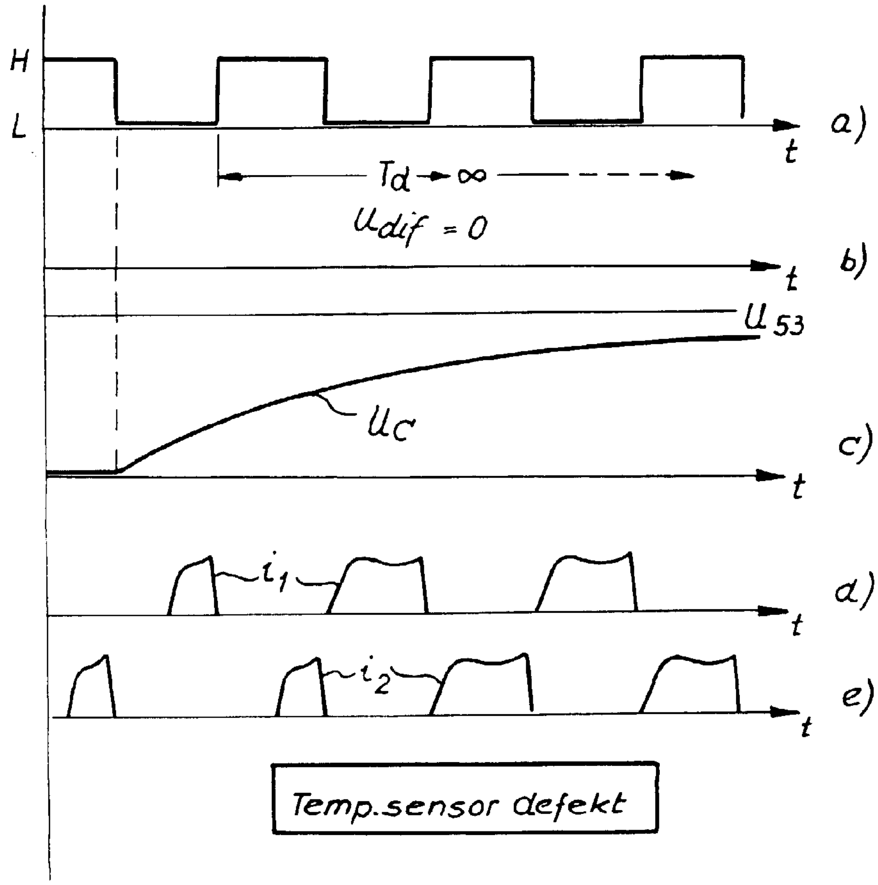
H
L
a)
t
$T_d \to \infty$
$U_{dif} = 0$
b)
t
$U_{53}$
$U_C$
c)
t
$i_1$
d)
t
$i_2$
e)
t
Temp.sensor defekt

Fig. 10

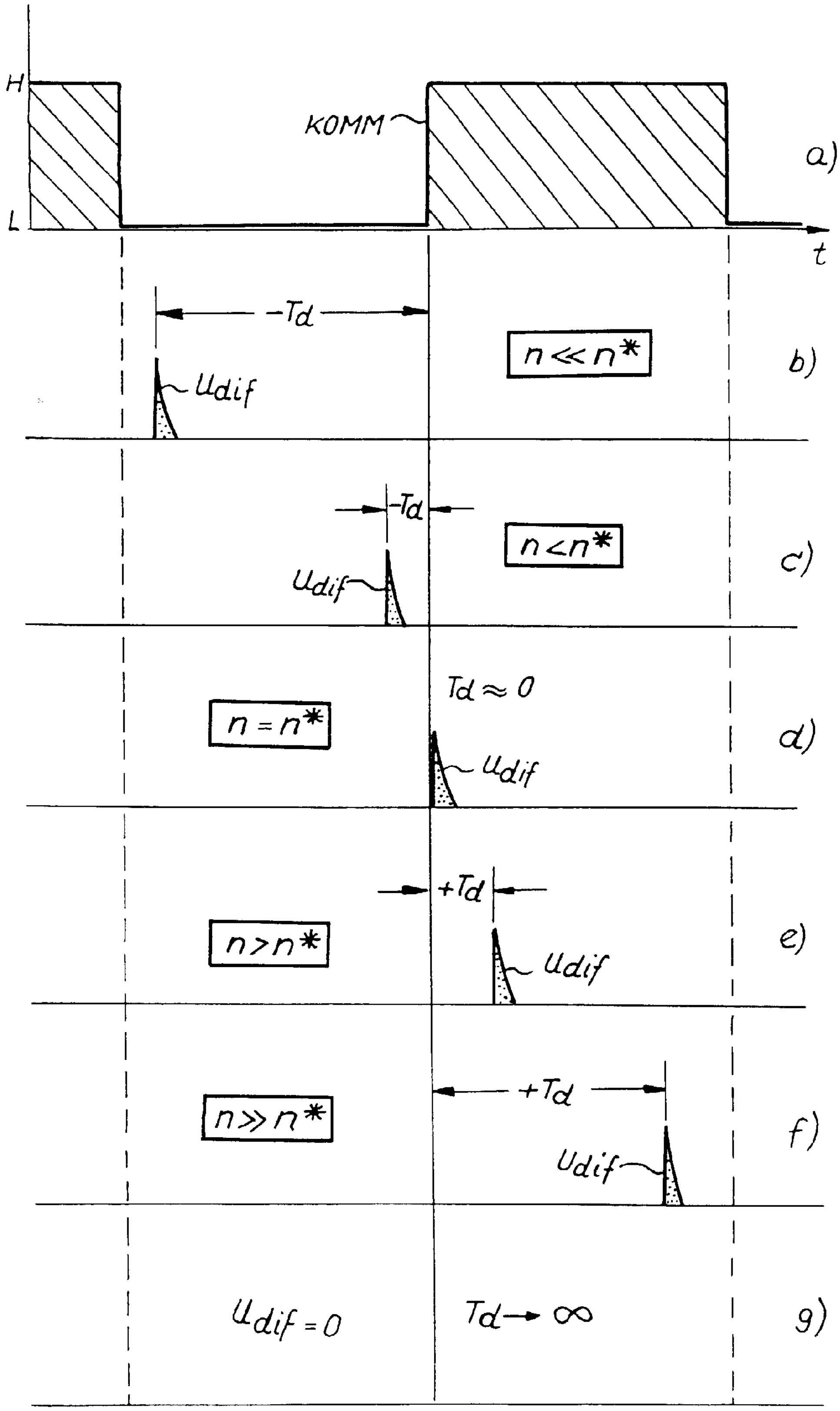
H
L
KOMM
a)
t
-Td
n ≪ n*
b)
Udif
-Td
n < n*
c)
Udif
Td ≈ 0
n = n*
d)
Udif
+Td
e)
n > n*
Udif
+Td
n ≫ n*
f)
Udif
Udif = 0
Td → ∞
g)

Fig. 11

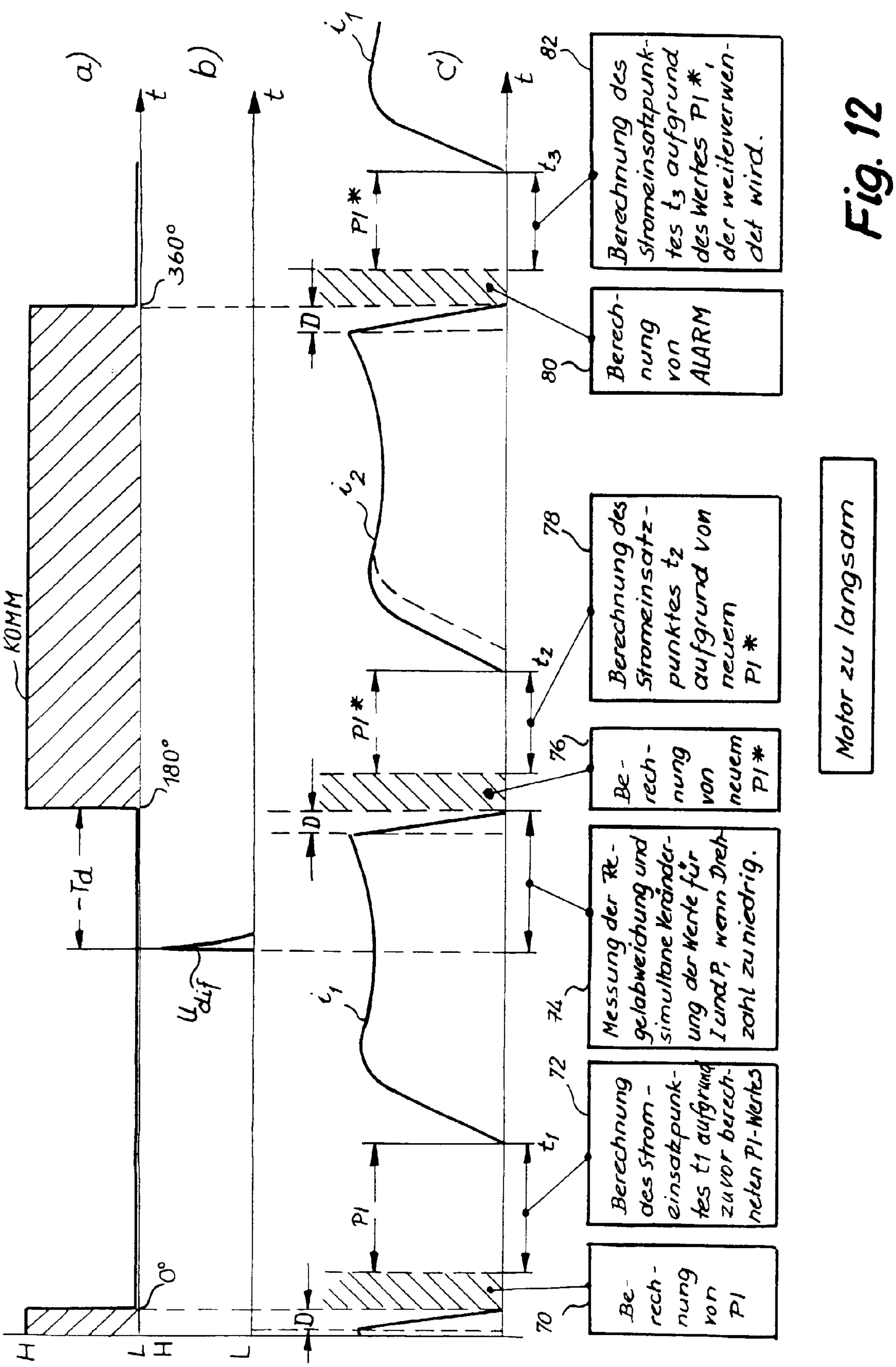
a)
b)
c)
t
H
L
KOMM
0°
180°
360°
-Td
$U_{dif}$
$i_1$
$i_2$
$t_1$
$t_2$
$t_3$
PI
PI*
D
70
Be-rech-nung von PI
72
Berechnung des Strom-einsatzpunk-tes t1 aufgrund zuvor berech-neten PI-Wertes
74
Messung der Re-gelabweichung und simultane Veränder-ung der Werte für I und P, wenn Dreh-zahl zu niedrig.
76
Be-rech-nung von neuem PI*
78
Berechnung des Stromeinsatz-punktes t2 aufgrund von neuem PI*
80
Berech-nung von ALARM
82
Berechnung des Stromeinsatzpunk-tes t3 aufgrund des Wertes PI*, der weiterverwen-det wird.
Motor zu langsam

Fig. 12

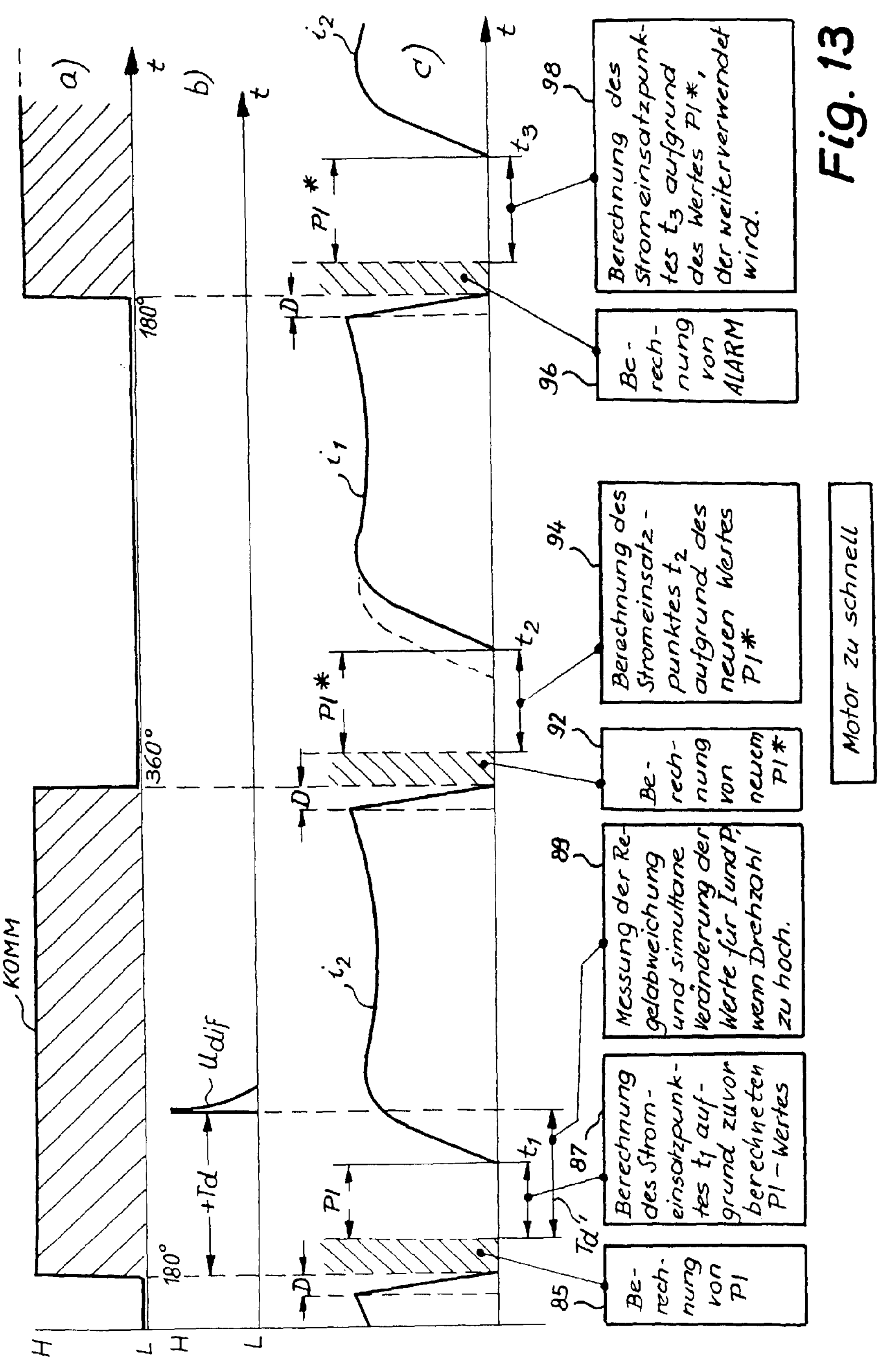
KOMM
a)
b)
c)
H
L
H
L
t
t
t
180°
360°
180°
Udif
+Td
Td'
D
D
D
PI
PI*
PI*
t1
t2
t3
i2
i1
i2
85
Be-
rech-
nung
von
PI
87
Berechnung des Strom-einsatzpunk-tes t1 auf-grund zuvor berechneten PI-Wertes
89
Messung der Re-gelabweichung und simultane Veränderung der Werte für I und P, wenn Drehzahl zu hoch.
92
Be-
rech-
nung
von
neuem
PI*
94
Berechnung des Stromeinsatz-punktes t2 aufgrund des neuen Wertes PI*
96
Be-
rech-
nung
von
ALARM
98
Berechnung des Stromeinsatzpunk-tes t3 aufgrund des Wertes PI*, der weiterverwendet wird.
Motor zu schnell

Fig. 13

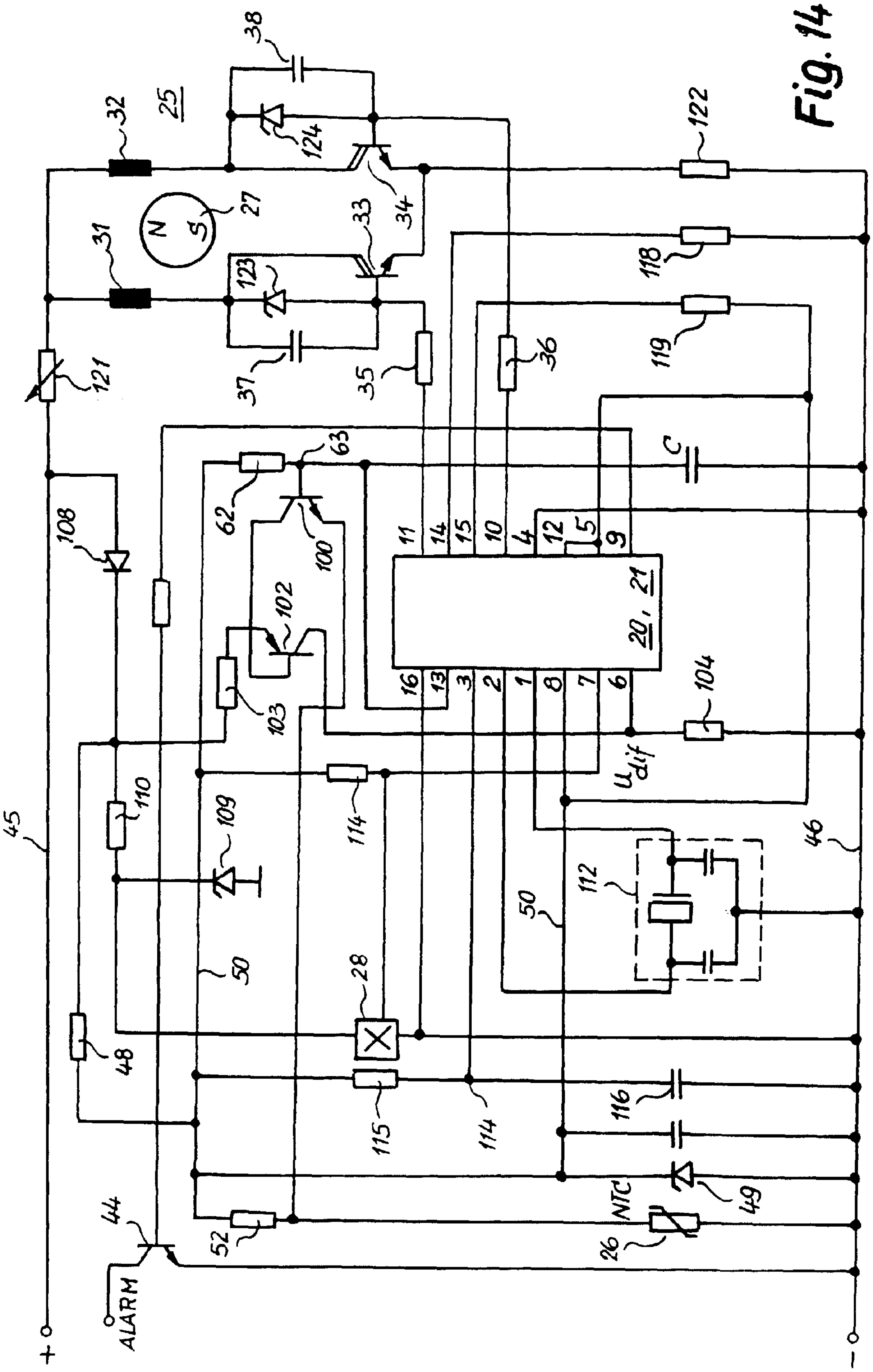
38
32
25
124
27
N
S
34
31
33
123
122
118
119
37
35
36
121
C
63
62
100
11
14
15
10
4
12
5
9
108
102
20, 21
16
13
3
2
1
8
7
6
104
103
$u_{dif}$
110
109
114
45
46
112
50
28
48
116
115
114
44
ALARM
52
26
NTC
49
+
–

Fig. 14

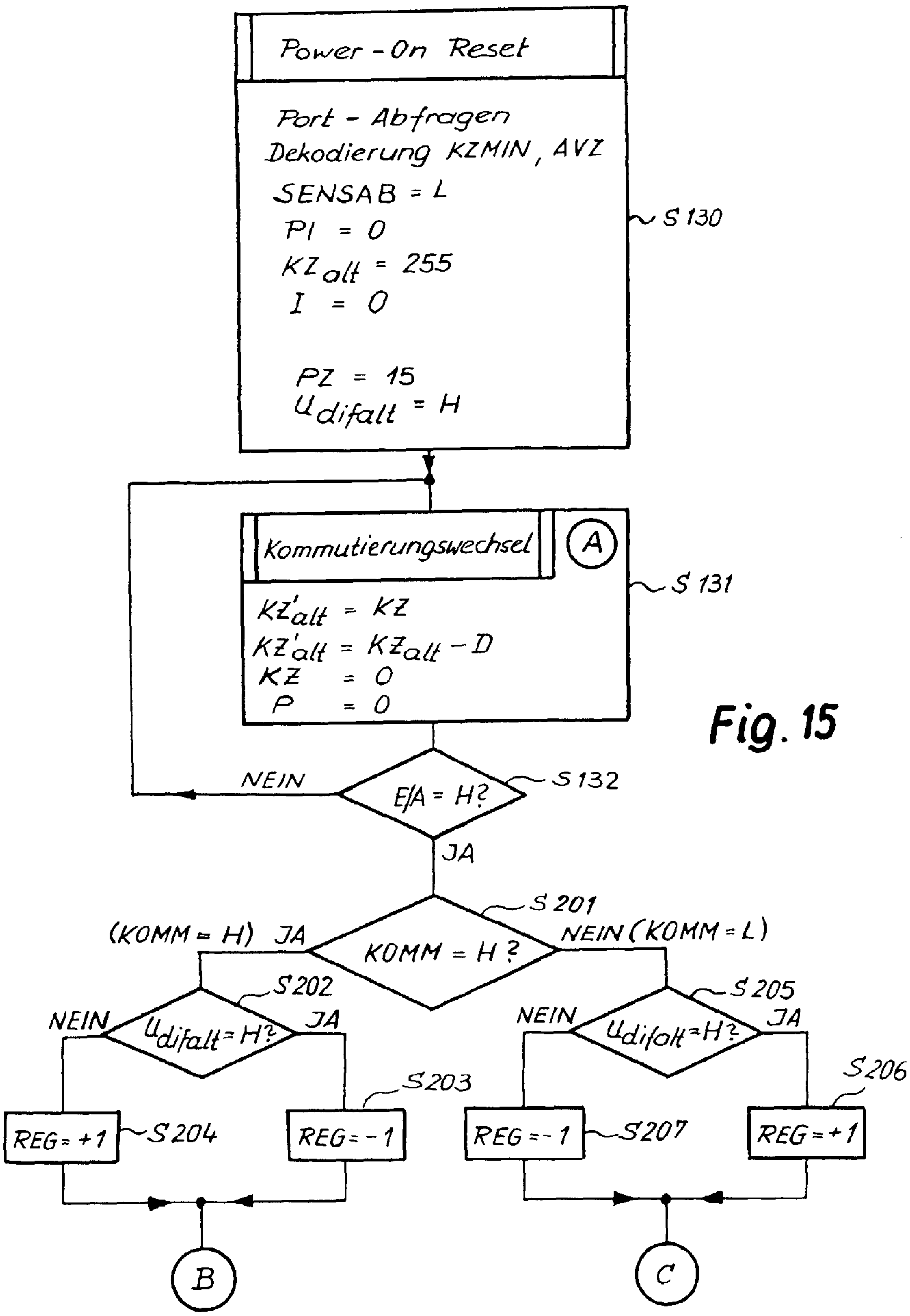
Power - On Reset
Port - Abfragen
Dekodierung KZMIN, AVZ
SENSAB = L
PI = 0
KZ alt = 255
I = 0
PZ = 15
Udifalt = H
S 130
Kommutierungswechsel
A
KZ'alt = KZ
KZ'alt = KZalt - D
KZ = 0
P = 0
S 131
NEIN
E/A = H?
S 132
JA
S 201
(KOMM = H) JA
KOMM = H ?
NEIN (KOMM = L)
S202
NEIN
Udifalt = H?
JA
S203
REG = +1
S204
REG = -1
S205
NEIN
Udifalt = H?
JA
S206
REG = -1
S207
REG = +1
B
C

Fig. 15

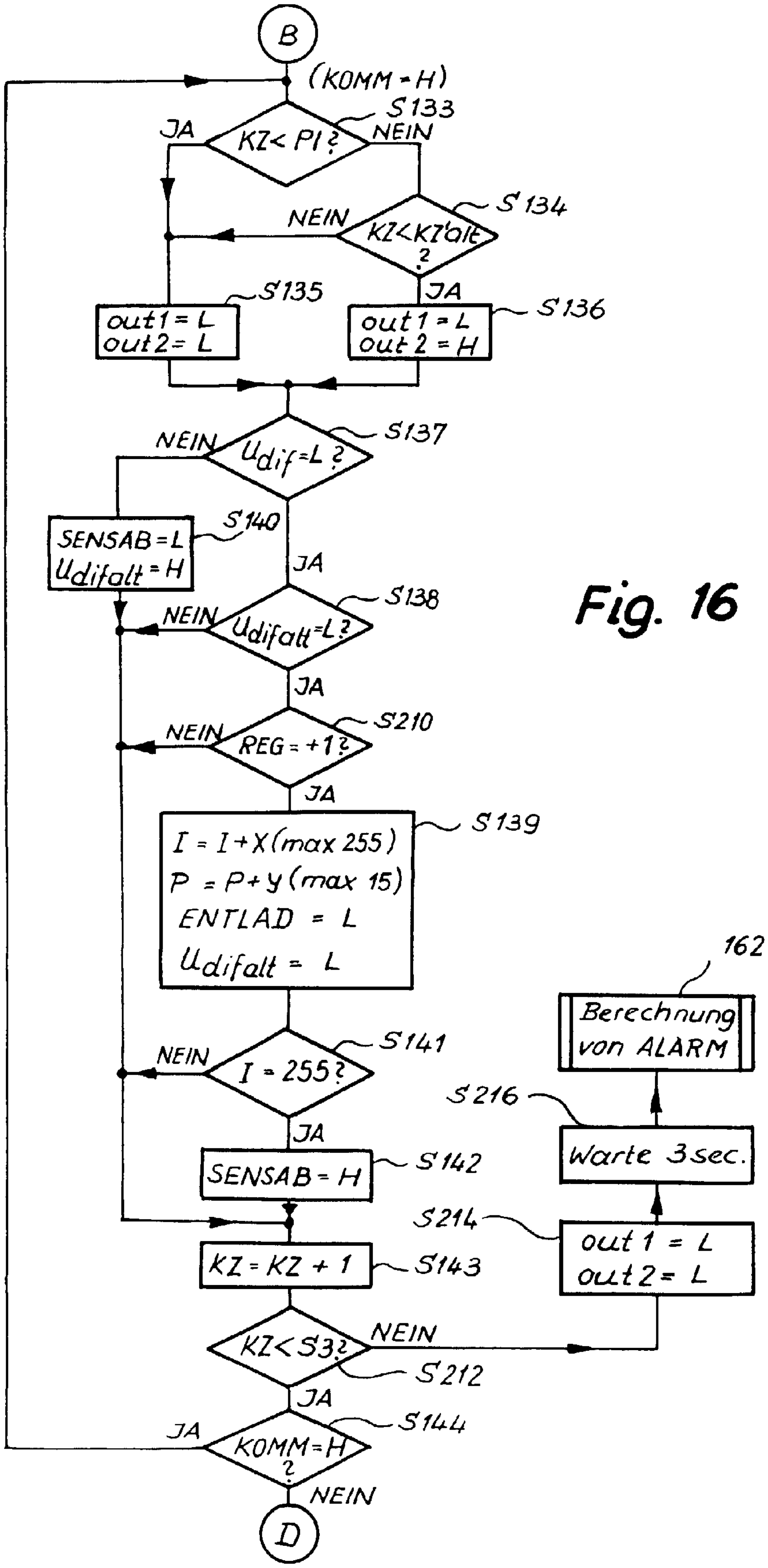
B
(KOMM = H)
S133
KZ< PI ?
JA
NEIN
S134
KZ<KZ'alt ?
NEIN
JA
S135
out1 = L
out2 = L
S136
out1 = L
out2 = H
S137
Udif = L ?
NEIN
JA
S140
SENSAB = L
Udifalt = H
S138
Udifalt = L ?
NEIN
JA
S210
REG = +1 ?
NEIN
JA
S139
I = I+X (max 255)
P = P+y (max 15)
ENTLAD = L
Udifalt = L
S141
I = 255 ?
NEIN
JA
S142
SENSAB = H
S143
KZ = KZ + 1
S212
KZ< S3 ?
NEIN
JA
S214
out 1 = L
out 2 = L
S216
Warte 3sec.
162
Berechnung von ALARM
S144
KOMM = H ?
JA
NEIN
D

Fig. 16

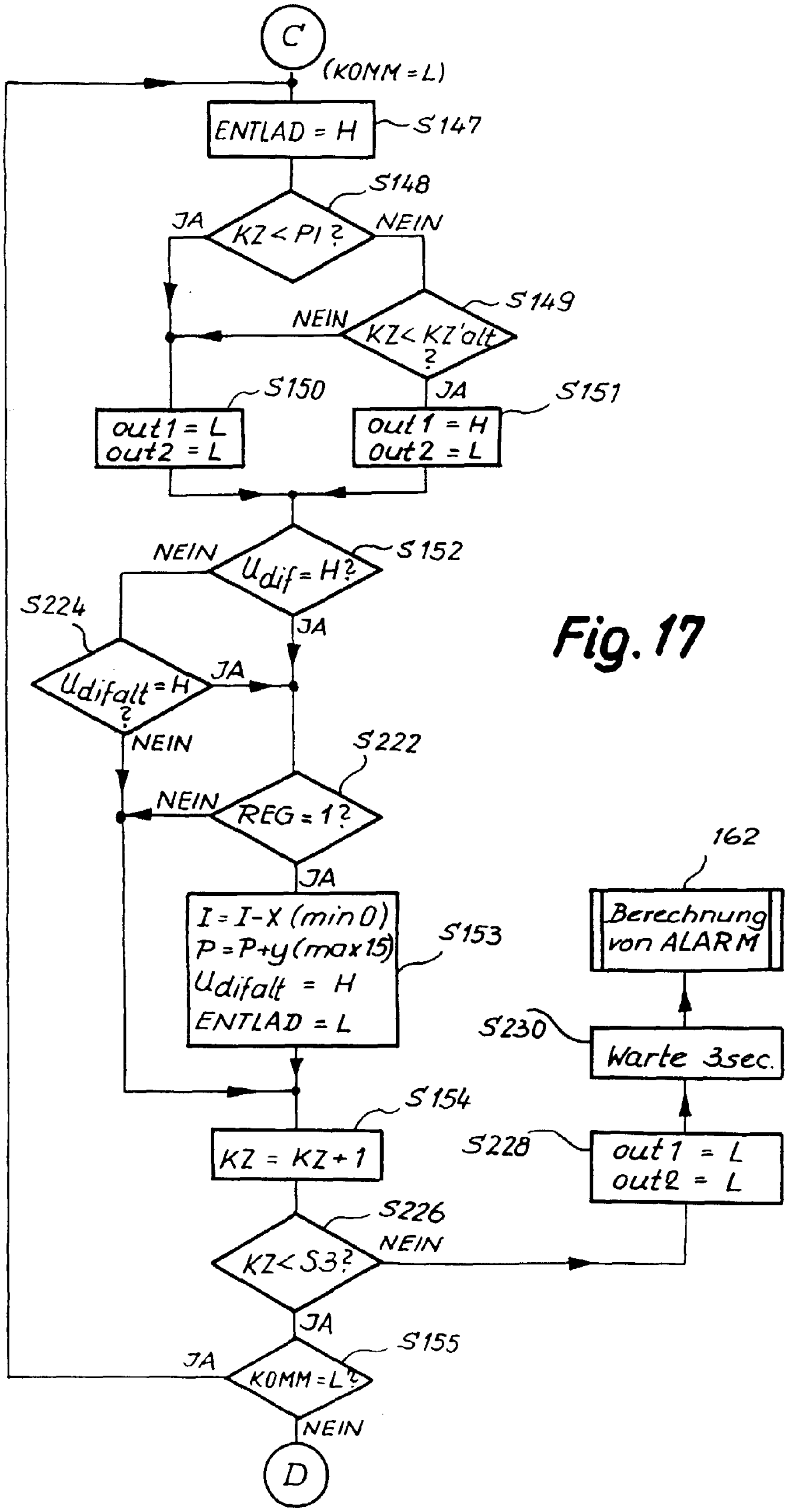
C
(KOMM = L)
ENTLAD = H
S147
S148
KZ < PI ?
JA
NEIN
S149
KZ < KZ'alt ?
NEIN
JA
S150
out1 = L
out2 = L
S151
out1 = H
out2 = L
S152
Udif = H ?
NEIN
JA
S224
Udifalt = H ?
JA
NEIN
S222
REG = 1 ?
NEIN
JA
I = I-X (min 0)
P = P+y (max 15)
Udifalt = H
ENTLAD = L
S153
S154
KZ = KZ+1
S226
KZ < S3 ?
NEIN
JA
S155
KOMM = L ?
JA
NEIN
D
162
Berechnung von ALARM
S230
Warte 3sec.
S228
out1 = L
out2 = L

Fig. 17

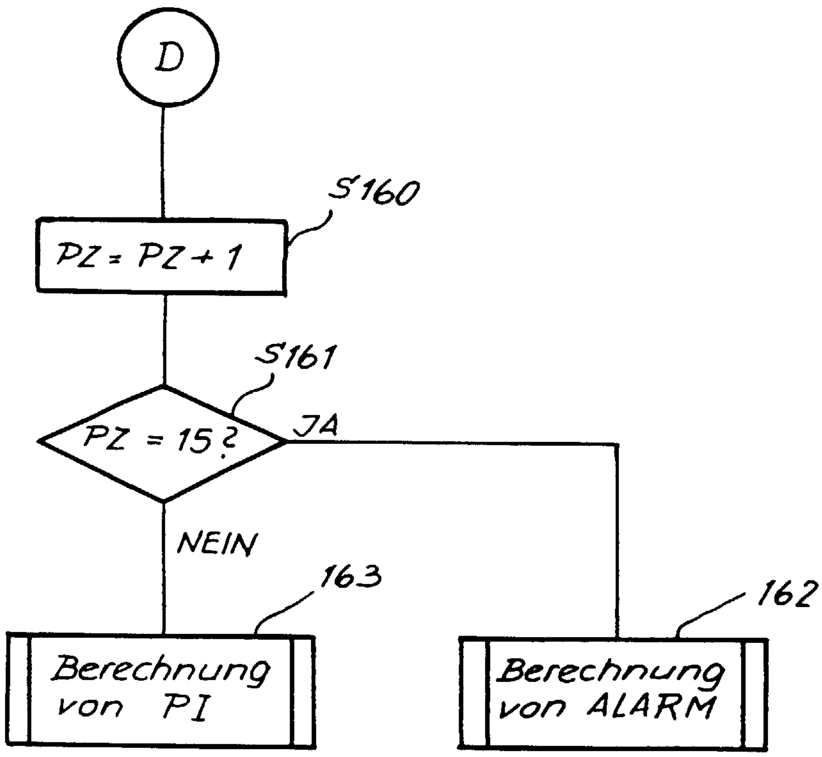
D
S160
PZ = PZ + 1
S161
PZ = 15 ?
JA
NEIN
163
162
Berechnung von PI
Berechnung von ALARM

Fig. 18

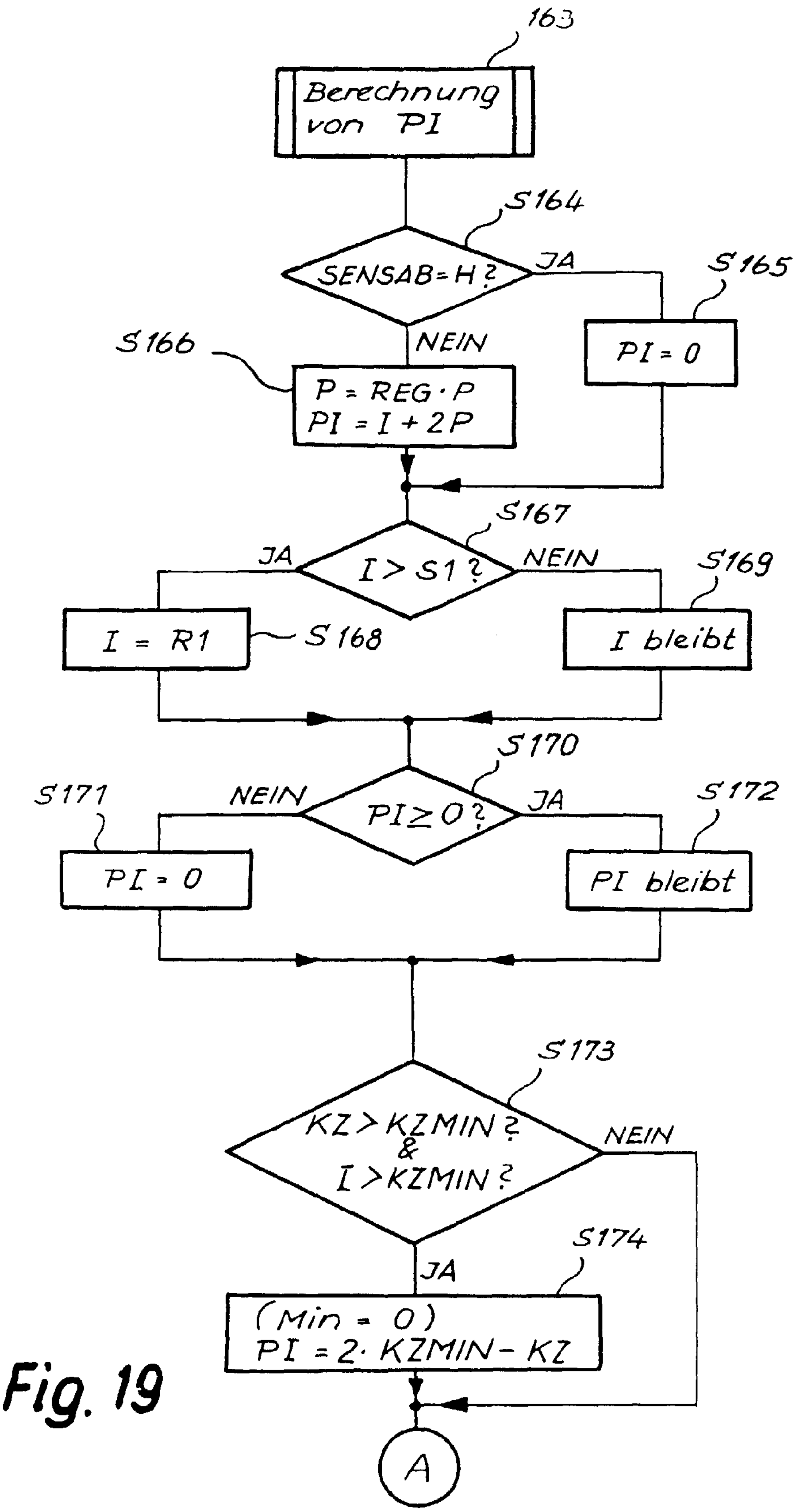
163
Berechnung von PI
S164
SENSAB=H?
JA
S165
PI = 0
NEIN
S166
P = REG · P
PI = I + 2P
S167
JA
I > S1 ?
NEIN
S169
I = R1
S168
I bleibt
S170
S171
NEIN
PI≥0?
JA
S172
PI = 0
PI bleibt
S173
KZ > KZMIN ?
&
I > KZMIN ?
NEIN
S174
JA
(Min = 0)
PI = 2· KZMIN − KZ
A

Fig. 19

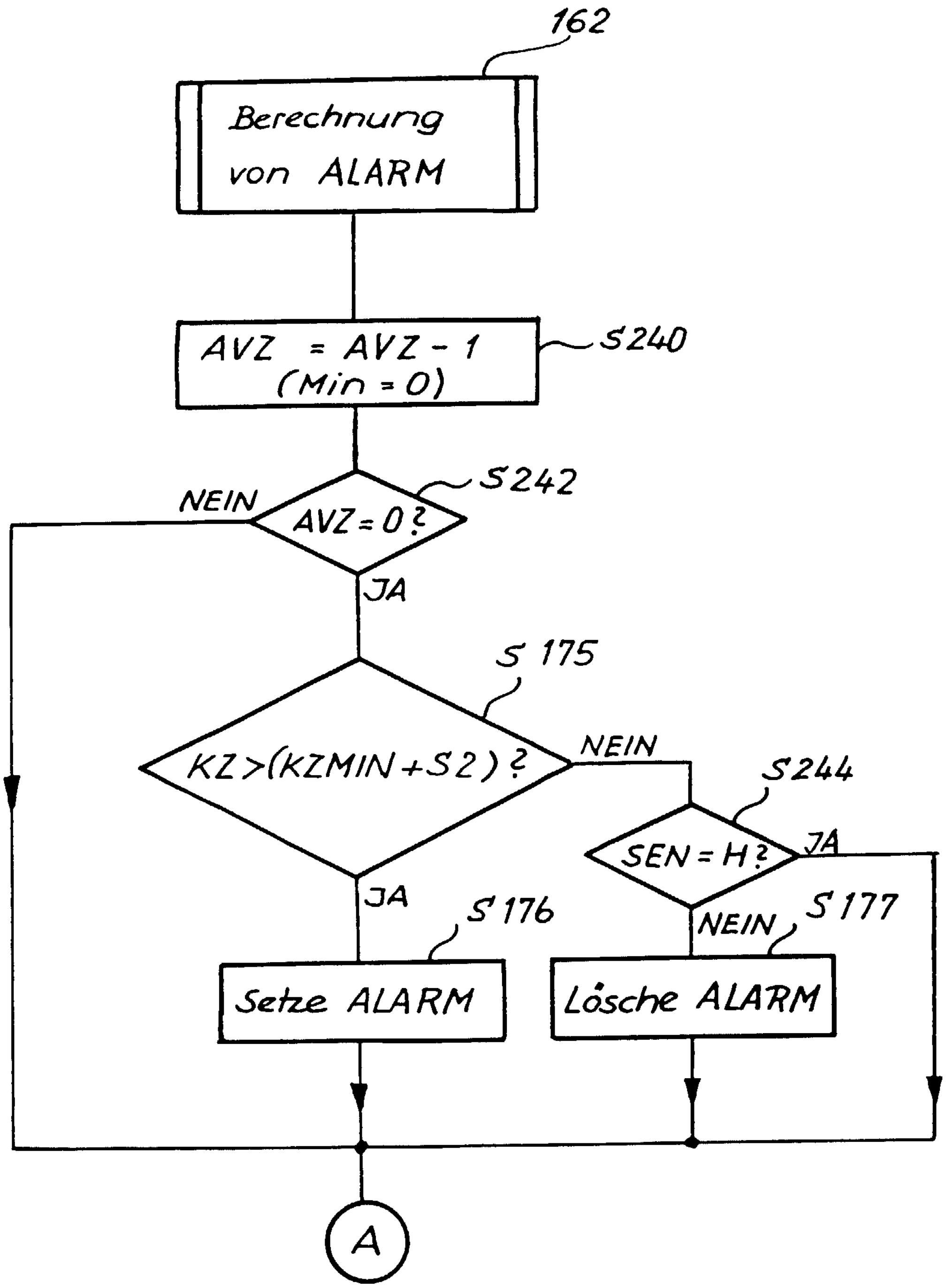
162
Berechnung von ALARM
AVZ = AVZ - 1 (Min = 0)
S240
S242
NEIN
AVZ = 0 ?
JA
S 175
KZ>(KZMIN+S2)?
NEIN
S244
SEN = H ?
JA
JA
S176
NEIN
S177
Setze ALARM
Lösche ALARM
A

Fig. 20

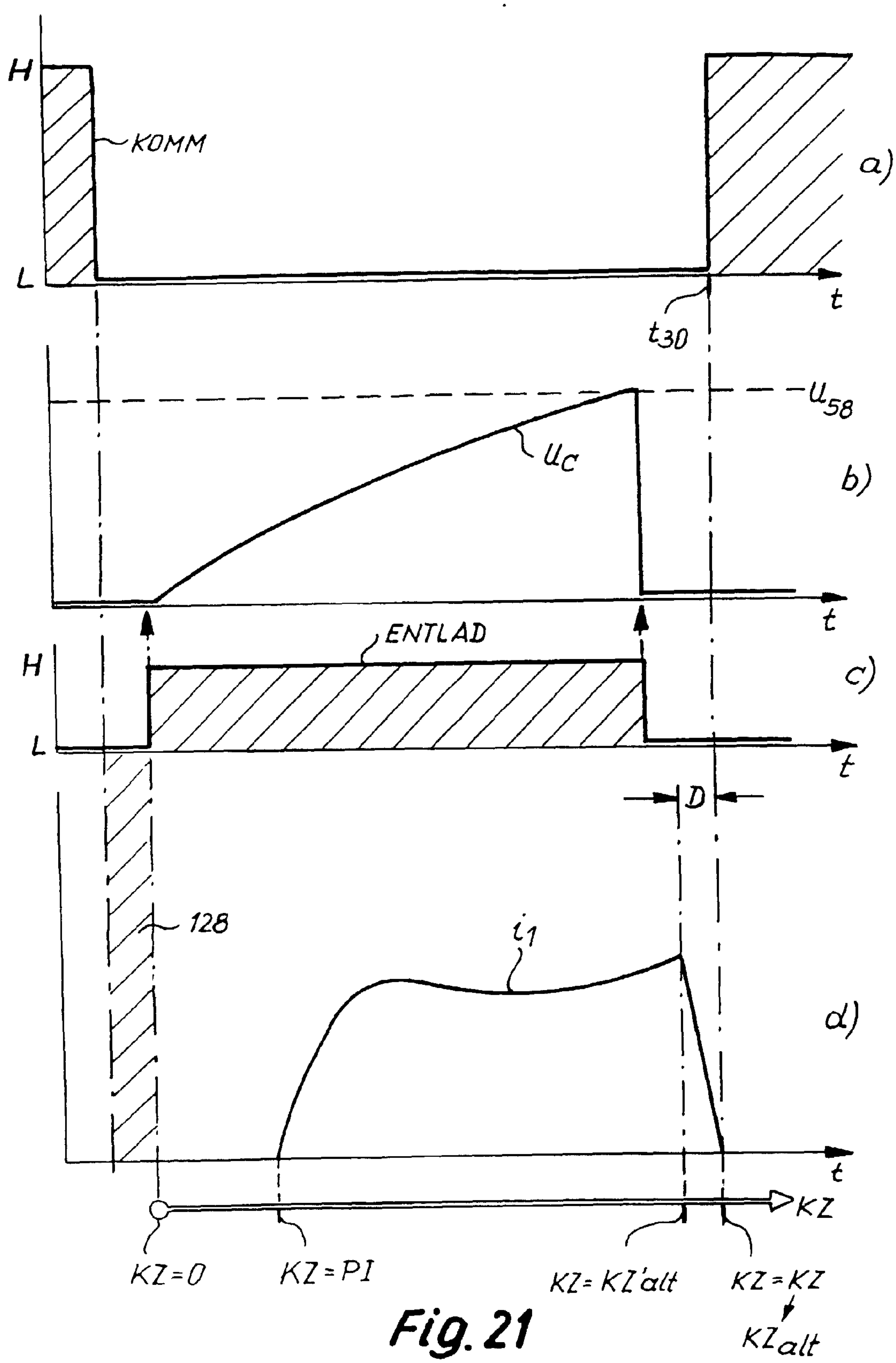
H
L
KOMM
a)
t
$t_{30}$
$u_{58}$
$u_C$
b)
t
ENTLAD
H
L
c)
t
D
128
$i_1$
d)
t
KZ
KZ=0
KZ=PI
KZ=KZ'alt
KZ=KZ
$KZ_{alt}$

Fig. 21

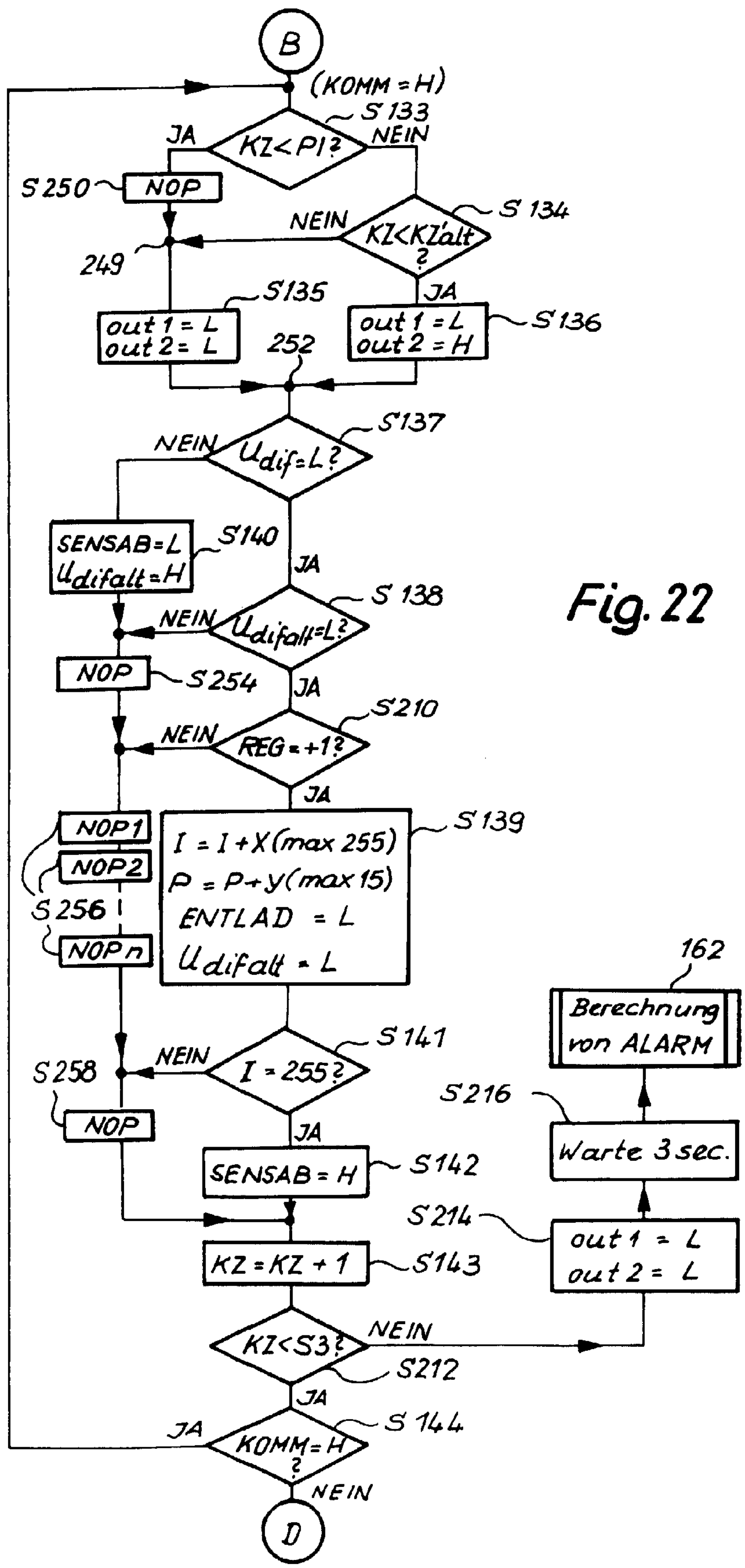
B
(KOMM = H)
S 133
KZ<PI?
JA
NEIN
S 250
NOP
S 134
NEIN
KZ<KZalt ?
249
JA
S135
out 1 = L
out 2 = L
S136
out 1 = L
out 2 = H
252
S137
NEIN
$U_{dif}$ = L?
S140
SENSAB = L
$U_{difalt}$ = H
JA
S 138
NEIN
$U_{difalt}$ = L?
NOP
S 254
JA
S210
NEIN
REG = +1?
JA
NOP1
NOP2
S 256
NOPn
S 139
I = I + X (max 255)
P = P + y (max 15)
ENTLAD = L
$U_{difalt}$ = L
162
Berechnung von ALARM
S 141
NEIN
S 258
I = 255?
NOP
S 216
Warte 3 sec.
JA
SENSAB = H
S 142
S 214
out 1 = L
out 2 = L
KZ = KZ + 1
S143
NEIN
KZ<S3?
S212
JA
JA
S 144
KOMM = H ?
NEIN
D

Fig. 22

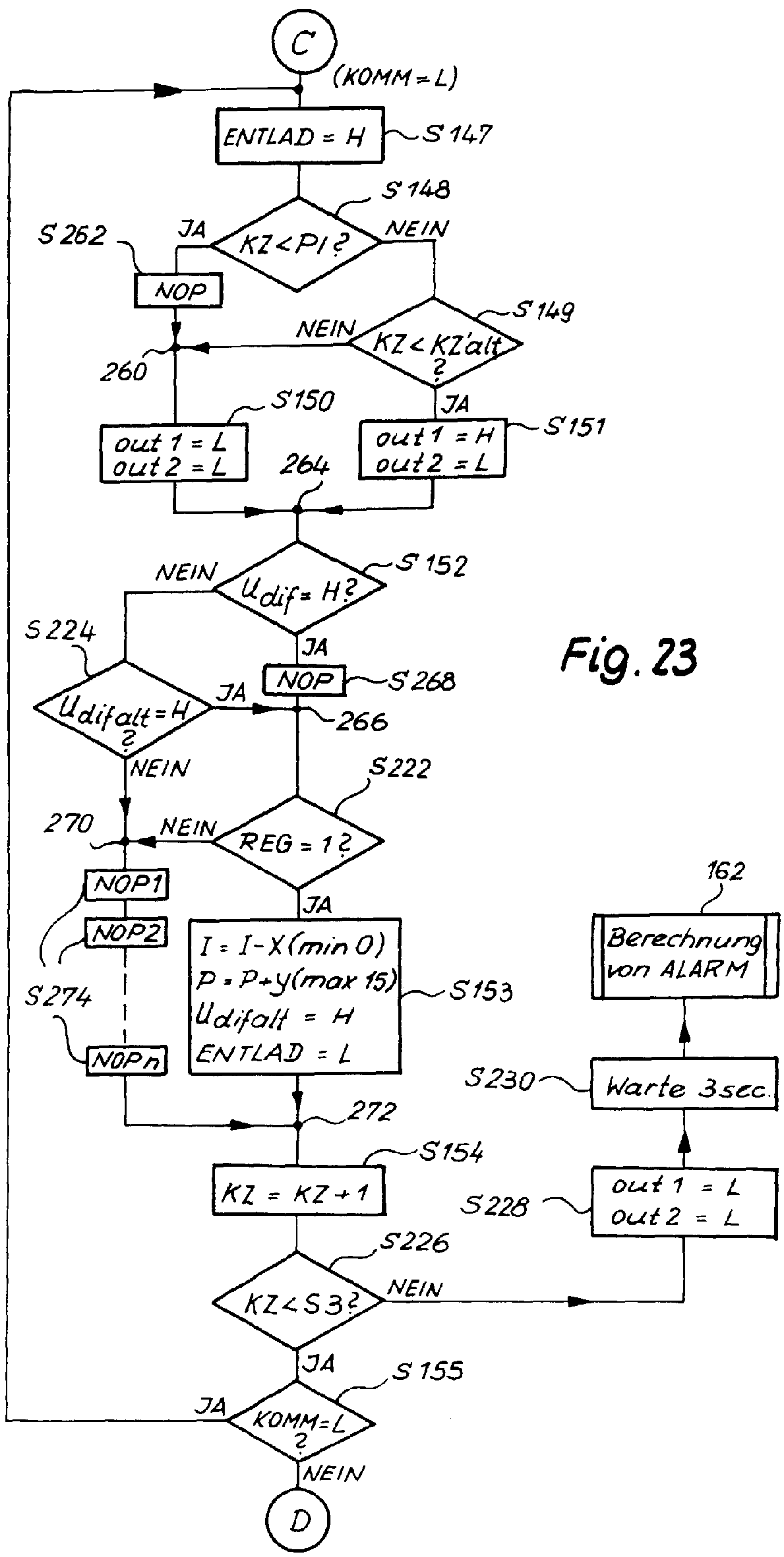
C
(KOMM = L)
ENTLAD = H
S 147
S 148
KZ < PI ?
JA
NEIN
S 262
NOP
S 149
KZ < KZ'alt ?
NEIN
JA
260
S 150
out 1 = L
out 2 = L
S 151
out 1 = H
out 2 = L
264
S 152
Udif = H ?
NEIN
JA
S 224
Udifalt = H ?
JA
NEIN
NOP
S 268
266
S 222
REG = 1 ?
NEIN
JA
270
NOP1
NOP2
NOPn
S 274
I = I - X (min 0)
P = P + y (max 15)
Udifalt = H
ENTLAD = L
S 153
272
S 154
KZ = KZ + 1
S 226
KZ < S 3 ?
NEIN
JA
S 155
KOMM = L ?
JA
NEIN
D
162
Berechnung von ALARM
S 230
Warte 3sec.
S 228
out 1 = L
out 2 = L

Fig. 23

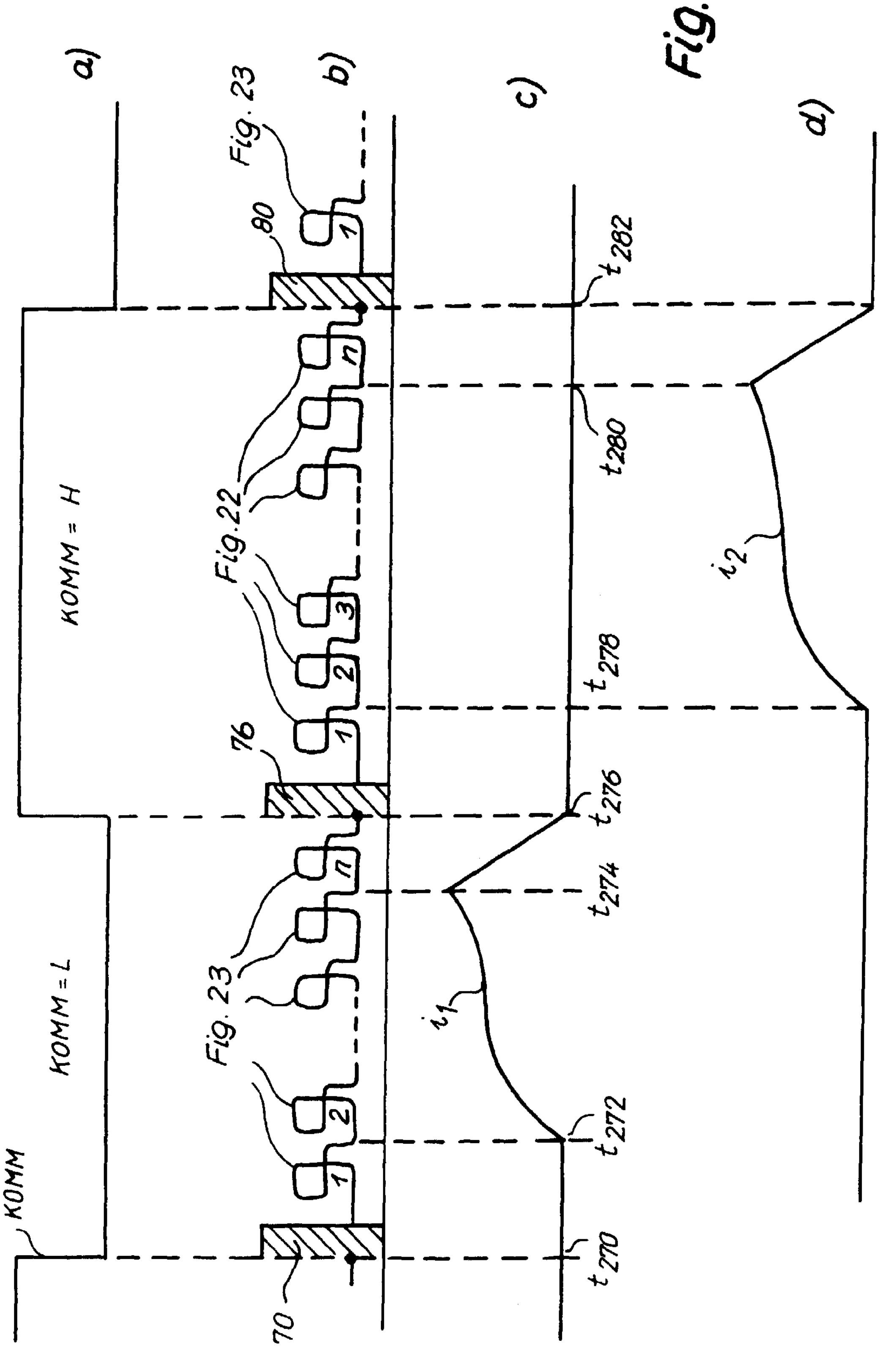
a)
b)
c)
d)
KOMM
KOMM = L
KOMM = H
70
76
80
Fig. 23
Fig. 22
Fig. 23
1
2
3
n
$i_1$
$i_2$
$t_{270}$
$t_{272}$
$t_{274}$
$t_{276}$
$t_{278}$
$t_{280}$
$t_{282}$

Fig. 24

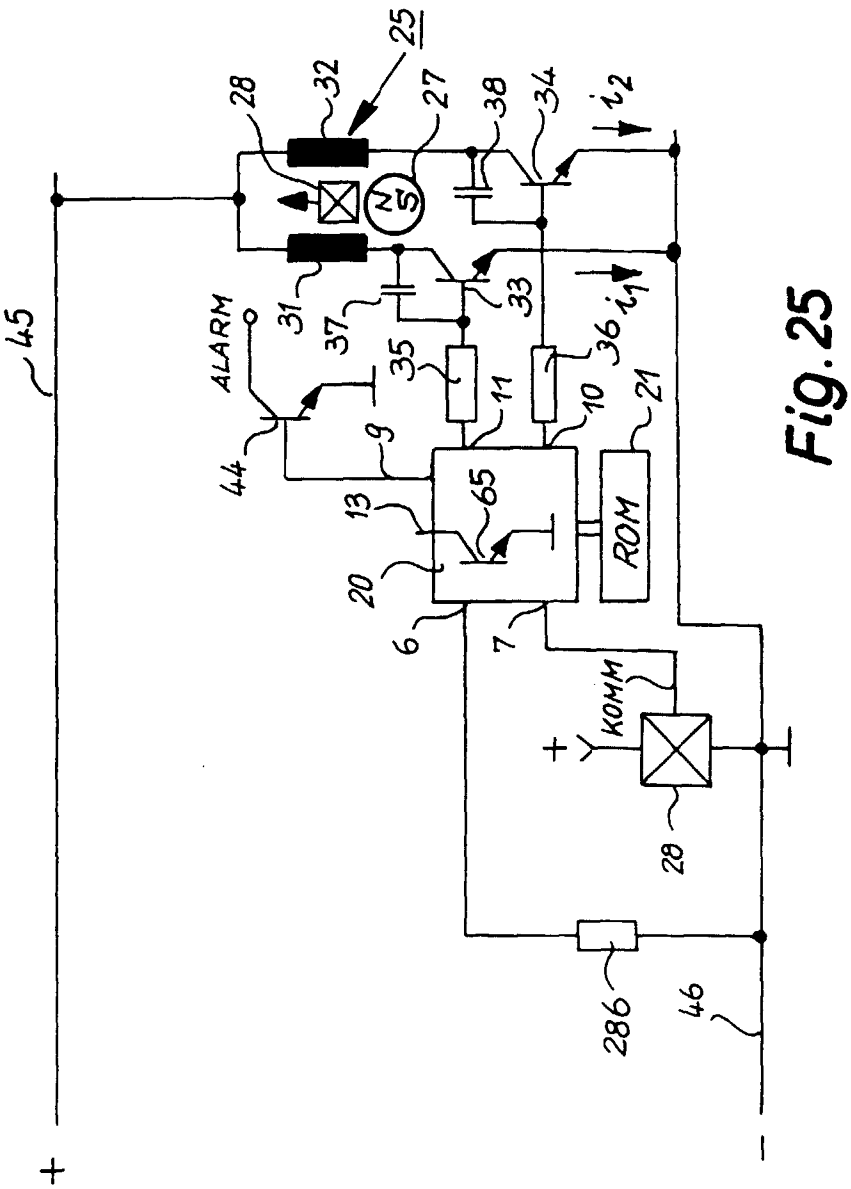
45
+
-
46
286
28
KOMM
+
7
6
20
13
65
ROM
21
9
44
ALARM
10
11
35
36
$i_1$
33
37
31
28
32
25
27
N
S
38
34
$i_2$

Fig. 25